(19) Europäisches Patentamt
European Patent Office
Office européen des brevets

(11) EP 4 333 437 A1

(12) EUROPEAN PATENT APPLICATION
published in accordance with Art. 153(4) EPC

(43) Date of publication:
**06.03.2024 Bulletin 2024/10**

(21) Application number: **22795854.3**

(22) Date of filing: **27.04.2022**

(51) International Patent Classification (IPC):
***H04N 19/85*** *(2014.01)* ***H04N 19/597*** *(2014.01)*

(52) Cooperative Patent Classification (CPC):
**H04N 19/597; H04N 19/85**

(86) International application number:
**PCT/JP2022/019103**

(87) International publication number:
**WO 2022/230941 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2021 JP 2021076320**

(71) Applicant: **Sony Group Corporation**
**Tokyo 108-0075 (JP)**

(72) Inventors:
- **KATO, Tsuyoshi**
**Tokyo 108-0075 (JP)**
- **HAYASHI, Kao**
**Tokyo 108-0075 (JP)**
- **KUMA, Satoru**
**Tokyo 108-0075 (JP)**
- **NAKAGAMI, Ohji**
**Tokyo 108-0075 (JP)**

(74) Representative: **D Young & Co LLP**
**120 Holborn**
**London EC1N 2DY (GB)**

# (54) INFORMATION PROCESSING DEVICE AND INFORMATION PROCESSING METHOD

(57) The present disclosure relates to an information processing apparatus and method capable of suppressing a reduction in quality of attribute information of 3D data.

The present disclosure generates a geometry image and an occupancy image by arranging a plurality of vertices on a two-dimensional plane so as to correspond to a UV map on the basis of position information of the plurality of vertices of a polygon and the UV map indicating a correspondence relationship between the plurality of vertices and a texture of the polygon, and encodes the UV map, connection information indicating a connection relationship between the plurality of vertices, the geometry image, the occupancy image, and the texture of the polygon. The present disclosure may be applied to, for example, an information processing apparatus, an electronic device, an information processing method, a program or the like.

FIG. 6

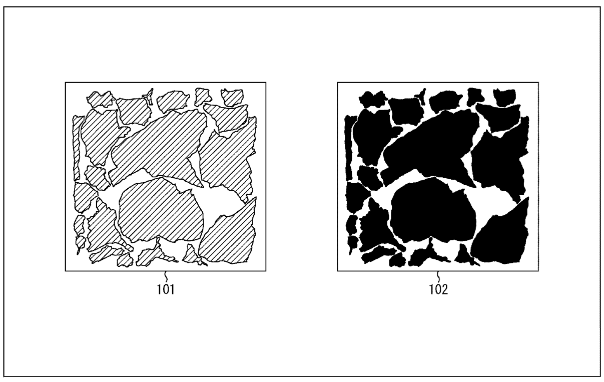

## Description

TECHNICAL FIELD

The present disclosure relates to an information processing apparatus and method, and more particularly, to an information processing apparatus and method capable of suppressing a reduction in quality of attribute information of 3D data.

BACKGROUND ART

Conventionally, mesh has been used as 3D data representing an object having a three-dimensional shape. As a mesh compression method, a method of compressing a mesh by extending video-based point cloud compression (VPCC) has been proposed (see, for example, Non-Patent Document 1).

In the VPCC, the coordinates of each point are projected onto any of six surfaces of a bounding box to generate a geometry image, and the geometry image is 2D encoded. The attribute information corresponding to each point is mapped to the same position as the geometry image and 2D encoded as an attribute image.

Meanwhile, in the mesh, attribute information having an arbitrary resolution and an arbitrary shape can be stored on the texture image for each polygon.

CITATION LIST

NON-PATENT DOCUMENT

Non-Patent Document 1: Danillo Graziosi, Alexandre Zaghetto, Ali Tabatabai, "[VPCC] [EE2.6-related] Mesh Patch Data", ISO/IEC JTC 1/SC 29/WG 7 m 55368, October 2020

SUMMARY OF THE INVENTION

PROBLEMS TO BE SOLVED BY THE INVENTION

However, when the VPCC is extended and such a mesh is encoded as described above, the attribute information on the texture image is rearranged on the attribute image according to the geometry image, and the quality of the attribute information may be reduced.

The present disclosure has been made in view of such a situation, and an object thereof is to suppress a decrease in quality of attribute information of 3D data.

SOLUTIONS TO PROBLEMS

An information processing apparatus according to one aspect of the present technology is an information processing apparatus including: an image generation unit that generates a geometry image and an occupancy image by arranging a plurality of vertices on a two-dimensional plane so as to correspond to a UV map on the basis of position information of the plurality of vertices of a polygon and the UV map indicating a correspondence relationship between the plurality of vertices and a texture of the polygon; and an encoding unit that encodes the UV map, connection information indicating a connection relationship between the plurality of vertices, the geometry image, the occupancy image, and the texture of the polygon.

An information processing method according to one aspect of the present technology is an information processing method including: generating a geometry image and an occupancy image by arranging a plurality of vertices on a two-dimensional plane so as to correspond to a UV map on the basis of position information of the plurality of vertices of a polygon and the UV map indicating a correspondence relationship between the plurality of vertices and a texture of the polygon; and encoding the UV map, connection information indicating a connection relationship between the plurality of vertices, the geometry image, the occupancy image, and the texture of the polygon.

An information processing apparatus according to another aspect of the present technology is an information processing apparatus including: a decoding unit that decodes encoded data and generates a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane; and a reconstruction unit that reconstructs position information of the plurality of vertices in a three-dimensional space on the basis of the UV map, the geometry image, and the occupancy image.

An information processing method according to another aspect of the present technology is an information processing method including: decoding encoded data and generating a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane; and reconstructing position information of the plurality of vertices in a three-dimensional space on the basis of the UV map, the geometry image, and the occupancy image.

In an information processing apparatus and a method according to one aspect of the present technology, a geometry image and an occupancy image are generated by arranging a plurality of vertices on a two-dimensional plane so as to correspond to a UV map on the basis of position information of the plurality of vertices of a polygon and the UV map indicating correspondence relationship between the plurality of vertices and a texture of the polygon, and the UV map, connection information indicating a connection relationship between the plurality of vertices, the geometry image, the occupancy image, and the texture of the polygon are encoded.

In an information processing apparatus and a method according to another aspect of the present technology, encoded data is decoded, a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane are generated, and position information of the plurality of vertices in a three-dimensional space is reconstructed on the basis of the UV map, the geometry image, and the occupancy image.

## BRIEF DESCRIPTION OF DRAWINGS

Fig. 1 is a diagram for explaining a video-based approach.
Fig. 2 is a diagram for explaining a mesh.
Fig. 3 is a diagram for explaining generation of a geometry image and an attribute image.
Fig. 4 is a diagram for explaining shape distortion due to projection.
Fig. 5 is a diagram for explaining a mesh encoding method.
Fig. 6 is a diagram for explaining an example of a geometry image corresponding to a texture image.
Fig. 7 is a diagram for explaining an example of a patch.
Fig. 8 is a diagram for explaining an example of projection plane setting.
Fig. 9 is a diagram for explaining an example of a correspondence relationship between a projection plane and a geometry image.
Fig. 10 is a diagram for explaining an example of a correspondence relationship between a projection plane and a geometry image.
Fig. 11 is a diagram for explaining an example of conversion information.
Fig. 12 is a diagram for explaining an example of a state of reconstruction.
Fig. 13 is a diagram for explaining an example of a state of reconstruction.
Fig. 14 is a diagram for explaining an example of a state of reconstruction.
Fig. 15 is a diagram for explaining an example of conversion information.
Fig. 16 is a diagram for explaining an example of conversion information.
Fig. 17 is a diagram for explaining an example of conversion information.
Fig. 18 is a block diagram illustrating a main configuration example of an encoding device.
Fig. 19 is a block diagram illustrating a main configuration example of a patch generation unit.
Fig. 20 is a flowchart for explaining an example of a flow of an encoding process.
Fig. 21 is a block diagram illustrating a main configuration example of a decoding device.
Fig. 22 is a flowchart for explaining an example of a flow of a decoding process.
Fig. 23 is a diagram illustrating an example of vertex position information.
Fig. 24 is a diagram illustrating an example of a geometry image.
Fig. 25 is a diagram illustrating an example of a geometry image.
Fig. 26 is a block diagram illustrating a main configuration example of a patch generation unit.
Fig. 27 is a flowchart for explaining an example of a flow of an encoding process.
Fig. 28 is a block diagram illustrating a main configuration example of a decoding device.
Fig. 29 is a flowchart for explaining an example of a flow of a decoding process.
Fig. 30 is a diagram illustrating an example of storing position information of overlapping points.
Fig. 31 is a diagram illustrating an example of decoding position information of overlapping points.
Fig. 32 is a diagram illustrating an example of patch division.
Fig. 33 is a diagram for explaining encoding of a geometry image.
Fig. 34 is a block diagram illustrating a main configuration example of an encoding device.
Fig. 35 is a flowchart for explaining an example of a flow of an encoding process.
Fig. 36 is a block diagram illustrating a main configuration example of a computer.

## MODE FOR CARRYING OUT THE INVENTION

Modes for carrying out the present disclosure (hereinafter, referred to as embodiments) are hereinafter described. Note that description will be given in the following order.

1. Mesh Encoding
2. Geometry Image According to Texture Image
3. First Embodiment (Encoding Device)
4. Second Embodiment (Decoding Device)
5. Application Example
6. Appendix

<1. Mesh Encoding>

<Documents Supporting Technical Contents and Technical Terms and the Like>

The scope disclosed in the present technology includes, in addition to the contents described in the embodiments, contents described in the following Non-Patent Documents and the like known at the time of filing, contents of other documents referred to in the following Non-Patent Documents, and the like.

Non-Patent Document 1: (described above)

Non-Patent Document 2: "Information technology - Coded Representation of Immersive Media - Part 5: Video-based Point Cloud Compression", ISO/IEC 23090-5:2019(E), ISO/IEC JTC 1/SC 29/WG 11 N18888

Non-Patent Document 3: Tim Golla and Reinhard Klein, "Real-time Point Cloud Compression," IEEE, 2015

Non-Patent Document 4: K. Mammou, "Video-based and Hierarchical Approaches Point Cloud Compression", MPEG m41649, Oct. 2017

Non-Patent Document 5: K. Mammou, "PCC Test Model Category 2 v0," N17248 MPEG output document, October 2017

That is, the contents described in the above-described Non-Patent Documents, the contents of other documents referred to in the above-described Non-Patent Documents, and the like are also basis for determining the support requirement.

<Point Cloud>

Conventionally, there has been 3D data such as a point cloud representing a three-dimensional structure with point position information, attribute information, and the like.

For example, in a case of a point cloud, a three-dimensional structure (three-dimensional shaped object) is expressed as a set of a large number of points. The point cloud includes position information (also referred to as geometry) and attribute information (also referred to as attribute) of each point. The attribute can include any information. For example, color information, reflectance information, normal line information, and the like of each point may be included in the attribute. As described above, the point cloud has a relatively simple data structure, and can express any three-dimensional structure with sufficient accuracy by using a sufficiently large number of points.

<VPCC>

Video-based point cloud compression (VPCC) is one of such point cloud encoding techniques, and encodes point cloud data, which is 3D data representing a three-dimensional structure, using a codec for two-dimensional images.

In the VPCC, the geometry and attribute of a point cloud are each decomposed into small regions (also referred to as patches), and each patch is projected onto a projection plane that is a two-dimensional plane. For example, the geometry and the attribute are projected onto any of the six surfaces of the bounding box containing the object. The geometry and the attribute projected on the projection plane are also referred to as projection images. The patch projected on the projection plane is also referred to as a patch image.

For example, the geometry of a point cloud 1 illustrating an object of a three-dimensional structure illustrated in A of Fig. 1 is decomposed into patches 2 as illustrated in B of Fig. 1, and each patch is projected onto a projection plane. That is, a patch image (projection image for each patch) of geometry is generated. Each pixel value of the patch image of the geometry indicates a distance (depth value) from the projection plane to the point.

The attribute of the point cloud 1 is also decomposed into patches 2 similarly to the geometry, and each patch is projected onto the same projection plane as the geometry. That is, a patch image of the attribute having the same size and the same shape as the patch image of the geometry is generated. Each pixel value of the patch image of the attribute indicates an attribute (color, normal vector, reflectance, and the like) of a point at the same position of the patch image of the corresponding geometry.

Then, each patch image thus generated is arranged in a frame image (also referred to as a video frame) of the video sequence. That is, each patch image on the projection plane is arranged on a predetermined two-dimensional plane.

For example, a frame image in which a patch image of geometry is arranged is also referred to as a geometry video frame. Furthermore, this geometry video frame is also referred to as a geometry image, a geometry map, or the like. A geometry image 11 illustrated in C of Fig. 1 is a frame image (geometry video frame) in which a patch image 3 of geometry is arranged. The patch image 3 corresponds to the patch 2 in B of Fig. 1 (the patch 2 of the geometry is projected onto the projection plane).

In addition, the frame image in which the patch image of the attribute is arranged is also referred to as an attribute video frame. The attribute video frame is also referred to as an attribute image or an attribute map. An attribute image 12 illustrated in D of Fig. 1 is a frame image (attribute video frame) in which a patch image 4 of the attribute is arranged. The patch image 4 corresponds to the patch 2 in B of Fig. 1 (the patch 2 of the attribute is projected on the projection plane).

Then, these video frames are encoded by an encoding method for a two-dimensional image, such as, for example, advanced video coding (AVC) or high efficiency video coding (HEVC). That is, point cloud data that is 3D data representing a three-dimensional structure can be encoded by using a codec for two-dimensional images. Generally, an encoder of 2D data is more widespread than an encoder of 3D data, and can be realized at low cost. That is, by applying the video-based approach as described above, an increase in cost can be suppressed.

Note that, in the case of such a video-based approach, an occupancy image (also referred to as an occupancy map) can also be used. The occupancy image is map information indicating the presence or absence of the projection image (patch image) for each NxN pixels of the geometry video frame and the attribute video frame. For example, the occupancy image indicates a region (NxN pixels) in which a patch image exists in a geometry image or an attribute image by a value "1", and a region (NxN pixels) in which a patch image does not exist in the geometry image or the attribute image by a value "0".

Such an occupancy image is encoded as data different from the geometry image and the attribute image and transmitted to the decoding side. Since the decoder can grasp whether or not the region is a region where the patch exists by referring to this occupancy map, it is possible to suppress the influence of noise and the like caused by encoding and decoding, and to reconstruct the point cloud more accurately. For example, even if the depth value changes due to encoding/decoding, the decoder can ignore the depth value of the region where no patch image exists (not process the depth value as the position information of the 3D data) by referring to the occupancy map.

For example, an occupancy image 13 as illustrated in E of Fig. 1 may be generated for the geometry image 11 in C of Fig. 1 or the attribute image 12 in D of Fig. 1. In the occupancy image 13, a white portion indicates the value "1" and a black portion indicates the value "0".

It should be noted that, similarly to the geometry video frame, the attribute video frame, and the like, this occupancy image can also be transmitted as a video frame. That is, similarly to the geometry and the attribute, encoding is performed by an encoding method for a two-dimensional image such as AVC or HEVC.

That is, in the case of the VPCC, the geometry and the attribute of the point cloud are projected onto the same projection plane and are arranged at the same position in the frame image. That is, the geometry and the attribute of each point are associated with each other by the position on the frame image.

<Mesh>

Meanwhile, as 3D data representing an object having a three-dimensional structure, for example, a mesh exists in addition to a point cloud. As illustrated in Fig. 2, the mesh represents a surface of an object in a three-dimensional space by a polygon that is a plane (polygon) surrounded by sides 22 connecting vertices 21. As illustrated in Fig, 2, the 3D data representing the object includes the mesh and a texture 23 attached to each polygon.

For example, as illustrated in the lower part of Fig. 2, the 3D data using the mesh includes vertex information 31 constituted by position information (three-dimensional coordinates (X, Y, Z)) of each vertex 21, connectivity 32 indicating a vertex 21 and a side 22 constituting each polygon, a texture image 33 which is map information of a texture 23 attached to each polygon, and a UV map 34 indicating a position (that is, the position of each vertex 21 in the texture image 33) in the texture image 33 of the texture corresponding to each vertex 21.

In the case of the 3D data using the mesh, unlike the case of the VPCC described above, the correspondence between each vertex 21 and the texture 23 is indicated by the UV map 34. Therefore, as in the example of Fig. 2, the texture image 33 is configured as map information independent of the vertex information 31 configured by the three-dimensional coordinates of each vertex. Therefore, in the texture image 33, the projection direction and resolution of the texture 23 of each polygon can be arbitrarily set.

<Mesh Compression Using VPCC>

As a method of compressing 3D data using such a mesh, for example, a method of compressing 3D data using a mesh by extending the above-described VPCC has been proposed in Non-Patent Document 1 and the like.

However, in the case of this method, similarly to the case of the point cloud described above, the vertex information 31 and the like of the mesh are projected on the projection plane as geometry and then arranged in the geometry image. Then, the texture 23 is projected onto the same projection plane as the geometry as an attribute and then arranged in the attribute image so as to correspond to the geometry of the geometry image. That is, the texture 23 of each polygon is arranged at the same position in the attribute image as the position of the polygon corresponding to the texture 23 in the geometry image.

Therefore, for example, when the shape of a patch 41 of geometry is distorted in a geometry image 42 as illustrated in Fig. 3, the shape of a texture patch 43 is similarly distorted in an attribute image 44.

More specifically, as illustrated in Fig. 4, in the case of 3D data using a mesh, a texture can be projected on a projection plane parallel to a polygon, so that the texture can be projected without distorting its shape. On the other hand, when the mesh is encoded by the VPCC, the texture is projected on the same projection plane as the geometry. Therefore, there is a possibility that the projection plane is not parallel to the polygon, and in this case, there is a possibility that the shape is distorted.

In addition, as described above, since the positions of the geometry image and the attribute image correspond to each other, the texture needs to be the same size as the geometry, and it is difficult to enlarge or rotate the texture and arrange the texture, for example.

Therefore, the quality of the texture (that is, the attribute information) may be reduced.

<2. Geometry Image According to Texture Image>

<Method 1>

Therefore, when the VPCC is extended and 3D data using a mesh is encoded, the texture image is not generated to match the geometry image as in the VPCC of a point cloud, but the geometry image is generated to match the texture image. That is, as illustrated in the top row of the table in Fig. 5, a patch of geometry is generated on the basis of the shape of the texture (Method 1).

For example, in an information processing method, a geometry image and an occupancy image are generated by arranging a plurality of vertices on a two-dimensional plane so as to correspond to a UV map on the basis of position information of the plurality of vertices of a polygon and the UV map indicating a correspondence relationship between the plurality of vertices and a texture of the polygon, and the UV map, connection information indicating a connection relationship between the plurality of vertices, the geometry image, the occupancy image, and the texture of the polygon are encoded.

For example, an information processing apparatus includes: an image generation unit that generates a geometry image and an occupancy image by arranging a plurality of vertices on a two-dimensional plane so as to correspond to a UV map on the basis of position information of the plurality of vertices of a polygon and the UV map indicating a correspondence relationship between the plurality of vertices and a texture of the polygon; and an encoding unit that encodes the UV map, connection information indicating a connection relationship between the plurality of vertices, the geometry image, the occupancy image, and the texture of the polygon.

For example, it is assumed that a texture image 101 illustrated in Fig. 6 is information constituting 3D data using a mesh, and is a two-dimensional plane in which a texture (hatched portion in the drawing) is arranged. When the VPCC is extended to encode 3D data including a mesh and such a texture image 101, the encoder generates a geometry image 102 by arranging geometry (black portion in the drawing) obtained from the mesh. At this time, the encoder arranges each polygon of the geometry in the geometry image 102 in accordance with the position, size, and shape of each polygon of the texture in the texture image 101. That is, the geometry image 102 is generated such that the texture and the geometry at the same position in the three-dimensional space are arranged at the same position in the texture image 101 and the geometry image 102.

By doing so, the texture can be encoded as the texture image (without being converted into the attribute image). That is, the texture can be encoded without distorting its shape. In addition, since it is not necessary to arrange the texture according to the geometry, for example, the texture can be enlarged or rotated to be arranged in the texture image. Therefore, it is possible to suppress a reduction in the quality of the texture (that is, the attribute information) of the 3D data.

For example, in an information processing method, encoded data is decoded to generate a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane, and position information of the plurality of vertices in a three-dimensional space is reconstructed on the basis of the UV map, the geometry image, and the occupancy image.

For example, an information processing apparatus includes: a decoding unit that decodes encoded data and generates a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane; and a reconstruction unit that reconstructs position information of the plurality of vertices in a three-dimensional space on the basis of the UV map, the geometry image, and the occupancy image.

For example, the encoded data is decoded to generate (restore) the texture image 101 and the geometry image 102 generated such that the texture (hatched portion in the drawing) of the texture image 101 and the geometry (black portion in the drawing) of the geometry image 102 are located at the same position and have the same shape as each other as illustrated in Fig. 6.

In this way, the encoded texture image can be decoded. That is, the texture projected on the projection plane can be decoded without distorting the shape. In addition, it is possible to enlarge or rotate the projection image to decode the texture arranged in the texture image. Therefore, it is possible to suppress a reduction in the quality of the texture (that is, the attribute information) of the 3D data.

Note that the texture is arranged in the texture image without depending on the geometry. That is, in the texture image, the texture is arranged by a grid of texture (also referred to as a texel grid). Therefore, this texture image is also referred to as a texel grid image.

As described above, when the geometry image is generated in accordance with the texture image, the geometry image is also the image of the texel grid. That is, in the geometry image in this case, the geometry is arranged in a texel grid. Note that, in the case of the VPCC of the point cloud, in the geometry image, the geometry is arranged by a grid of geometry (also referred to as a voxel grid). As described above, by applying the present technology, a geometry image different from that in the case of the VPCC of the point cloud is generated.

<Method 1-1>

In the case of generating the geometry image as described above, each vertex of the mesh is divided into patches and projected for each patch. In the case of generating such a patch, as illustrated in the second row from the top of the table in Fig. 5, a patch may be generated by dividing a small region of the texture (Method 1-1). As illustrated in Fig, 6, in the texture image 101, the texture is arranged for each predetermined small region (cluster). This texture cluster is basically constituted by a texture of continuous polygons. Therefore, this small region (continuous region of texture) may be a single patch or a plurality of patches. That is, the entire small region of the texture may be formed as one patch, or a plurality of patches may be formed by dividing the small region of the texture. By doing so, the patch can be set more easily. Note that, when a patch is generated from the small region of the texture in this manner, enlargement, reduction, rotation, movement, and the like of the small region may be performed in addition to the division of the small region.

Then, information indicating how the patch is generated may be transmitted from the encoding side to the decoding side. For example, information indicating how the patch is generated may be stored in the encoded data of the 3D data. By doing so, even if the encoding side generates the patch by various methods, the decoding side can correctly grasp the method.

<Method 1-2>

As described above, when a single patch or a plurality of patches are set in the small region of the texture, as illustrated in the third row from the top of the table in Fig. 5, the projection plane (projection direction) may be set on the basis of the vertices included in the patch (Method 1-2). A method of setting the projection plane (projection direction) based on the vertex is arbitrary. For example, a region constituted by a region (a polygon formed between vertexes) formed by continuous vertexes (mutually adjacent) in the small region may be set as a patch. In other words, a region constituted by continuous (mutually adjacent) polygons in the small region may be a patch. Then, a projection plane (projection direction) may be set for each patch.

For example, a small region 110 of the texture illustrated in Fig. 7 may be divided into two with a side connecting vertexes near the center as indicated by a thick line as a boundary to generate a patch 111 and a patch 112. Similarly, in Fig. 7, a small region 120 of the geometry corresponding to the small region 110 may be divided into two with a side connecting vertexes near the center as indicated by a thick line as a boundary to generate a patch 121 and a patch 122. By doing so, the small region can be more easily divided into a plurality of patches.

<Method 1-2-1>

When the projection plane (projection direction) is set, the projection plane (projection direction) may be set on the basis of the normal vector of the polygon as illustrated in the fourth row from the top of the table in Fig. 5 (Method 1-2-1). A method of setting the projection plane (projection direction) based on the normal vector of the polygon is arbitrary. For example, the direction of the normal vector of each polygon in the small region may be confirmed, and the optimum projection plane (projection direction) may be set on the basis of the direction. By setting the projection plane (projection direction) on the basis of the normal vector of the polygon, for example, distortion of the shape due to projection can be suppressed. For example, a plane perpendicular to the normal vector, that is, a plane parallel to the polygon may be used as the projection plane. By bringing the projection plane close to parallel to the polygon (bringing the projection direction close to the direction of the normal vector), distortion of the shape due to projection can be suppressed.

<Method 1-2-1-1>

As illustrated in the fifth row from the top of the table in Fig. 5, the projection plane (projection direction) may be set on the basis of the normal vector of the polygon average (Method 1-2-1-1). A method of setting the projection plane (projection direction) based on the normal vector of the polygon average is arbitrary. For example, the average of the normal vectors of all the polygons in the patch may be derived, and the direction may be set as the projection direction. This processing is performed for each patch. For example, as illustrated in Fig. 8, an average of normal vectors 131 of polygons in the patch 122 is obtained, and a projection plane 133 having an average vector 132 as a normal vector is set as a projection plane for the patch 122. Similarly, an average of normal vectors 134 of polygons in the patch 121 is obtained, and a projection plane 136 having an average vector 135 as a normal vector is set as a projection plane for the patch 121. By doing so, the projection plane can be set such that distortion due to projection is reduced in the entire patch.

Note that, in deriving the average of such normal vectors, patch division may be performed if necessary. For example, the variance of the normal vector may also be derived, and patch division may be performed such that the variance is smaller than a predetermined threshold.

<Method 1-2-1-2>

Note that, instead of referring to the normal vectors of all the polygons in the patch, the projection plane (projection direction) may be set on the basis of the normal vector of the representative polygon as illustrated in the sixth row from the top of the table in Fig. 5 (Method 1-2-1-2). That is, the projection plane (projection direction) may be derived on the basis of the normal vectors of some polygons in the patch. A method of deriving the projection plane (projection direction) based on the normal vector in this case is arbitrary. For example, one predetermined polygon such as the central polygon of the patch may be set as the representative polygon, and the projection plane may be set on the basis of the normal vector of the representative polygon. For example, a plurality of predetermined polygons such as a plurality of polygons around the patch may be set as the representative polygon, and the projection plane may be set on the basis of the statistical value (for example, average) of the normal vector of the representative polygon.

<Method 1-2-2>

As illustrated in the seventh row from the top of the table in Fig. 5, the projection plane may be set on the basis of the bounding box (Method 1-2-2). That is, similarly to the case of the VPCC of the point cloud, any one of the six surfaces of the bounding box, which is a three-dimensional region including the object in the three-dimensional space, may be used as the projection plane.

<Method 1-2-2-1>

For example, as illustrated in the eighth row from the top of the table in Fig. 5, the direction of the shortest side may be used as the normal vector of the projection plane (Method 1-2-2-1).

<Method 1-2-2-2>

Furthermore, as illustrated in the ninth row from the top of the table in Fig. 5, a mean square error (MSE) of the depth value to each surface of the bounding box may be calculated, and the surface with the smallest error may be used as the projection plane (Method 1-2-2-2) .

<Method 1-3>

As illustrated in the tenth row from the top of the table in Fig. 5, the depth value may be stored at the vertex position of the geometry image of the texel grid (Method 1-3). As described above, the geometry image is a texel grid. Then, the mesh has position information of each vertex as geometry. Therefore, the geometry of each vertex is arranged in the geometry image. That is, the geometry of each vertex is arranged at the same place as the place in the geometry image where the texture corresponding to each vertex is arranged in the texture image.

In this case, a patch image of the geometry is arranged in the geometry image. The patch image is a patch projected on the projection planar set as described above. The upper side of Fig. 9 illustrates a state in which the patch is projected on the projection plane. The patch is projected perpendicular to the projection plane. Therefore, the pixel value of the patch image of this geometry indicates the distance (that is, the depth value) from the position of the pixel value in the three-dimensional space to the patch in the normal direction. That is, the pixel value at the position where the vertex of the patch image is projected indicates the distance (depth value) from the projection plane to the vertex in the three-dimensional space.

Since such a patch image is arranged in the geometry image as described above, the distance (depth value) from the projection plane to the vertex in the three-dimensional space is stored in the pixel value at the place where each vertex of the geometry image is arranged. For example, the distance (depth value) from the projection plane to the vertex in the three-dimensional space may be stored as the luminance component of the pixel value at the place where each vertex of the geometry image is arranged.

<Method 1-3-1>

As illustrated in the eleventh row from the top of the table in Fig. 5, the depth value or the like complemented from the adjacent vertex may be stored in addition to the vertex position in the patch (Method 1-3-1). The geometry image may be configured by only the geometry stored at the position of each vertex, but in that case, when the geometry and the texture are shifted by even one pixel for some reason, it may be difficult to associate the geometry with the texture originally corresponding to the vertex. Therefore, the depth values may be stored in positions other than the positions corresponding to the vertices of the geometry image (for example, peripheral pixels at the positions corresponding to the vertices). For example, as described above, the depth value or the like complemented from the adjacent vertex may be stored in addition to the vertex position in the patch. Of course, other methods may be used. By doing so, robustness against deviation from the texture of the geometry image can be improved.

<Method 1-3-2>

As illustrated in the twelfth row from the top of the table in Fig. 5, conversion information for restoring the depth value to the voxel grid may be stored (Method 1-3-2). For example, as illustrated in Fig. 9, a projection plane on which a patch of geometry of a voxel grid is projected is a voxel grid. When this patch image (patch on the projection plane) is arranged (stored) in the geometry image of the texel grid, the shape of the patch changes.

In the case of decoding, as illustrated in Fig. 10, a patch image (patch on the projection plane) is restored from the geometry image, and each vertex in the three-dimensional space is reconstructed on the basis of each depth value of the patch image. As described above, the conversion from the texel grid to the voxel grid needs to be performed (as inverse conversion) similarly to the conversion from the voxel grid to the texel grid in Fig. 9. That is, not only the above-described depth value but also information (also referred to as conversion information) regarding the conversion as additional information may be transmitted from the encoding side to the decoding side. For example, the encoder may encode the conversion information and store the encoded data in a bitstream including the encoded data of the geometry image or the texture image.

By transmitting the conversion information in this manner, the decoder can correctly perform conversion from the texel grid to the voxel grid (as inverse conversion of conversion from the voxel grid to the texel grid).

<Method 1-3-2-1>

As illustrated in the thirteenth row from the top of the table in Fig. 5, an offset value (dx, dy) may be stored as the conversion information (Method 1-3-2-1). For example, as illustrated in A of Fig. 11, as the conversion information for converting the coordinates of a vertex 151 from the geometry image of the texel grid to the geometry image of the voxel grid, as illustrated in B of Fig. 11, a difference between the coordinates of the point 151 in both images (offset value (dx, dy)) may be transmitted as the conversion information. For example, when the coordinates of the vertex 151 in the geometry image of the texel grid are (x1, y1) and the coordinates of the vertex 151 in the geometry image of the voxel grid are (x2, y2), the offset value (dx, dy) = (x2-x1, y2-y1) is obtained. The offset value (dx, dy) may be stored in a bitstream including the encoded data of the geometry image and the encoded data of the texture image.

As described above, by transmitting the offset value (dx, dy), the decoder can more easily perform coordinate conversion.

<Reconstruction of Vertex>

In this case, the reconstruction of the vertex in the three-dimensional space is performed as follows. First, as illustrated in Fig. 12, coordinates in the geometry image of the texel grid of the vertex to be processed are converted into coordinates in the geometry image (geometry image') of the voxel grid using the offset value (dx, dy). This geometry image' corresponds to the projection plane of the patch.

Next, as illustrated in Fig. 13, vertices are reconstructed at a three-dimensional space position based on the geometry image' by using the depth value d. As a result, the relative position between the geometry image' and each vertex in the three-dimensional space is determined.

Next, as illustrated in Fig. 14, the position and posture of the projection plane (that is, the geometry image') in three-dimensional space are set. That is, the coordinate system of each vertex is converted from a local coordinate system based on the geometry image' to a global coordinate system.

In this manner, each vertex can be reconstructed into a three-dimensional space using the conversion information (offset value) and the depth value.

<Method 1-3-2-2>

The specification of the conversion information is arbitrary, and is not limited to the above-described offset value. For example, as illustrated in the fourteenth row from the top of the table in Fig. 5, a difference value from the offset value (dx, dy) of another vertex may be stored as the conversion information (Method 1-3-2-2). For example, the processing order of each vertex may be set in a uniquely determined order (one-dimensionally aligned), a difference value between the offset value (dx, dy) of the vertex to be processed and the offset value (dx, dy) of the previous vertex in the processing order may be derived, and the difference value may be used as the conversion information of the vertex to be processed. This processing order is arbitrary. For example, the order may be triangle fans (TFAN), pixel order, or other order.

Furthermore, for example, as illustrated in Fig. 15, adjacent vertices in the X-axis direction may be processed in series, a difference value between the offset value (dx, dy) of the vertex to be processed and the offset value (dx, dy) of the previous vertex in the processing order may be derived, and the difference value may be used as the conversion information of the vertex to be processed. Of course, vertices adjacent in the Y-axis direction may be processed in series.

<Method 1-3-2-3>

Furthermore, as illustrated in the fifteenth row from the top of the table in Fig. 5, a scale value (sx, sy) for each patch may be applied as the conversion information (Method 1-3-2-3). That is, the offset value (dx, dy) may be controlled by setting the scale value for each patch. For example, when the offset value before scaling using the scale value (sx, sy) is (dx, dy) and the offset value after scaling is (dx' dy'), the offset value after scaling (dx' dy') can be derived as the following formula.

$$dx' = dx * sx$$

$$dy' = dy * sy$$

By applying the scaling value in this manner, the value of the offset value (dx, dy) can be reduced. Therefore, it is possible to suppress a decrease in encoding efficiency caused by storing the offset value (dx, dy).

<Method 1-3-2-4>

A storage location of the conversion information is arbitrary. For example, as illustrated in the sixteenth row from the top of the table in Fig. 5, the conversion information may be stored in the color component (chroma) of the geometry image (Method 1-3-2-4). For example, the depth value d from the projection plane of the vertex may be stored as the luminance component at the position of each vertex of the geometry image, and the conversion information of the vertex may be stored as the color component. The component type of the geometry image is arbitrary, and may be YUV 444, YUV 422, or YUV 420. For example, in the case of the YUV 444, dx of the offset value (dx, dy) may be stored in the Cr component, and dy may be stored in the Cb component. By doing so, the decoder can acquire the offset value by a general-purpose 2D decoder. This can suppress an increase in cost.

<Method 1-3-2-5>

Furthermore, as illustrated in the seventeenth row from the top of the table in Fig. 5, the conversion information may be stored in the bitstream as information different from the geometry image (Method 1-3-2-5). For example, the offset value (dx, dy) described above may not be stored in the geometry image, and may be stored in a bitstream including encoded data of the geometry image or the texture image as one-dimensional sequential data that is data different from the geometry image.

Furthermore, at that time, similarly to the method described above in <Method 1-3-2-2>, a difference value of offset values between adjacent vertices may be derived, and the difference value may be stored as conversion information in a bitstream including encoded data of the geometry image or the texture image.

For example, as in a table illustrated in A of Fig. 16, vertices on a texture image may be aligned in raster scan order, a difference value of offset values may be derived between adjacent vertices in the order, and the difference value of the offset values may be encoded as data different from the geometry image and stored in a bitstream.

For example, in B of Fig. 16, each difference value derived as in A of Fig. 16 is encoded by, for example, arithmetic encoding or the like, and the encoded data (x-component encoded data 231 and y-component encoded data 232) is stored in a bitstream 230.

<Method 1-4>

Specifications of the depth value and the conversion information to be transmitted are arbitrary. For example, as illustrated in the eighteenth row from the top of the table in Fig. 5, the angle θ and (dx, dy) from the adjacent polygons may be stored instead of the depth value and the conversion information (Method 1-4). For example, as illustrated in Fig, 17, in a polygon 242 obtained by virtually forming a polygon 243 on the same plane as an adjacent polygon 241 and rotating the virtual polygon 242 by the angle θ, a vertex corresponding to a vertex x3 of the polygon 242 is set as x3" . The angle θ and the offset value (dx, dy) from the vertex x3'' may be transmitted to the decoding side.

<Method 1-5>

As illustrated in the bottom row of the table of Fig. 5, switching to another patch mode may be enabled (Method 1-5). For example, similarly to the case of the conventional VPCC of a point cloud, a method of projecting a texture on six surfaces of a bounding box and arranging the projection image in an attribute image of a voxel grid and a method to which the above-described present technology is applied may be appropriately switched and used. In addition, methods other than these may be included in the candidates.

<Combination>

The various methods described above can be appropriately combined with other methods and applied.

<3. First Embodiment>

<Encoding Device>

Fig. 18 is a block diagram illustrating an example of a configuration of an encoding device which is an embodiment of an image processing device to which the present technology is applied. An encoding device 300 illustrated in Fig. 18 is a device that extends the VPCC and encodes 3D data using a mesh as a video frame by an encoding method for two-dimensional images. At that time, the encoding device 300 performs encoding by applying a single method or a combination of a plurality of methods among the various methods of the present technology described above in <2. Geometry Image According to Texture Image> (including <Method 1> to <Combination>) .

Note that while Fig. 18 illustrates main elements such as processing units and data flows, those illustrated in Fig. 18 do not necessarily include all elements. That is, in the encoding device 300, there may be a processing unit not illustrated as a block in Fig. 18, or there may be processing or a data flow not illustrated as an arrow or the like in Fig. 18.

As illustrated in Fig. 18, the encoding device 300 includes a mesh voxelization unit 311, a patch generation unit 312, a geometry image generation unit 313, an occupancy image generation unit 314, a meta information encoding unit 315, a 2D encoding unit 316, a 2D encoding unit 317, a 2D encoding unit 318, and a multiplexing unit 319. The geometry image generation unit 313 and the occupancy image generation unit 314 may be regarded as an image generation unit 321 in the present disclosure. Further, the meta information encoding unit 315, the 2D encoding unit 316, the 2D encoding unit 317, and the 2D encoding unit 318 may be regarded as an encoding unit 322 in the present disclosure.

Connectivity 331, vertex information 332, a UV map 333, and a texture 334 are supplied to the encoding device 300 as 3D data using the mesh.

The connectivity 331 is information similar to the connectivity 32 (Fig. 2), and indicates each vertex (each vertex connected to each other) forming a polygon for each polygon. The vertex information 332 is information similar to the vertex information 31 (Fig. 2) and indicates coordinates of each vertex forming the mesh. The UV map 333 is information similar to the UV map 34 (Fig. 2) and indicates the position of each vertex on the texture image. The texture 334 is information similar to the texture image 33 (Fig. 2), and indicates the texture to be pasted on the polygon. That is, the texture 334 is information including a texture image.

The mesh voxelization unit 311 acquires the vertex information 332 supplied to the encoding device 300. The mesh voxelization unit 311 converts coordinates of each vertex included in the acquired vertex information 332 into a voxel grid. The mesh voxelization unit 311 supplies the vertex information 332 of the voxel grid after the conversion to the patch generation unit 312.

The patch generation unit 312 acquires the connectivity 331 and the UV map 333 supplied to the encoding device 300. In addition, the patch generation unit 312 acquires vertex information 332 of the voxel grid supplied from the mesh voxelization unit 311. The patch generation unit 312 generates a patch of geometry on the basis of the information. In addition, the patch generation unit 312 projects a patch of the generated geometry onto the projection plane to generate a patch image. Further, the patch generation unit 312 generates conversion information for converting the coordinates of the vertices from the texel grid to the voxel grid.

The patch generation unit 312 supplies the connectivity 331 and the UV map 333 to the meta information encoding unit 315 as meta information. Furthermore, the patch generation unit 312 supplies the generated patch image and conversion information, and the UV map 333 to the geometry image generation unit 313. Further, the patch generation unit 312 supplies the generated patch image and the UV map 333 to the occupancy image generation unit 314.

The image generation unit 321 performs processing related to generation of an image (frame image). As described above in <Method 1>, the image generation unit 321 generates the geometry image and the occupancy image by arranging the plurality of vertices on the two-dimensional plane so as to correspond to the UV map on the basis of the position information of the plurality of vertices of the polygon and the UV map indicating the correspondence relationship between the plurality of vertices and the texture of the polygon. That is, the geometry image generation unit 313 generates the geometry image by arranging the plurality of vertices on the two-dimensional plane so as to correspond to the UV map on the basis of the position information of the plurality of vertices of the polygon and the UV map indicating the correspondence relationship between the plurality of vertices and the texture of the polygon. The occupancy image generation unit 314 similarly generates an occupancy image.

For example, the geometry image generation unit 313 acquires the patch image, the conversion information, and the UV map 333 supplied from the patch generation unit 312. The geometry image generation unit 313 generates a geometry image of the texel grid by arranging (the vertices included in) the patch images on the two-dimensional plane of the texel grid so as to correspond to the UV map 333. For example, as described above in <Method 1-3>, the geometry image generation unit 313 may arrange and store the depth value of each vertex included in the patch image at the same position in the geometry image of the texel grid as the texture corresponding to the vertex in the texture image on the basis of the acquired UV map 333. For example, the geometry image generation unit 313 may store the depth value of each vertex included in the patch image in the geometry image as a luminance component of the pixel. Furthermore, as described above in <Method 1-3-1>, the geometry image generation unit 313 may store the depth value or the like complemented from the adjacent vertex in the luminance component of the position (pixel) other than the vertex position in the patch of the geometry image.

Furthermore, as described above in <Method 1-3-2>, the geometry image generation unit 313 may store the conversion information in this geometry image. A storage location of the conversion information is arbitrary. For example, as described above in <Method 1-3-2-4>, the geometry image generation unit 313 may store the conversion information corresponding to each vertex as the color component (chrominance component) of the position (pixel) of the vertex indicated by the UV map 333 of the geometry image. In other words, the geometry image generation unit 313 generates the geometry image by arranging the depth value of the patch image in the luminance component at the position of each vertex indicated by the UV map 333 and arranging the conversion information in the color component (chrominance component). The geometry image generation unit 313 supplies the generated geometry image to the 2D encoding unit 316. Note that, as described above in <Method 1-3-2-5>, the conversion information may be encoded as information different from the geometry image. That is, the geometry image generation unit 313 may not store the conversion information in the geometry image. Furthermore, as described above in <Method 1-4>, the geometry image generation unit 313 may store the angle θ and (dx, dy) from the adjacent polygons in the geometry image instead of the depth value and the conversion information.

The occupancy image generation unit 314 acquires the patch image and the UV map 333 supplied from the patch generation unit 312. On the basis of the acquired UV map 333 and patch image, the occupancy image generation unit 314 generates an occupancy image corresponding to the geometry image generated by the geometry image generation unit 313. The occupancy image generation unit 314 supplies the generated occupancy image to the 2D encoding unit 317.

The encoding unit 322 performs processing related to encoding. For example, the encoding unit 322 encodes the UV map 333, the connectivity 331, the geometry image, the occupancy image, and the texture 334. The meta information encoding unit 315 acquires the meta information (including the connectivity 331 and the UV map 333) supplied from the patch generation unit 312. The meta information encoding unit 315 encodes the acquired meta information to generate encoded data of the meta information. The meta information encoding unit 315 supplies the encoded data of the generated meta information to the multiplexing unit 319.

The 2D encoding unit 316 acquires the geometry image supplied from the geometry image generation unit 313. The 2D encoding unit 316 encodes the acquired geometry image by an encoding method for 2D images, and generates encoded data of the geometry image. The 2D encoding unit 316 supplies the encoded data of the generated geometry image to the multiplexing unit 319.

The 2D encoding unit 317 acquires the occupancy image supplied from the occupancy image generation unit 314. The 2D encoding unit 317 encodes the acquired occupancy image by an encoding method for 2D images, and generates encoded data of the occupancy image. The 2D encoding unit 317 supplies the multiplexing unit 319 with the encoded data of the generated occupancy image.

The 2D encoding unit 318 acquires the texture 334 supplied to the encoding device 300. The 2D encoding unit 318 encodes the acquired texture 334 (that is, the texture image) by an encoding method for 2D images, and generates encoded data of the texture image. The 2D encoding unit 318 supplies the encoded data of the generated texture image to the multiplexing unit 319.

The multiplexing unit 319 acquires the encoded data of the meta information supplied from the meta information encoding unit 315, the encoded data of the geometry image supplied from the 2D encoding unit 316, the encoded data of the occupancy image supplied from the 2D encoding unit 317, and the encoded data of the texture image supplied from the 2D encoding unit 318. The multiplexing unit 319 multiplexes the acquired information to generate one bitstream (bitstream of 3D data using mesh). The multiplexing unit 319 outputs the generated bitstream to the outside of the encoding device 300.

Note that these processing units (mesh voxelization unit 311 to multiplexing unit 319) have an arbitrary configuration. For example, each processing unit may be configured by a logic circuit that implements the above-described processing. Furthermore, it is also possible that each processing unit includes a central processing unit (CPU), a read only memory (ROM), a random access memory (RAM) and the like, for example, and executes a program by using them to realize the above-described processes. Of course, it is also possible that each processing unit has both configurations such that some of the above-described processes may be realized by the logic circuit and the others may be realized by execution of the program. The configurations of the processing units may be independent from each other and, for example, some processing units may implement a part of the above-described processing by the logic circuit, some other processing units may implement the above-described processing by executing the program, and still some other processing units may implement the above-described processing by both the logic circuit and the execution of the program.

<Patch Generation Unit>

Fig. 19 is a block diagram illustrating a main configuration example of the patch generation unit 312 in Fig. 18. As illustrated in Fig. 19, the patch generation unit 312 includes a patch separation unit 351, a patch projection unit 352, an offset derivation unit 353, and a patch image generation unit 354.

The patch separation unit 351 acquires the connectivity 331 input to the encoding device 300, the vertex information 332 of the voxel grid supplied from the mesh voxelization unit 311, and the UV map 333 input to the encoding device 300. The patch separation unit 351 separates a vertex group indicated by the acquired vertex information 332 of the voxel grid into patches. That is, the patch separation unit 351 sets a patch for the vertex information 332 and sorts each vertex included in the vertex information 332 for each patch. A method of setting this patch is arbitrary. For example, as described above in <Method 1-1>, a small region of the texture (a region arranged as a cluster in the texture image) or the small region may be divided and used as patches. For example, as described above in <Method 1-2>, the patch separation unit 351 may use, as a patch, a region constituted by continuous polygons (mutually adjacent) in the small region. In addition, the patch separation unit 351 may perform enlargement, reduction, rotation, movement, and the like of the small region. The patch separation unit 351 supplies the vertex information 332, the connectivity 331, and the UV map 333 for each patch to the patch projection unit 352 and the offset derivation unit 353.

The patch projection unit 352 acquires the vertex information 332, the connectivity 331, and the UV map 333 for each patch supplied from the patch separation unit 351. The patch projection unit 352 projects the acquired vertex information 332 for each patch on the projection plane corresponding to the patch, and derives the depth value d (distance from the projection plane to the vertex) of each vertex. A method of setting the projection plane (projection direction) is arbitrary. For example, as described above in <Method 1-2>, the patch projection unit 352 may set the projection plane (projection direction) on the basis of the vertices included in the patch. In addition, as described above in <Method 1-2-1>, the patch projection unit 352 may set the projection plane (projection direction) on the basis of the normal vector of the polygon. For example, the patch projection unit 352 may set the projection plane (projection direction) on the basis of the normal vector of the polygon average as described above in <Method 1-2-1-1>. In addition, as described above in <Method 1-2-1-2>, the patch projection unit 352 may set the projection plane (projection direction) on the basis of the normal vector of the representative polygon in the patch. Further, the patch projection unit 352 may set the projection plane on the basis of the bounding box as described above in <Method 1-2-2>. For example, as described above in <Method 1-2-2-1>, the patch projection unit 352 may use the direction of the shortest side of the bounding box as the normal vector of the projection plane. Furthermore, as described above in <Method 1-2-2-2>, the patch projection unit 352 may calculate the mean square error of the depth value to each surface of the bounding box, and may use the surface with the minimum error as the projection plane. The patch projection unit 352 supplies the derived depth value d of each vertex, the connectivity 331, and the UV map 333 to the patch image generation unit 354.

As described above in <Method 1-3-2>, the offset derivation unit 353 generates conversion information for converting the position information in the geometry image of the texel grid into the position information in the geometry image of the voxel grid. This conversion information may be any information. For example, as described above in <Method 1-3-2-1>, the offset derivation unit 353 may derive the offset (dx, dy) as the conversion information. In that case, for example, the offset derivation unit 353 acquires the vertex information 332, the connectivity 331, and the UV map 333 for each patch supplied from the patch separation unit 351. Then, the offset derivation unit 353 derives an offset (dx, dy) on the basis of the acquired vertex information 332 for each patch and the UV map 333. That is, the offset derivation unit 353 may be regarded as a conversion information generation unit in the present disclosure. The offset derivation unit 353 supplies the derived conversion information (offset (dx, dy)) to the patch image generation unit 354.

Note that the conversion information derived by the offset derivation unit 353 may include a difference value between vertices of the offset (dx, dy), as described above in <Method 1-3-2-2>. Furthermore, as described above in <Method 1-3-2-3>, this conversion information may include a scale value (sx, sy) for each patch.

The patch image generation unit 354 acquires the depth value d, the connectivity 331, and the UV map 333 of each vertex for each patch supplied from the patch projection unit 352. In addition, the patch image generation unit 354 acquires the offset (dx, dy) (conversion information) supplied from the offset derivation unit 353. The patch image generation unit 354 generates a patch image on the basis of the depth value d of each vertex of each patch. In this patch image, at least the depth value d corresponding to the vertex is stored in the luminance component of the pixel at the position of each vertex. A depth value or the like complemented from an adjacent vertex with a luminance component at a position (pixel) other than the vertex in the patch may be stored. Furthermore, an offset (dx, dy) corresponding to each vertex may be stored in the color component of the position (pixel) of each vertex.

The patch image generation unit 354 supplies the connectivity 331 and the UV map 333 to the meta information encoding unit 315 as meta information. In addition, the patch image generation unit 354 supplies the patch image, the depth value d of each vertex, the offset (dx, dy), and the UV map 333 to the geometry image generation unit 313. Note that the depth value d and the offset (dx, dy) of each vertex may be included in the patch image. In addition, the patch image generation unit 354 supplies the generated patch image and the UV map 333 to the occupancy image generation unit 314.

<Flow of Encoding Process>

An example of a flow of an encoding process executed by the encoding device 300 will be described with reference to a flowchart in Fig. 20.

When the encoding process is started, in step S301, the mesh voxelization unit 311 voxelizes the coordinates of each vertex included in the vertex information 332 to voxelize the mesh.

In step S302, the patch separation unit 351 generates a patch using the vertex information 332 and the like converted into the voxel grid, and sets a projection plane on which the generated patch is projected.

In step S303, the patch projection unit 352 derives the distance between the projection plane and the vertex set by the patch separation unit 351 in step S302.

In step S304, the offset derivation unit 353 derives an offset (dx, dy), which is a difference between the position of each vertex on the projection plane set by the patch separation unit 351 in step S302 and the position of each vertex in the geometry image of the texel grid, as the conversion information on the basis of the information such as the vertex information 332 and the UV map 333 converted into the voxel grid. The patch image generation unit 354 generates a patch image on the projection plane set by the patch separation unit 351 in step S302 on the basis of information such as the depth value d and the offset (dx, dy).

In step S305, the geometry image generation unit 313 generates the geometry image on the basis of the patch image generated by the patch image generation unit 354 in step S304 and the UV map 333, and stores the depth value and the conversion information at the vertex position. In addition, the occupancy image generation unit 314 generates an occupancy image corresponding to the geometry image.

In step S306, the 2D encoding unit 316 encodes the geometry image generated by the geometry image generation unit 313 in step S305, and generates encoded data of the geometry image.

In step S307, the 2D encoding unit 318 encodes a texture image that is the texture 334, and generates encoded data of the texture image.

In step S308, the 2D encoding unit 317 encodes the occupancy image generated by the occupancy image generation unit 314 in step S305, and generates encoded data of the occupancy image.

In step S309, the meta information encoding unit 315 encodes the meta information (the connectivity 331, the UV map 333, or the like) to generate encoded data of the meta information.

In step S310, the multiplexing unit 319 multiplexes the encoded data of the geometry image, the encoded data of the occupancy image, the encoded data of the texture image, and the encoded data of the meta information to generate one bitstream. The multiplexing unit 319 outputs the generated bitstream to the outside of the encoding device 300.

When the process of step S310 ends, the encoding process ends.

In such an encoding process, the image generation unit 321 of the encoding device 300 generates a geometry image and an occupancy image by arranging a plurality of vertices on a two-dimensional plane so as to correspond to the UV map 333 on the basis of the position information (vertex information 332) of the plurality of vertices of the polygon and the UV map 333 indicating the correspondence between the plurality of vertices and the texture of the polygon. Furthermore, the encoding unit 322 encodes the UV map 333, the connectivity 331 that is connection information indicating a connection relationship between a plurality of vertices, the geometry image, the occupancy image, and the texture 334 of the polygon.

In this way, the encoding device 300 can suppress the occurrence of distortion of the shape of the texture 334 in the two-dimensional imaging, and thus, can suppress the reduction in the quality of the attribute information of the 3D data.

At that time, the image generation unit 321 may store the depth value from the projection plane on which the plurality of vertices is projected to the vertex as the luminance component of the geometry image.

Furthermore, the offset derivation unit 353 may generate conversion information for converting the positions of the vertices in the geometry image into the positions on the projection plane. In this case, the encoding unit 322 may further encode the generated conversion information.

The offset derivation unit 353 may derive conversion information including difference information (that is, the offset (dx, dy)) indicating a difference between the position of the vertex in the geometry image and the position of the vertex in the projection plane.

The offset derivation unit 353 may derive conversion information including a difference value between vertices of the difference information (offset (dx, dy)).

Furthermore, the image generation unit 321 may store the conversion information in the color component of the geometry image.

The encoding unit 322 may encode the conversion information as data different from the geometry image.

The patch image generation unit 354 may generate a single patch or a plurality of patches using a plurality of vertices corresponding to a small region of a texture arranged on a two-dimensional plane as a continuous region, project each patch on a projection plane, and generate a patch image. Then, the image generation unit 321 may generate the geometry image and the occupancy image by arranging the patch images on a two-dimensional plane so that the plurality of vertices corresponds to the UV map 333.

The patch projection unit 352 may set the projection plane on which the patch is projected on the basis of the normal vector of the polygon corresponding to the patch.

<4. Second Embodiment>

<Decoding Device>

Fig. 21 is a block diagram illustrating an example of a configuration of a decoding device which is an aspect of an image processing device to which the present technology is applied. A decoding device 400 illustrated in Fig. 21 is a device that extends the VPCC, decodes encoded data obtained by encoding 3D data using a mesh as a video frame by an encoding method for two-dimensional images by a decoding method for two-dimensional images, and generates (reconstructs) 3D data using the mesh. At that time, the decoding device 400 decodes the encoded data and reconstructs the 3D data by applying a single method or a combination of a plurality of methods among the various methods of the present technology described above in <2. Geometry Image According to Texture Image> (including <Method 1> to <Combination>).

Note that while Fig. 21 illustrates main elements such as processing units and data flows, those illustrated in Fig. 21 do not necessarily include all elements. That is, in the decoding device 400, there may be a processing unit not illustrated as a block in Fig. 21, or there may be processing or a data flow not illustrated as an arrow or the like in Fig. 21.

As illustrated in Fig. 21, the decoding device 400 includes a demultiplexing unit 411, a meta information decoding unit 412, a 2D decoding unit 413, a 2D decoding unit 414, a 2D decoding unit 415, a vertex position derivation unit 416, a patch reconstruction unit 417, and a vertex information reconstruction unit 418. The meta information decoding unit 412, the 2D decoding unit 413, the 2D decoding unit 414, and the 2D decoding unit 415 may be regarded as a decoding unit 421 in the present disclosure.

The demultiplexing unit 411 acquires a bitstream input to the decoding device 400. This bitstream is generated, for example, by the encoding device 300 encoding 3D data using mesh.

The demultiplexing unit 411 demultiplexes the bitstream and generates each encoded data included in the bitstream. That is, the demultiplexing unit 411 extracts each encoded data from the bitstream by the demultiplexing. For example, the demultiplexing unit 411 extracts the encoded data of the meta information, and supplies the encoded data to the meta information decoding unit 412. Furthermore, the demultiplexing unit 411 extracts the encoded data of the geometry image and supplies the encoded data to the 2D decoding unit 413. Furthermore, the demultiplexing unit 411 extracts the encoded data of the occupancy image and supplies the same to the 2D decoding unit 414. Furthermore, the demultiplexing unit 411 extracts the encoded data of the texture image and supplies the encoded data to the 2D decoding unit 415.

The meta information decoding unit 412 decodes the supplied encoded data of the meta information to generate the meta information. The meta information includes connectivity 431 and a UV map 432. The meta information decoding unit 412 outputs the generated connectivity 431 and UV map 432 to the outside of the decoding device 400 as (data constituting) 3D data using the restored mesh. The meta information decoding unit 412 also supplies the generated UV map 432 to the patch reconstruction unit 417.

The 2D decoding unit 413 decodes the encoded data of the geometry image to generate the geometry image. The 2D decoding unit 413 supplies the generated geometry image to the vertex position derivation unit 416.

The 2D decoding unit 414 decodes the encoded data of the occupancy image to generate an occupancy image. The 2D decoding unit 414 supplies the generated occupancy image to the patch reconstruction unit 417.

The 2D decoding unit 415 decodes the encoded data of the texture image to generate a texture image (texture 434). The 2D decoding unit 415 outputs the generated texture image (texture 434) to the outside of the decoding device 400 as (data constituting) 3D data using the restored mesh.

The vertex position derivation unit 416 obtains the position of each vertex included in the supplied geometry image, and acquires the depth value d and the conversion information (offset (dx, dy)) stored at the position. The vertex position derivation unit 416 derives a vertex position of the voxel grid on the basis of the conversion information. The vertex position derivation unit 416 supplies information indicating the derived vertex position of the voxel grid to the patch reconstruction unit 417.

The patch reconstruction unit 417 reconstructs a patch on the basis of the supplied information indicating the vertex positions of the voxel grid, the occupancy image, the UV map 432, and the like. The patch reconstruction unit 417 supplies the reconstructed patch to the vertex information reconstruction unit 418.

The vertex information reconstruction unit 418 reconstructs each vertex in the three-dimensional space on the basis of the supplied patch, and generates vertex information 433 including position information of each vertex in the three-dimensional space. The vertex information reconstruction unit 418 outputs the generated vertex information 433 to the outside of the decoding device 400 as (data constituting) 3D data using the restored mesh.

<Flow of Decoding Process>

An example of a flow of a decoding process executed by the decoding device 400 will be described with reference to a flowchart of Fig. 22.

When the decoding process is started, in step S401, the demultiplexing unit 411 demultiplexes the bitstream input to the decoding device 400, and extracts the encoded data of the meta information, the encoded data of the geometry image, the encoded data of the occupancy image, and the encoded data of the texture image.

In step S402, the meta information decoding unit 412 decodes the encoded data of the meta information extracted by the demultiplexing unit 411 in step S401, and generates (restores) the meta information. The meta information includes the connectivity 431 and the UV map 432. The meta information decoding unit 412 outputs the generated connectivity 431 and UV map 432 to the outside of the decoding device 400 as (data constituting) 3D data using the restored mesh.

In step S403, the 2D decoding unit 414 decodes the encoded data of the occupancy image extracted by the demultiplexing unit 411 in step S401 to generate (restore) the occupancy image.

In step S404, the 2D decoding unit 413 decodes the encoded data of the geometry image extracted by the demultiplexing unit 411 in step S401, and generates (restores) the geometry image. The depth value d is stored in the luminance component at the position where each vertex of the geometry image is arranged, and the conversion information (for example, offset (dx, dy)) is stored in the color component.

In step S405, the vertex position derivation unit 416 derives the vertex position of the voxel grid on the basis of the conversion information (for example, offset (dx, dy)) included in the geometry image generated in step S404.

In step S406, the patch reconstruction unit 417 reconstructs the patch on the basis of the UV map 432 generated by the meta information decoding unit 412 in step S402, the occupancy image generated by the 2D decoding unit 414 in step S403, and the information such as the vertex position of the voxel grid derived by the vertex position derivation unit 416 in step S405.

In step S407, the vertex information reconstruction unit 418 reconstructs the vertex information 433 on the basis of the information such as the patch reconstructed by the patch reconstruction unit 417 in step S406. The vertex information reconstruction unit 418 outputs the reconstructed vertex information 433 to the outside of the decoding device 400 as (data constituting) 3D data using the restored mesh.

In step S408, the 2D decoding unit 415 decodes the encoded data of the texture image extracted by the demultiplexing unit 411 in step S401, and generates (restores) the texture image (texture 434). The 2D decoding unit 415 outputs the generated texture image (texture 434) to the outside of the decoding device 400 as (data constituting) 3D data using the restored mesh.

When the process of step S408 ends, the decoding process ends.

In such a decoding process, the decoding unit 421 of the decoding device 400 decodes the encoded data (bitstream), and generates the UV map indicating the correspondence between the plurality of vertices of the polygon and the texture of the polygon, the connection information indicating the connection relationship between the plurality of vertices, the geometry image in which the plurality of vertices is arranged so as to correspond to the UV map on the two-dimensional plane, the occupancy image corresponding to the geometry image, and the texture image in which the texture is arranged on the two-dimensional plane, and the vertex information reconstruction unit 418 reconstructs the position information of the plurality of vertices in the three-dimensional space on the basis of the UV map, the geometry image, and the occupancy image.

By doing so, the decoding device 400 can suppress the occurrence of the distortion of the shape of the texture 334 in the two-dimensional imaging, and thus, can suppress the reduction in the quality of the attribute information of the 3D data.

Note that depth values from a projection plane on which a plurality of vertices is projected to the vertices may be stored in the luminance component of the geometry image.

Furthermore, the decoding unit 421 may decode the encoded data (bitstream) to further generate conversion information for converting the positions of the vertices in the geometry image into the positions on the projection plane. Then, the vertex information reconstruction unit 418 may reconstruct the vertices on the projection plane from the geometry image using the occupancy image and the conversion information, and may reconstruct the position information of the plurality of vertices in the three-dimensional space using the vertices on the reconstructed projection plane and the depth values.

Note that this conversion information may include difference information indicating a difference between the position of the vertex in the geometry image and the position of the vertex in the projection plane.

Furthermore, this conversion information may include a difference value between vertices of the difference information.

Further, this conversion information may be stored in a color component of the geometry image.

Note that the decoding unit 421 may decode the encoded data and generate the conversion information encoded as data different from the geometry image.

The vertex information reconstruction unit 418 may reconstruct, from the geometry image, vertices on the projection plane on which a plurality of vertices corresponding to small regions of the texture arranged on a two-dimensional plane as continuous regions is projected for each patch, using the occupancy image and the conversion information.

Further, the vertex information reconstruction unit 418 may reconstruct the vertex on the projection plane set on the basis of the normal vector of the polygon corresponding to the patch.

<5. Application Example>

<5-1. Another Example of Position Information>

In <Method 1-3> and the like, the distance (depth value) from the projection plane to the vertex in the three-dimensional space and the conversion information (for example, an offset value (dx, dy)) for restoring the depth value to the voxel grid are stored at the vertex position of the geometry image of the texel grid. That is, in this case, the position of the vertex is indicated by the depth value and the offset value (d, dx, dy).

The position information of the vertex is not limited to this example. For example, a bounding box (hereinafter, also referred to as patch bounding box) may be set for each patch, and the relative coordinates of the patch bounding box from the reference point may be used as the position information of the vertex. Then, similarly to the case of <Method 1-3> or the like, the relative coordinates may be stored in the geometry image.

For example, in an information processing apparatus (for example, an encoding device), the image generation unit may store the relative coordinates of the vertex from the reference point of the patch bounding box in the geometry image. Furthermore, in the information processing apparatus (for example, decoding device), the reconstruction unit may reconstruct the position information of the vertex in the three-dimensional space using the relative coordinates of the vertex from the reference point of the patch bounding box included in the geometry image. Note that the patch bounding box may be a three-dimensional region including a patch formed for each patch obtained by dividing 3D data using polygons.

For example, as illustrated on the left side of Fig. 23, a patch bounding box 502 is set to include a patch 501. The patch 501 is obtained by dividing 3D data such as a mesh. For example, the patch 501 corresponds to a small region of texture (a continuous region of texture). That is, by arranging the patch image obtained by projecting the patch 501 on a two-dimensional plane in the geometry image, it is possible to form a cluster of geometry having the same shape as the cluster of texture in the texture image.

A patch bounding box is formed for each patch. That is, the patch bounding box is formed for each patch. The shape of the patch bounding box is arbitrary. For example, the patch bounding box may be rectangular. In the case of the example of Fig. 23, the patch bounding box 502 is set to a rectangular shape. Note that the information defining the patch bounding box (for example, the position, size, and the like of the patch bounding box) may be stored in arbitrary information and provided to the decoding side. For example, this information may be stored in patch information that stores information regarding a patch. For example, an information processing apparatus (for example, an encoding device) may further include a patch information generation unit that generates patch information that is information regarding a patch, and stores information indicating the position and size of the patch bounding box in the patch information. Furthermore, for example, in an information processing apparatus (for example, a decoding device), a decoding unit may decode encoded data and generate patch information that is information regarding a patch and that stores information indicating the position and size of a patch bounding box.

In addition, one location of the patch bounding box 502 is set as a reference point. The position of the reference point is arbitrary. For example, a point at which each component of coordinates of the patch bounding box has a minimum value may be used as the reference point. In the case of the example of Fig. 23, coordinates (min_x, min_y, min_z) at which each component of the patch bounding box 502 has the minimum value are set as the reference point P0.

Then, for each vertex, relative coordinates (dx, dy, dz) from the reference point are derived as position information. That is, the relative coordinates can also be said to be a difference vector having the reference point as a start point and the vertex as an end point. For example, in the case of Fig, 23, a difference vector d1 (d1 = (dx, dy, dz)) having a reference point P0 as a start point and a vertex P1 as an end point is derived as the position information of a vertex P1.

Then, as described above, the position information (relative coordinates from the reference point) may be stored in the geometry image. For example, in an information processing apparatus (for example, an encoding device), the image generation unit may store the relative coordinates of each vertex in the geometry image as a pixel value of a pixel corresponding to the vertex. In other words, for example, in a geometry image generated by decoding encoded data by a decoding unit of an information processing apparatus (for example, a decoding device), relative coordinates may be stored as pixel values of pixels corresponding to vertices. For example, as illustrated on the right side of Fig. 23, in a geometry image 503, a patch image 504 is assumed to be a patch image corresponding to the patch 501. In this case, the patch image 504 includes a pixel corresponding to the vertex P1. As the pixel value of the pixel corresponding to the vertex P1 in such a geometry image, the relative coordinates (dx, dy, dz) of the vertex P1 described above may be stored.

For example, in an information processing apparatus (for example, an encoding device), the image generation unit may store each component of the relative coordinates of each vertex in each component (for example, YUV 4:4:4) of the geometry image. In other words, for example, each component of relative coordinates of each vertex may be stored in each component of a geometry image generated by decoding encoded data by a decoding unit of an information processing apparatus (for example, a decoding device). For example, the relative coordinate dx in the x-axis direction may be stored as the pixel value of the luminance component (Y). Further, the relative coordinate dy in the y-axis direction may be stored as the pixel value of the luminance component (Cb). Furthermore, the relative coordinate dz in the z-axis direction may be stored as the pixel value of the luminance component (Cr). Certainly, a storage method is arbitrary, and is not limited to this example.

Fig. 24 is a diagram illustrating an example of each component of the geometry image storing the position information (d, dx, dy) configured by the depth value and the conversion information. In Fig. 24, the luminance component (Y) 511 stores a depth value (d) as a pixel value. Furthermore, the chrominance component (Cb) 512 stores difference information (dx) in the x-axis direction as a pixel value. Furthermore, the chrominance component (Cr) 513 stores difference information (dy) in the y-axis direction as a pixel value. In this case, the range that each value can take is basically not limited.

Fig, 25 is a diagram illustrating an example of each component of a geometry image storing position information (dx, dy, dz) configured by relative coordinates from a reference point. In Fig, 25, relative coordinates (dx) in the x-axis direction are stored as pixel values in the luminance component (Y) 521. Furthermore, relative coordinates (dy) in the y-axis direction are stored as pixel values in the chrominance component (Cb) 522. Furthermore, relative coordinates (dz) in the z-axis direction are stored as pixel values in the chrominance component (Cr) 523.

The location of each vertex of the patch is limited within its patch bounding box. That is, as described above, by representing the position information of the vertex by the relative coordinates from the reference point of the patch bounding box, the width (range) of the value that each component of the position information can take can be limited to the size (length of each component) or less of the patch bounding box that is a partial region of the three-dimensional space. That is, the pixel value change in the spatial direction in the geometry image can be made gentler when the position information of the vertex is represented by the relative coordinates from the reference point of the patch bounding box. Thus, a decrease in encoding efficiency can be suppressed.

<Patch Generation Unit>

Fig. 26 is a block diagram illustrating a main configuration example of the patch generation unit 312 of the encoding device 300 in this case. In the case of the example of Fig. 26, the patch generation unit 312 includes a patch separation unit 551, a patch bounding box setting unit 552, a patch information generation unit 553, and a patch image generation unit 554.

The patch separation unit 551 is a processing unit similar to the patch separation unit 351, and executes processing related to processing of separating 3D data (for example, mesh) into patches. For example, the patch separation unit 551 may acquire the connectivity 331 input to the encoding device 300, the vertex information 332 of the voxel grid supplied from the mesh voxelization unit 311, and the UV map 333 input to the encoding device 300. In addition, the patch separation unit 551 may separate a vertex group indicated by the acquired vertex information 332 of the voxel grid into patches. That is, the patch separation unit 551 may set a patch for the vertex information 332 and sort each vertex included in the vertex information 332 for each patch. A method of setting this patch is arbitrary. In addition, the patch separation unit 551 may perform enlargement, reduction, rotation, movement, and the like of the small region. Furthermore, the patch separation unit 551 may supply the vertex information 332, the connectivity 331, and the UV map 333 for each patch to the patch bounding box setting unit 552.

The patch bounding box setting unit 552 executes processing related to patch bounding box setting. For example, the patch bounding box setting unit 552 may acquire information (for example, vertex information 332 for each patch, connectivity 331, UV map 333, and the like) supplied from the patch separation unit 551. In addition, the patch bounding box setting unit 552 may set a patch bounding box for each patch.

In addition, the patch bounding box setting unit 552 may set a reference point of the patch bounding box, and derive, for each vertex in the patch, relative coordinates from the reference point as the position information. For example, the patch bounding box setting unit 552 may use a point (P0 (min_x, min_y, min_z)) at which each component of coordinates of the patch bounding box has a minimum value as the reference point.

In addition, the patch bounding box setting unit 552 may supply the patch information defining the patch bounding box set for each vertex and the derived position information (relative coordinates from the reference point) of each vertex to the patch information generation unit 553 together with the information and the like supplied from the patch separation unit 551.

The patch information generation unit 553 executes processing related to generation of patch information that stores information regarding a patch. For example, the patch information generation unit 553 may acquire information (for example, the vertex information 332 for each patch, the connectivity 331, the UV map 333, the position information of each vertex, the information defining the patch bounding box set for each vertex (for example, information indicating the position and size of the patch bounding box), and the like) supplied from the patch bounding box setting unit 552. In addition, the patch information generation unit 553 may generate patch information. In addition, the patch information generation unit 553 may store information or the like defining a patch bounding box in the patch information. In addition, the patch information generation unit 553 may supply the generated patch information to the patch image generation unit 554 together with the information and the like supplied from the patch bounding box setting unit 552.

The patch image generation unit 554 executes processing related to generation of a patch image. For example, the patch image generation unit 554 may acquire information (for example, vertex information 332 for each patch, connectivity 331, UV map 333, position information of each vertex, information defining a patch bounding box set for each vertex, patch information, and the like) supplied from the patch information generation unit 553. In addition, the patch image generation unit 554 may generate a patch image using these pieces of information. For example, the patch image generation unit 554 may set YUV 4:4:4 and generate a patch image for each component (Y, Cb, Cr).

In addition, the patch image generation unit 554 may store vertex position information (for example, relative coordinates from the reference point of the patch bounding box) in the patch image. For example, the patch image generation unit 554 may store the position information of the vertex as the pixel value of the pixel corresponding to the vertex of the patch image. In addition, the patch image generation unit 554 may store each component of the position information of each vertex in each component of the patch image.

In addition, the patch image generation unit 554 may supply the connectivity 331, the UV map 333, and the patch information to the meta information encoding unit 315 as the meta information. In addition, the patch image generation unit 554 may supply the patch image and the position information (for example, relative coordinates or the like from the reference point) of each vertex to the geometry image generation unit 313. Note that the position information of each vertex may be stored in the patch image. In addition, the patch image generation unit 554 may supply the generated patch image and the UV map 333 to the occupancy image generation unit 314.

With such a configuration, the encoding device 300 can suppress the occurrence of distortion of the shape of the texture 334 in the two-dimensional imaging, and thus, can suppress a reduction in the quality of the attribute information of the 3D data.

<Flow of Encoding Process>

An example of a flow of an encoding process in this case will be described with reference to a flowchart in Fig. 27.

When the encoding process is started, in step S501, the mesh voxelization unit 311 voxelizes the coordinates of each vertex included in the vertex information 332 to voxelize the mesh.

In step S502, the patch separation unit 551 generates a patch using the vertex information 332 and the like converted into the voxel grid, and sets a projection plane on which the generated patch is projected.

In step S503, the patch bounding box setting unit 552 sets a patch bounding box for each vertex, sets a reference point for each patch bounding box, and derives a difference vector of each vertex. For example, the patch bounding box setting unit 552 may set, as the reference point, a point at which each component of coordinates of the patch bounding box has a minimum value.

In step S504, the patch information generation unit 553 generates patch information. For example, the patch information generation unit 553 may store information defining a patch bounding box in the patch information.

In step S505, the patch image generation unit 554 projects the patch onto the projection plane to generate a patch image, and stores a difference vector (relative coordinates from the reference point) as the pixel value of the vertex position.

In step S506, the geometry image generation unit 313 generates a geometry image on the basis of the patch image generated in step S505 and the UV map 333. At that time, the geometry image generation unit 313 stores position information (relative coordinates from the reference point) of each vertex in the geometry image. For example, the geometry image generation unit 313 may store position information (relative coordinates from the reference point) of each vertex in the geometry image as a pixel value of a pixel corresponding to the vertex. Furthermore, the geometry image generation unit 313 may store each component (each component of relative coordinates from the reference point) of the position information of each vertex in each component (Y, Cb, Cr) of the geometry image.

In step S507, the occupancy image generation unit 314 generates an occupancy image corresponding to the geometry image.

In step S508, the meta information encoding unit 315 encodes the meta information (connectivity 331, UV map 333, patch information, and the like) to generate the encoded data of the meta information.

In step S509, the 2D encoding unit 316 encodes the geometry image generated in step S506, and generates encoded data of the geometry image.

In step S510, the 2D encoding unit 317 encodes the occupancy image generated in step S507, and generates encoded data of the occupancy image.

In step S511, the 2D encoding unit 318 encodes a texture image that is the texture 334, and generates encoded data of the texture image.

In step S512, the multiplexing unit 319 multiplexes the encoded data of the geometry image, the encoded data of the occupancy image, the encoded data of the texture image, and the encoded data of the meta information to generate one bitstream. The multiplexing unit 319 outputs the generated bitstream to the outside of the encoding device 300.

When the process of step S310 ends, the encoding process ends.

By executing each processing in this manner, the encoding device 300 can suppress the occurrence of distortion of the shape of the texture 334 in the two-dimensional imaging, and thus, can suppress the reduction in the quality of the attribute information of the 3D data.

<Decoding Device>

Fig. 28 is a block diagram illustrating a main configuration example of the decoding device 400 in this case. In the case of the example of Fig. 28, the decoding device 400 includes a demultiplexing unit 411, a meta information decoding unit 412, a 2D decoding unit 413, a 2D decoding unit 414, a 2D decoding unit 415, a patch reconstruction unit 417, and a vertex information reconstruction unit 418. That is, in this case, the vertex position derivation unit 416 is omitted from the configuration illustrated in Fig. 21. Therefore, the 2D decoding unit 413 supplies the generated geometry image to the patch reconstruction unit 417.

The meta information decoding unit 412 decodes the supplied encoded data of the meta information to generate the meta information. The meta information includes connectivity 431, a UV map 432, and patch information. The meta information decoding unit 412 outputs the generated connectivity 431 and UV map 432 to the outside of the decoding device 400 as (data constituting) 3D data using the restored mesh. The meta information decoding unit 412 also supplies the UV map 432 and the meta information to the patch reconstruction unit 417.

The patch reconstruction unit 417 reconstructs a patch on the basis of the supplied information such as the geometry image, the occupancy image, the UV map 432, and the patch information. The patch reconstruction unit 417 supplies the reconstructed patch to the vertex information reconstruction unit 418.

The vertex information reconstruction unit 418 reconstructs each vertex in the three-dimensional space on the basis of the supplied patch, and generates vertex information 433 including position information of each vertex in the three-dimensional space. The vertex information reconstruction unit 418 outputs the generated vertex information 433 to the outside of the decoding device 400 as (data constituting) 3D data using the restored mesh.

That is, the patch reconstruction unit 417 and the vertex information reconstruction unit 418 reconstruct the position information of the plurality of vertices in the three-dimensional space on the basis of the UV map, the geometry image, and the occupancy image. The patch reconstruction unit 417 and the vertex information reconstruction unit 418 may further reconstruct the position information of each vertex in the three-dimensional space by using the relative coordinates of each vertex from the reference point of the patch bounding box included in the geometry image. That is, the patch reconstruction unit 417 and the vertex information reconstruction unit 418 can also be referred to as reconstruction units.

Note that the relative coordinates of each vertex from the reference point of the patch bounding box may be stored in the geometry image as a pixel value of a pixel corresponding to the vertex. For example, each component of the relative coordinates may be stored in each component of the geometry image. The patch reconstruction unit 417 may acquire the relative coordinates of each vertex stored in the geometry image in this manner.

In addition, the patch bounding box may be defined in the patch information. For example, information indicating the position and size of the patch bounding box may be stored in the patch information. For example, the meta information decoding unit 412 may decode the supplied encoded data of the meta information to generate the patch information (information indicating the position and size of the patch bounding box stored in the patch information).

The patch reconstruction unit 417 sets a patch bounding box for each patch on the basis of (information indicating the position and size of the patch bounding box stored in) the patch information. In addition, the patch reconstruction unit 417 sets a reference point of the patch bounding box. The reference point is an arbitrary point as described above. For example, a point at which each component of coordinates of the patch bounding box has a minimum value may be used as the reference point.

The patch reconstruction unit 417 derives the position information (that is, the three-dimensional coordinates of each vertex) of each vertex in the three-dimensional space using the set reference point and the position information (relative information from the reference point) of each vertex, and rebuilds the patch. The vertex information reconstruction unit 418 reconstructs the position information of each vertex in the three-dimensional space, that is, the vertex information, using the reconstructed patch.

With such a configuration, the decoding device 400 can suppress the occurrence of the distortion of the shape of the texture 334 in the two-dimensional imaging, and thus, can suppress the reduction in the quality of the attribute information of the 3D data.

<Flow of Decoding Process>

An example of a flow of a decoding process in this case will be described with reference to a flowchart in Fig. 29. When the decoding process is started, in step S551, the demultiplexing unit 411 demultiplexes the bitstream input to the decoding device 400, and extracts the encoded data of the meta information, the encoded data of the geometry image, the encoded data of the occupancy image, and the encoded data of the texture image.

In step S552, the meta information decoding unit 412 decodes the encoded data of the meta information extracted from the bitstream by the demultiplexing unit 411 in step S551, and generates (restores) the meta information. The meta information includes connectivity 431, a UV map 432, and patch information. The meta information decoding unit 412 outputs the generated connectivity 431 and UV map 432 to the outside of the decoding device 400 as (data constituting) 3D data using the restored mesh. Note that information indicating the position and size of the patch bounding box may be stored in the patch information. That is, the meta information decoding unit 412 may decode the encoded data and generate patch information storing information indicating the position and size of the patch bounding box.

In step S553, the 2D decoding unit 413 decodes the encoded data of the geometry image extracted from the bitstream by the demultiplexing unit 411 in step S551, and generates (restores) the geometry image. In this geometry image, position information of each vertex (relative coordinates from the reference point of the patch bounding box) is stored. For example, relative coordinates of vertices may be stored in the geometry image as pixel values of pixels corresponding to the vertices.

Furthermore, each component of the relative coordinates of each vertex may be stored in each component of the geometry image. Note that the reference point of the patch bounding box may be, for example, a point at which each component of coordinates of the patch bounding box has a minimum value.

In step S554, the 2D decoding unit 414 decodes the encoded data of the occupancy image extracted from the bitstream by the demultiplexing unit 411 in step S551, and generates (restores) the occupancy image.

In step S555, the 2D decoding unit 415 decodes the encoded data of the texture image extracted from the bitstream by the demultiplexing unit 411 in step S551, and generates (restores) the texture image (texture 434). The 2D decoding unit 415 outputs the generated texture image (texture 434) to the outside of the decoding device 400 as (data constituting) 3D data using the restored mesh.

In step S556, the patch reconstruction unit 417 reconstructs the patch on the basis of the UV map 432 and the meta information generated by the meta information decoding unit 412 in step S552, the occupancy image generated by the 2D decoding unit 414 in step S554, and the like.

In step S557, the vertex information reconstruction unit 418 reconstructs the vertex information 433 on the basis of the information such as the patch reconstructed by the patch reconstruction unit 417 in step S556. The vertex information reconstruction unit 418 outputs the reconstructed vertex information 433 to the outside of the decoding device 400 as (data constituting) 3D data using the restored mesh.

When the process of step S418 ends, the decoding process ends.

By executing each processing as described above, the decoding device 400 can suppress the occurrence of the distortion of the shape of the texture 334 in the two-dimensional imaging, and thus, can suppress the reduction in the quality of the attribute information of the 3D data.

<5-2. Transmission of Position Information of Overlapping Point>

As described above, when geometry is projected on a two-dimensional plane by a texel grid, a plurality of vertices may be projected on the same pixel (u, v) of the geometry image. In this manner, a plurality of vertices projected on the same pixel of the geometry image is also referred to as overlapping points. However, only the position information of one vertex can be stored in each pixel of the geometry image. Therefore, when such an overlapping point exists, there is a possibility that a vertex where the position information cannot be stored in the geometry image is generated.

Therefore, when the position information cannot be stored in the geometry image as described above, the position information may be stored in patch information or the like. For example, in an information processing apparatus (for example, an encoding device), when a plurality of vertices corresponds to one pixel in a geometry image, the image generation unit may store position information of a representative vertex among the plurality of vertices in the geometry image. Then, the information processing apparatus (for example, an encoding device) may further include a patch information generation unit that generates patch information that is information regarding a patch obtained by dividing the 3D data using the polygon, and stores position information of vertices other than the representative vertex among the plurality of vertices in the patch information. Furthermore, in the information processing apparatus (for example, decoding device), the reconstruction unit may reconstruct the three-dimensional position information for a plurality of vertices corresponding to one pixel of the geometry image by using the position information stored in the geometry image and the position information stored in the patch information that is information regarding the patch obtained by dividing the 3D data using the polygon.

For example, as illustrated in Fig. 30, it is assumed that the vertex P1 and the vertex P2 are arranged at the same pixel in the patch image 504 of the geometry image 503. It is assumed that the position information (relative coordinates) of the vertex P1 is (dx1, dy1, dz1) and the position information (relative coordinates) of the vertex P2 is (dx2, dy2, dz2). In such a case, the position information of any one (for example, vertex P1) of the overlapping points (vertex P1 and vertex P2) is stored in the geometry image 503, and the position information of the remaining vertices (for example, vertex P2) is stored in patch information 601.

At the time of decoding, as illustrated in Fig. 31, first, position information of each vertex is acquired from the geometry image. At this time, the pieces of position information of the overlapping points are all the same (position information of one vertex stored in the geometry image). In the case of the example of Fig. 31, the position information of the vertex P0, the vertex P2, and the vertex P3 is all (dx0, dy0, dz0). Therefore, the position information of the vertex stored in the patch information is acquired, and the position information acquired from the geometry image is updated using the position information. As a result, the position information of the vertex P2 and the vertex P3 is updated. The position information of the vertex P2 is (dx2, dy2, dz2), and the position information of the vertex P3 is (dx3, dy3, dz3). By doing so, the position information of the overlapping point can be correctly restored.

Note that, for example, in an information processing apparatus (for example, an encoding device), the patch information generation unit may store the position information of each vertex other than the representative vertex among the plurality of vertices in the patch information in association with the identification information of the vertex. In other words, in the patch information generated by decoding the encoded data by the decoding unit of the information processing apparatus (for example, decoding device), the position information of the vertex may be stored in association with the identification information of the vertex.

For example, as illustrated in Fig. 30, a list (Unregistered Vertex List) in which position information (dx, dy, dz) of a vertex and identification information (vertex index in Patch) of the vertex are associated with each other may be stored in the patch information 601. Note that vertex index in Patch is identification information for identifying each vertex in the patch. The identification information may be any information. For example, it may be identification information for identifying all vertices of all patches.

Furthermore, the position information of the vertex may be any information. For example, as illustrated in Fig. 30 and Fig. 31, the position information of the vertex may include relative coordinates from the reference point of the patch bounding box of the vertex. That is, the position information of the vertex may be (dx, dy, dz). Note that the patch bounding box may be a three-dimensional region including a patch formed for each patch obtained by dividing 3D data using polygons.

Furthermore, the position information of a vertex may include a depth value (d) from the projection plane on which the vertex is projected to the vertex, and difference information (dx, dy) indicating a difference between the position of the vertex in the geometry image and the position of the vertex in the projection plane. That is, the position information of the vertex may be (d, dx, dy) .

For example, in the encoding device 300, when a plurality of vertices corresponds to one pixel of the geometry image, the geometry image generation unit 313 may store the position information of the representative vertex among the plurality of vertices in the geometry image. Then, the patch information generation unit 553 may generate patch information that is information regarding a patch obtained by dividing the 3D data using the polygon, and store the position information of vertices other than the representative vertex among the plurality of vertices in the patch information.

For example, in step S506 of the encoding process, the geometry image generation unit 313 may generate a geometry image and store position information (relative coordinates from the reference point) of a representative vertex among a plurality of vertices corresponding to the same pixel of the geometry image, in the geometry image. Then, in step S504, the patch information generation unit 553 may generate patch information, and store the position information of vertices other than the representative vertex among the plurality of vertices corresponding to the same pixel of the geometry image in the patch information.

In this way, the encoding device 300 can transmit the position information of all the vertices that become the overlapping points to the decoding side.

For example, in the decoding device 400, the patch reconstruction unit 417 may reconstruct a patch for a plurality of vertices corresponding to one pixel of the geometry image by using the position information stored in the geometry image and the position information stored in the patch information that is information regarding the patch obtained by dividing the 3D data using the polygon, and the vertex information reconstruction unit 418 may reconstruct the three-dimensional position information by using the patch.

For example, in step S556 of the decoding process, for a plurality of vertices corresponding to one pixel of the geometry image, the patch reconstruction unit 417 may reconstruct the patch by using the position information stored in the geometry image and the position information stored in the patch information that is the information regarding the patch obtained by dividing the 3D data using the polygon. Then, in step S557, the vertex information reconstruction unit 418 may reconstruct the three-dimensional position information using the patch.

By doing so, the decoding device 400 can restore the position information of all the vertices that become the overlapping points.

<5-3. Patch Division>

As described above, when the geometry is projected on the two-dimensional plane by the texel grid, a patch of the geometry is generated on the basis of the shape of the input texture. The geometry image is encoded by the 2D encoding unit, but the 2D encoding unit generally has a restriction of a data length (bit length) such as 8 bits or 10 bits. However, for example, when the depth value from the projection plane to the vertex is stored in the geometry image, since there is no restriction on the value of the depth value, there is a possibility that the range (value range) of the value that can be taken as the depth value exceeds the restriction on the data length of the 2D encoding unit. It similarly applies to the case of decoding. Generally, the 2D decoding unit has a constraint of a data length (bit length) such as 8 bits or 10 bits, but since there is no constraint on the value of the depth value, there is a possibility that the range (value range) of values that can be taken as the depth value exceeds the constraint on the data length of the 2D decoding unit. The difference information is similar to the case of the depth value. As described above, when the pixel value of the geometry image exceeds the restriction of the 2D encoding unit and the 2D decoding unit, it may be difficult to correctly encode and decode the geometry image.

Therefore, in such a case, by dividing the patch, the pixel value of the geometry image can be prevented from exceeding the constraints of the 2D encoding unit and the 2D decoding unit. For example, in the graph on the left side of Fig. 32, it is assumed that the real straight line 611 is a depth value of a vertex of a certain patch. In this patch, it is assumed that the depth value of the vertex increases from the real straight line 611 to a point straight line 612. When the maximum value of data that can be handled by the 2D encoding unit and the 2D decoding unit is 256, the depth value of the vertex of this patch exceeds the maximum value as in the point straight line 612. In such a case, by dividing the patch and changing the projection plane of the portion of the point straight line 612, for example, the depth value can be lowered as indicated by an arrow 613 and can be made as indicated by a real straight line 614. By dividing the patch in this manner, the range (value range) of values that can be taken as the depth value can be kept within the maximum value 256 or less. That is, the pixel value of the geometry image can be prevented from exceeding the constraints of the 2D encoding unit and the 2D decoding unit.

However, in the v3c-mesh, since three vertices constituting the triangle mesh are treated as one set, it is necessary to create a new vertex in the case of division, but as described above, in the case of generating a geometry image so as to match the texture image (also referred to as texel-based projection), the shape of the patch image before the division cannot be changed. For example, it is assumed that the patch image 621 illustrated on the right side of Fig. 32 is divided by a dotted line and divided into a patch image 622 and a patch image 623. When the geometry is projected voxel-based onto the geometry image, the patch image 622 and the patch image 623 can be placed at different locations from each other. Therefore, vertices located at the boundary (dotted line) between the patch image 622 and the patch image 623 can be generated in both the patch image 622 and the patch image 623. On the other hand, in the case of the texel-based projection, the shape of the patch image 621 cannot be changed even if the patch division is performed. Then, only position information of one vertex can be stored in one pixel of the geometry image.

Therefore, for vertices located at the boundary between the divided patches, position information as vertices of any one patch is stored in the geometry image. Then, when the vertex information is reconstructed (when the three-dimensional position information is reconstructed), it is assumed that the vertex exists in both patches, and the position information stored in the geometry is applied.

For example, an information processing apparatus (for example, an encoding device) may further include a patch image generation unit that generates a single or a plurality of patches using a plurality of vertices corresponding to small regions of texture arranged on a two-dimensional plane as a continuous region, projects each patch on a projection plane, and generates a patch image. Then, when the patch image generation unit generates a plurality of patches for one small region of the texture at the time of generating the patch image, the patch image generation unit may derive the position information of the boundary vertex located at the boundary of the patch in any one patch. Then, the image generation unit may generate the geometry image and the occupancy image by arranging the patch image generated as described above on a two-dimensional plane so that the plurality of vertices corresponds to the UV map.

Furthermore, for example, in an information processing apparatus (for example, a decoding device), the reconstruction unit may reconstruct the three-dimensional position information of the boundary vertex located at the boundary of a plurality of patches corresponding to one small region of the texture arranged on the two-dimensional plane as a continuous region using the position information derived in any one of the plurality of patches.

For example, in the case of the patch image 621 in Fig. 32, position information as vertices of the patch image 622 or the patch image 623 is stored in the geometry image for vertices on a boundary between the patch image 622 and the patch image 623 indicated by a dotted line in Fig. 32. Then, the patch corresponding to the patch image 622 and the patch corresponding to the patch image 623 are reconstructed in the three-dimensional space using the position information.

By doing so, patch division can be realized without changing the original patch shape on the encoding side, and each divided patch can be correctly reconstructed in the three-dimensional space on the decoding side.

Here, the vertex on the boundary is arbitrarily set as the vertex of any patch forming the boundary. For example, information indicating which vertex of the patch is set may be provided from the encoding side to the decoding side. For example, the information may be stored in the patch information.

For example, an information processing apparatus (for example, an encoding device) may further include a patch information generation unit that generates patch information that is information regarding a patch, and stores information indicating in which patch the position information of the boundary vertex located at the boundary of the patch has been derived. Furthermore, for example, in an information processing apparatus (for example, a decoding device), the reconstruction unit may reconstruct the three-dimensional position information using the position information derived in the patch indicated in the patch information that is information regarding the patch.

In addition, each of the divided patches may be processed in a predetermined processing order, and it may be determined which patch has a vertex on the boundary according to the processing order. For example, the vertex on the boundary may be the vertex of the patch to be processed first, the vertex of the patch to be processed n-th, or the vertex of the patch to be processed last.

For example, in an information processing apparatus (for example, an encoding device), the patch image generation unit may derive the position information of the boundary vertices in the patch selected on the basis of the patch processing order. Furthermore, for example, in an information processing apparatus (for example, a decoding device), the reconstruction unit may reconstruct the three-dimensional position information using the position information derived in a predetermined patch according to the patch processing order.

For example, in the encoding device 300, the patch image generation unit 554 may generate a single patch or a plurality of patches using a plurality of vertices corresponding to a small region of a texture arranged on a two-dimensional plane as a continuous region, and project each patch on a projection plane to generate a patch image. Furthermore, at that time, when the patch image generation unit 554 generates a plurality of patches for one small region of the texture, the position information of the boundary vertex located at the boundary of the patch may be derived in any one patch. Then, the geometry image generation unit 313 may generate the geometry image and the occupancy image by arranging the patch images on a two-dimensional plane so that the plurality of vertices corresponds to the UV map.

For example, in step S505 of the encoding process, the patch image generation unit 554 may generate a single or a plurality of patches using a plurality of vertices corresponding to a small region of a texture arranged on a two-dimensional plane as a continuous region, and project each patch on a projection plane to generate a patch image. Furthermore, at that time, when the patch image generation unit 554 generates a plurality of patches for one small region of the texture, the position information of the boundary vertex located at the boundary of the patch may be derived in any one patch. Then, in step S506, the geometry image generation unit 313 may generate the geometry image by arranging the patch image on a two-dimensional plane so that the plurality of vertices corresponds to the UV map.

By doing so, the encoding device 300 can implement patch division without changing the original patch shape.

For example, in the decoding device 400, the patch reconstruction unit 417 may reconstruct the three-dimensional position information of the boundary vertex located at the boundary of the plurality of patches corresponding to one small region of the texture arranged on the two-dimensional plane as the continuous region using the position information derived in any one of the plurality of patches, and the vertex information reconstruction unit 418 may reconstruct the three-dimensional position information using the plurality of patches.

For example, in step S556 of the decoding process, the patch reconstruction unit 417 may reconstruct the three-dimensional position information of the boundary vertex located at the boundary of the plurality of patches corresponding to one small region of the texture arranged on the two-dimensional plane as the continuous region using the position information derived in any one of the plurality of patches. Then, in step S557, the vertex information reconstruction unit 418 may reconstruct the three-dimensional position information using the plurality of patches.

By doing so, the decoding device 400 can correctly reconstruct each divided patch into the three-dimensional space.

Note that, in this case, the position information of the vertex may be any parameter. For example, it may include relative coordinates from the reference point of the patch bounding box of that vertex. That is, the position information of the vertex may be (dx, dy, dz). Furthermore, the position information of a vertex may include a depth value (d) from the projection plane on which the vertex is projected to the vertex, and difference information (dx, dy) indicating a difference between the position of the vertex in the geometry image and the position of the vertex in the projection plane. That is, the position information of the vertex may be (d, dx, dy) .

When the position information of the vertex includes the relative coordinates from the reference point of the patch bounding box of the vertex (for example, when the position information of the vertex is (dx, dy, dz)), as described above in <5-1. Another Example of Position Information>, the pixel value change in the spatial direction in the geometry image can be expected to be gentler than when the position information of the vertex is (d, dx, dy). In other words, the width (range) of the value that can be taken by each component of the position information can be narrowed. Therefore, the possibility of performing patch division for preventing the value of the position information from exceeding the constraints of the encoding unit and the decoding unit as described above is reduced. That is, the possibility of reducing the number of patches increases.

For example, as illustrated in Fig. 33, it is assumed that a patch image 631 and a patch image 632 are adjacent to each other at a boundary indicated by a dotted line 633 in the geometry image 630. In general, the correlation of the position information (pixel value of the geometry image) of the vertices between the patches is lower than that between the vertices in the patch. Therefore, in the case of Fig. 33, the correlation of the position information between the right and left vertices of the dotted line 633 (between the vertex of the patch image 631 and the vertex of the patch image 632) is low. Therefore, when the number of patches is increased by the above-described patch division, the correlation in the spatial direction of the geometry image is easily reduced. Therefore, there is a high possibility that the encoding efficiency is reduced.

As described above, by setting the position information of the vertex to include the relative coordinates from the reference point of the patch bounding box of the vertex (for example, the position information of the vertex is set to (dx, dy, dz)), the possibility of reducing the number of patches increases, so that suppression of reduction in encoding efficiency can be expected.

<5-4. Recoloring Processing>

In the case of the texel-based projection, the geometry may be shifted not only in the normal direction of the projection plane but also in the projection plane direction due to the compression distortion. That is, compression distortion of the geometry may occur in three axial directions. Therefore, there is a possibility that the texture is shifted (so-called color shift occurs) with respect to the geometry.

Therefore, recoloring processing may be performed in which the texture corresponds to the geometry with the compression distortion. For example, the information processing apparatus (for example, an encoding device) may further include a decoding unit that decodes the encoded data of the geometry image generated by the encoding unit, and a recoloring processing unit that executes texture recoloring processing using the geometry image generated by the decoding unit. Then, the encoding unit may encode the texture after the recoloring processing.

Fig. 34 is a block diagram illustrating a main configuration example of the encoding device 300 in that case. In this case, as illustrated in Fig. 34, the encoding device 300 further includes a 2D decoding unit 651 and a recoloring processing unit 652 in addition to the configuration illustrated in Fig. 18.

The 2D encoding unit 316 supplies the encoded data of the generated geometry image not only to the multiplexing unit 319 but also to the 2D decoding unit 651.

The 2D decoding unit 651 performs processing related to decoding of the encoded data of the geometry image. For example, the 2D decoding unit 651 may acquire the encoded data of the geometry image supplied from the 2D encoding unit 316. Furthermore, the 2D decoding unit 651 may decode the encoded data to generate (restore) a geometry image. The generated (restored) geometry image includes compression distortion. The 2D decoding unit 651 supplies the generated (restored) geometry image to the recoloring processing unit 652.

The recoloring processing unit 652 performs processing related to the recoloring processing. For example, the recoloring processing unit 652 acquires the geometry image supplied from the 2D decoding unit 651. This geometry image is data generated (restored) by the 2D decoding unit 651 and includes compression distortion. The recoloring processing unit 652 also acquires data of an enclosed mesh (data enclosed by a dotted line 653) input to the encoding device 300. That is, the recoloring processing unit 652 acquires the connectivity 331, the vertex information 332, the UV map 333, and the texture 334. The recoloring processing unit 652 executes recoloring processing using the acquired information, and performs alignment of the texture 334 with respect to the geometry with compression distortion. Note that a method of the recoloring processing is arbitrary. For example, Meshlab's "Transfer: Vertex Attributes to Texture (1 or 2 meshes)" filter may be applied. The recoloring processing unit 652 supplies the texture 334 after the recoloring processing to the 2D encoding unit 318.

The texture 334 after the recoloring processing is encoded by the 2D encoding unit 318, and the encoded data is multiplexed with other data by the multiplexing unit 319. That is, the texture 334 after the recoloring processing is provided to the decoding side. Therefore, in the decoding device, since the texture in which the alignment is performed with respect to the compression distortion is obtained, the occurrence of so-called color deviation can be suppressed.

An example of a flow of an encoding process in this case will be described with reference to a flowchart in Fig. 35. When the encoding process is started, each process of steps S601 to S608 is performed similarly to each process of steps S301 to S306, S308, and S309 of Fig. 20.

In step S609, the 2D decoding unit 651 decodes the encoded data of the geometry image generated in step S607, and generates (restores) the geometry image. This geometry image includes compression distortion.

In step S610, the recoloring processing unit 652 executes recoloring processing using the geometry image generated (restored) in step S609 and the mesh data input to the encoding device 300. That is, the alignment of the texture 334 with respect to the geometry with the compression distortion is executed.

In step S611, the 2D encoding unit 318 encodes the texture image after the recoloring processing obtained by the process in step S610, and generates the encoded data. In step S612, the multiplexing unit 319 multiplexes the encoded data of the texture image after the recoloring processing generated in step S611 with the encoded data of the meta information, the encoded data of the geometry image, and the encoded data of the occupancy image to generate a bitstream.

When the process of step S612 ends, the encoding process ends.

By executing the encoding process in this manner, the encoding device 300 can provide the decoding side with the texture obtained by performing alignment on the geometry with the compression distortion. Therefore, in the decoding device, since the texture in which the alignment is performed with respect to the compression distortion is obtained, the occurrence of so-called color deviation can be suppressed.

## <6. Appendix>

### <3D Data>

Although the case where the present technology is applied to mesh encoding/decoding has been described above, the present technology is not limited to these examples, and can be applied to encoding/decoding of 3D data of an arbitrary standard. That is, as long as there is no contradiction with the present technology described above, specifications of various processes such as an encoding/decoding method and various types of data such as 3D data and metadata are arbitrary. Furthermore, in so far as there is no conflict with the present technology, part of the above-described processing or specifications may be omitted.

<Computer>

The above-described series of processing can be executed by hardware or software. When the series of processing is executed by software, a program constituting the software is installed in a computer. Here, the computer includes a computer incorporated in dedicated hardware, a general-purpose personal computer capable of executing various functions by installing various programs, and the like, for example.

Fig. 36 is a block diagram illustrating a configuration example of hardware of a computer that executes the above-described series of processing by a program.

In a computer 900 illustrated in Fig. 36, a central processing unit (CPU) 901, a read only memory (ROM) 902, and a random access memory (RAM) 903 are mutually connected via a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes a network interface, for example. The drive 915 drives a removable medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program, whereby the above-described series of processing is performed. The RAM 903 also appropriately stores data and the like necessary for the CPU 901 to execute various processes.

The program executed by the computer can be applied by being recorded on, for example, the removable medium 921 as a package medium or the like. In this case, the program can be installed in the storage unit 913 via the input/output interface 910 by attaching the removable medium 921 to the drive 915.

Furthermore, this program can also be provided via a wired or wireless transmission medium such as a local area network, the Internet, or digital satellite broadcasting. In this case, the program can be received by the communication unit 914 and installed in the storage unit 913.

In addition, this program can be installed in the ROM 902 or the storage unit 913 in advance.

<Applicable Target of Present Technology>

The present technology may be applied to an arbitrary configuration. For example, the present technology can be applied to various electronic devices.

Furthermore, for example, the present technology can also be implemented as a partial configuration of an apparatus, such as a processor (for example, a video processor) as a system large scale integration (LSI) or the like, a module (for example, a video module) using a plurality of processors or the like, a unit (for example, a video unit) using a plurality of modules or the like, or a set (for example, a video set) obtained by further adding other functions to a unit.

Furthermore, for example, the present technology can also be applied to a network system including a plurality of devices. For example, the present technology may be implemented as cloud computing shared and processed in cooperation by a plurality of devices via a network. For example, the present technology may be implemented in a cloud service that provides a service related to an image (moving image) to an arbitrary terminal such as a computer, an audio visual (AV) device, a portable information processing terminal, or an Internet of Things (IoT) device.

Note that, in the present specification, a system means a set of a plurality of components (devices, modules (parts), and the like), and it does not matter whether or not all the components are in the same housing. Consequently, both of a plurality of devices stored in different housings and connected via a network, and one device in which a plurality of modules is stored in one housing are systems.

Field and Application to Which Present Technology Is Applicable

The system, device, processing unit, and the like to which the present technology is applied may be used in arbitrary fields such as traffic, medical care, crime prevention, agriculture, livestock industry, mining, beauty care, factory, household appliance, weather, and natural surveillance, for example. Furthermore, any application thereof may be adopted.

<Others>

Note that, in the present specification, the "flag" is information for identifying a plurality of states, and includes not only information used for identifying two states of true (1) and false (0) but also information capable of identifying three or more states. Therefore, the value that may be taken by the "flag" may be, for example, a binary of 1/0 or a ternary or more. That is, the number of bits forming this "flag" is arbitrary, and may be one bit or a plurality of bits. Furthermore, identification information (including the flag) is assumed to include not only identification information thereof in a bitstream but also difference information of the identification information with respect to a certain reference information in the bitstream, and thus, in the present specification, the "flag" and "identification information" include not only the information thereof but also the difference information with respect to the reference information.

Furthermore, various kinds of information (such as metadata) related to encoded data (a bitstream) may be transmitted or recorded in any form as long as it is associated with the encoded data. Here, the term "associating" means, when processing one data, allowing other data to be used (to be linked), for example. That is, the data associated with each other may be collected as one data or may be made individual data. For example, information associated with the encoded data (image) may be transmitted on a transmission path different from that of the encoded data (image). Furthermore, for example, the information associated with the encoded data (image) may be recorded in a recording medium different from that of the encoded data (image) (or another recording area of the same recording medium). Note that, this "association" may be not the entire data but a part of data. For example, an image and information corresponding to the image may be associated with each other in any unit such as a plurality of frames, one frame, or a part within a frame.

Note that, in the present specification, terms such as "combine", "multiplex", "add", "integrate", "include", "store", "put in", "introduce", "insert", and the like mean, for example, to combine a plurality of objects into one, such as to combine encoded data and metadata into one data, and mean one method of "associating" described above.

Furthermore, embodiments of the present technology are not limited to the embodiments described above but can be modified in a wide variety of ways within a scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, a configuration other than the above-described configurations may be added to the configuration of each device (or each processing unit). Moreover, if the configuration and operation of the entire system are substantially the same, a part of the configuration of a certain device (or processing unit) may be included in the configuration of another device (or another processing unit).

Furthermore, for example, the above-described program may be executed in an arbitrary device. In that case, it is sufficient that the device has a necessary function (functional block or the like) and can obtain necessary information.

Furthermore, for example, each step of one flowchart may be executed by one device, or may be shared and executed by a plurality of devices. Furthermore, when a plurality of processes is included in one step, the plurality of processes may be executed by one device, or may be shared and executed by a plurality of devices. In other words, a plurality of processes included in one step can also be executed as processes of a plurality of steps. Conversely, the processing described as a plurality of steps can be collectively executed as one step.

Furthermore, for example, in the program executed by the computer, process of steps describing the program may be executed in time series in the order described in the present specification, or may be executed in parallel or individually at necessary timing such as when a call is made. That is, as long as there is no contradiction, the processing of each step may be executed in an order different from the above-described order. Furthermore, the process of steps describing this program may be executed in parallel with the processing of another program, or may be executed in combination with the processing of another program.

Furthermore, for example, a plurality of technologies related to the present technology can be implemented independently as a single body as long as there is no contradiction. Of course, a plurality of arbitrary present technologies can be implemented in combination. For example, part or all of the present technologies described in any of the embodiments can be implemented in combination with part or all of the present technologies described in other embodiments. Furthermore, part or all of any of the above-described present technologies can be implemented by using together with another technology that is not described above.

Note that the present technology can adopt the following configurations.

(1) An information processing apparatus including:

an image generation unit that generates a geometry image and an occupancy image by arranging a plurality of vertices on a two-dimensional plane so as to correspond to a UV map on the basis of position information of the plurality of vertices of a polygon and the UV map indicating a correspondence relationship between the plurality of vertices and a texture of the polygon; and

an encoding unit that encodes the UV map, connection information indicating a connection relationship between the plurality of vertices, the geometry image, the occupancy image, and the texture of the polygon.

(2) The information processing apparatus according to (1),

in which the image generation unit stores a depth value from a projection plane on which the plurality of vertices is projected to the vertex in a luminance component of the geometry image.

(3) The information processing apparatus according to (2), further including

a conversion information generation unit that generates conversion information for converting a position of the vertex in the geometry image into a position on the projection plane,
in which the encoding unit further encodes the conversion information.

(4) The information processing apparatus according to (3),
in which the conversion information includes difference information indicating a difference between the position of the vertex in the geometry image and the position of the vertex in the projection plane.
(5) The information processing apparatus according to (4),
in which the conversion information includes a difference value between the vertices of the difference information.
(6) The information processing apparatus according to any one of (3) to (5), in which the image generation unit stores the conversion information in a color component of the geometry image.
(7) The information processing apparatus according to any one of (3) to (6),
in which the encoding unit encodes the conversion information as data different from the geometry image.
(8) The information processing apparatus according to any one of (2) to (7), further including

a patch image generation unit that generates a single patch or a plurality of patches by using the plurality of vertices corresponding to a small region of the texture arranged on the two-dimensional plane as a continuous region, projects each the patch onto the projection plane, and generates a patch image,
in which the image generation unit generates the geometry image and the occupancy image by arranging the patch image on the two-dimensional plane such that the plurality of vertices corresponds to the UV map.

(9) The information processing apparatus according to (8),
in which the patch image generation unit sets the projection plane on which the patch is projected on the basis of a normal vector of the polygon corresponding to the patch.
(10) The information processing apparatus according to any one of (1) to (9),

in which the image generation unit stores relative coordinates of the vertex from a reference point of a patch bounding box in the geometry image, and
the patch bounding box is a three-dimensional region that is formed for each patch obtained by dividing 3D data using the polygon and includes the patch.

(11) The information processing apparatus according to (10),
in which the image generation unit stores the relative coordinates of each vertex in the geometry image as a pixel value of a pixel corresponding to the vertex.
(12) The information processing apparatus according to (10) or (11),
in which the image generation unit stores each component of the relative coordinates of each vertex in each component of the geometry image.
(13) The information processing apparatus according to any one of (10) to (12),
in which the reference point is a point at which each component of coordinates of the patch bounding box has a minimum value.
(14) The information processing apparatus according to any one of (10) to (13), further including
a patch information generation unit that generates patch information that is information regarding the patch, and stores information indicating a position and a size of the patch bounding box in the patch information.
(15) The information processing apparatus according to any one of (1) to (14),

in which when a plurality of the vertex corresponds to one pixel in the geometry image, the image generation unit stores position information of a representative vertex among the plurality of vertices in the geometry image, the information processing apparatus further including
a patch information generation unit that generates patch information that is information regarding a patch obtained by dividing 3D data using the polygon, and stores position information of vertices other than the representative vertex among the plurality of vertices in the patch information.

(16) The information processing apparatus according to (15),
in which the patch information generation unit stores position information of each vertex other than the representative vertex among the plurality of vertices in the patch information in association with identification information of the vertex.
(17) The information processing apparatus according to (15) or (16),
in which the position information includes a depth value from a projection plane on which the vertex is projected to the vertex, and difference information indicating a difference between a position of the vertex in the geometry image and a position of the vertex in the projection plane.

(18) The information processing apparatus according to (15) or (16),

in which the position information includes relative coordinates of the vertex from a reference point of a patch bounding box, and
the patch bounding box is a three-dimensional region that is formed for each patch obtained by dividing 3D data using the polygon and includes the patch.

(19) The information processing apparatus according to any one of (1) to (18), further including

a patch image generation unit that generates a single patch or a plurality of patches by using the plurality of vertices corresponding to a small region of the texture arranged on the two-dimensional plane as a continuous region, projects the patch onto a projection plane for each patch, and generates a patch image,
in which the image generation unit generates the geometry image and the occupancy image by arranging the patch image on the two-dimensional plane such that the plurality of vertices corresponds to the UV map, and
when a plurality of the patch is generated for one small region of the texture, the patch image generation unit derives position information of a boundary vertex located at a boundary of the patch in any one of the plurality of the patch.

(20) The information processing apparatus according to (19), further including
a patch information generation unit that generates patch information that is information regarding the patch and stores information indicating in which patch the position information of the boundary vertex has been derived.

(21) The information processing apparatus according to (19),
in which the patch image generation unit derives the position information of the boundary vertex in the patch selected on the basis of a processing order.

(22) The information processing apparatus according to any one of (1) to (21), further including

a decoding unit that decodes encoded data of the geometry image generated by the encoding unit; and
a recoloring processing unit that performs recoloring processing of the texture using the geometry image generated by the decoding unit,
in which the encoding unit encodes the texture after the recoloring processing.

(23) An information processing method including:

generating a geometry image and an occupancy image by arranging a plurality of vertices on a two-dimensional plane so as to correspond to a UV map on the basis of position information of the plurality of vertices of a polygon and the UV map indicating a correspondence relationship between the plurality of vertices and a texture of the polygon; and
encoding the UV map, connection information indicating a connection relationship between the plurality of vertices, the geometry image, the occupancy image, and the texture of the polygon.

(31) An information processing apparatus including:

a decoding unit that decodes encoded data and generates a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane; and
a reconstruction unit that reconstructs position information of the plurality of vertices in a three-dimensional space on the basis of the UV map, the geometry image, and the occupancy image.

(32) The information processing apparatus according to (31),
in which a depth value from a projection plane on which the plurality of vertices is projected to the vertex is stored in a luminance component of the geometry image.

(33) The information processing apparatus according to (32),

in which the decoding unit decodes the encoded data and further generates conversion information for converting a position of the vertex in the geometry image into a position on the projection plane, and
the reconstruction unit
reconstructs the vertex on the projection plane from the geometry image using the occupancy image and the conversion information, and
reconstructs position information of the plurality of vertices in a three-dimensional space using the vertex and the depth value on the projection plane reconstructed.

(34) The information processing apparatus according-

ing to (33),
in which the conversion information includes difference information indicating a difference between the position of the vertex in the geometry image and the position of the vertex in the projection plane.
(35) The information processing apparatus according to (34),
in which the conversion information includes a difference value between the vertices of the difference information.
(36) The information processing apparatus according to any one of (33) to (35),
in which the conversion information is stored in a color component of the geometry image.
(37) The information processing apparatus according to any one of (33) to (36),
in which the decoding unit decodes the encoded data and generates the conversion information encoded as data different from the geometry image.
(38) The information processing apparatus according to any one of (33) to (37),
in which the reconstruction unit reconstructs, from the geometry image, the vertex on the projection plane on which the plurality of vertices corresponding to a small region of the texture arranged on the two-dimensional plane as a continuous region is projected for each patch, using the occupancy image and the conversion information.
(39) The information processing apparatus according to (38),
in which the reconstruction unit reconstructs the vertex on the projection plane set on the basis of a normal vector of the polygon corresponding to the patch.
(40) The information processing apparatus according to any one of (31) to (39),

in which the reconstruction unit reconstructs the position information of the vertex in the three-dimensional space by using relative coordinates of the vertex from a reference point of a patch bounding box, the relative coordinates being included in the geometry image, and
the patch bounding box is a three-dimensional region that is formed for each patch obtained by dividing 3D data using the polygon and includes the patch.

(41) The information processing apparatus according to (40),
in which the relative coordinates are stored in the geometry image as a pixel value of a pixel corresponding to the vertex.
(42) The information processing apparatus according to (40) or (41),
in which each component of the relative coordinates is stored in each component of the geometry image.
(43) The information processing apparatus according to any one of (40) to (42),
in which the reference point is a point at which each component of coordinates of the patch bounding box has a minimum value.
(44) The information processing apparatus according to any one of (40) to (43),
in which the decoding unit decodes the encoded data, and generates patch information that is information regarding the patch and stores information indicating a position and a size of the patch bounding box.
(45) The information processing apparatus according to any one of (31) to (44),
in which the reconstruction unit reconstructs three-dimensional position information for a plurality of the vertex corresponding to one pixel of the geometry image by using position information stored in the geometry image and position information stored in patch information that is information regarding a patch obtained by dividing 3D data using the polygon.
(46) The information processing apparatus according to (45),
in which the patch information stores the position information in association with identification information of the vertex.
(47) The information processing apparatus according to (45) or (46),
in which the position information includes a depth value from a projection plane on which the vertex is projected to the vertex, and difference information indicating a difference between a position of the vertex in the geometry image and a position of the vertex in the projection plane.
(48) The information processing apparatus according to (45) or (46),

in which the position information includes relative coordinates of the vertex from a reference point of a patch bounding box, and
the patch bounding box is a three-dimensional region that is formed for each patch obtained by dividing 3D data using the polygon and includes the patch.

(49) The information processing apparatus according to any one of (31) to (48),
in which the reconstruction unit reconstructs three-dimensional position information of a boundary vertex located at a boundary of a plurality of patches corresponding to one small region of the texture arranged on the two-dimensional plane as a continuous region, using position information derived in any one of the plurality of patches.
(50) The information processing apparatus according to (49),
in which the reconstruction unit reconstructs the three-dimensional position information using the position information derived in the patch indicated in the patch information that is information regarding the patch.

(51) The information processing apparatus according to (49),

in which the reconstruction unit reconstructs the three-dimensional position information using the position information derived in the patch according to a processing order.

(52) An information processing method including:

decoding encoded data and generating a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane; and

reconstructing position information of the plurality of vertices in a three-dimensional space on the basis of the UV map, the geometry image, and the occupancy image.

REFERENCE SIGNS LIST

| | |
|---|---|
| 300 | Encoding device |
| 311 | Mesh voxelization unit |
| 312 | Patch generation unit |
| 313 | Geometry image generation unit |
| 314 | Occupancy image generation unit |
| 315 | Meta information encoding unit |
| 316 to 318 | 2D encoding unit |
| 319 | Multiplexing unit |
| 321 | Image generation unit |
| 322 | Encoding unit |
| 351 | Patch separation unit |
| 352 | Patch projection unit |
| 353 | Offset derivation unit |
| 354 | Patch image generation unit |
| 400 | Decoding device |
| 411 | Demultiplexing unit |
| 412 | Meta information decoding unit |
| 413 to 415 | 2D decoding unit |
| 416 | Vertex position derivation unit |
| 417 | Patch reconstruction unit |
| 418 | Vertex information reconstruction unit |
| 501 | Patch |
| 502 | Patch bounding box |
| 503 | Geometry image |
| 504 | Patch image |
| 551 | Patch separation unit |
| 552 | Patch bounding box setting unit |
| 553 | Patch information generation unit |
| 554 | Patch image generation unit |
| 601 | Patch information |
| 621 to 623 | Patch image |
| 630 | Geometry image |
| 631 and 632 | Patch image |
| 651 | 2D decoding unit |
| 652 | Recoloring processing unit |
| 900 | Computer |

**Claims**

1. An information processing apparatus comprising:

an image generation unit that generates a geometry image and an occupancy image by arranging a plurality of vertices on a two-dimensional plane so as to correspond to a UV map on a basis of position information of the plurality of vertices of a polygon and the UV map indicating a correspondence relationship between the plurality of vertices and a texture of the polygon; and

an encoding unit that encodes the UV map, connection information indicating a connection relationship between the plurality of vertices, the geometry image, the occupancy image, and the texture of the polygon.

2. The information processing apparatus according to claim 1,

wherein the image generation unit stores a depth value from a projection plane on which the plurality of vertices is projected to the vertex in a luminance component of the geometry image.

3. The information processing apparatus according to claim 2, further comprising

a conversion information generation unit that generates conversion information for converting a position of the vertex in the geometry image into a position on the projection plane,

wherein the encoding unit further encodes the conversion information.

4. The information processing apparatus according to claim 3,

wherein the conversion information includes difference information indicating a difference between the position of the vertex in the geometry image and the position of the vertex in the projection plane.

5. The information processing apparatus according to claim 4,

wherein the conversion information includes a difference value between the vertices of the difference information.

**6.** The information processing apparatus according to claim 3,
wherein the image generation unit stores the conversion information in a color component of the geometry image.

**7.** The information processing apparatus according to claim 3,
wherein the encoding unit encodes the conversion information as data different from the geometry image.

**8.** The information processing apparatus according to claim 2, further comprising

a patch image generation unit that generates a single patch or a plurality of patches by using the plurality of vertices corresponding to a small region of the texture arranged on the two-dimensional plane as a continuous region, projects each the patch onto the projection plane, and generates a patch image,
wherein the image generation unit generates the geometry image and the occupancy image by arranging the patch image on the two-dimensional plane such that the plurality of vertices corresponds to the UV map.

**9.** The information processing apparatus according to claim 8,
wherein the patch image generation unit sets the projection plane on which the patch is projected on a basis of a normal vector of the polygon corresponding to the patch.

**10.** An information processing method comprising:

generating a geometry image and an occupancy image by arranging a plurality of vertices on a two-dimensional plane so as to correspond to a UV map on a basis of position information of the plurality of vertices of a polygon and the UV map indicating a correspondence relationship between the plurality of vertices and a texture of the polygon; and
encoding the UV map, connection information indicating a connection relationship between the plurality of vertices, the geometry image, the occupancy image, and the texture of the polygon.

**11.** An information processing apparatus comprising:

a decoding unit that decodes encoded data and generates a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane; and
a reconstruction unit that reconstructs position information of the plurality of vertices in a three-dimensional space on a basis of the UV map, the geometry image, and the occupancy image.

**12.** The information processing apparatus according to claim 11,
wherein a depth value from a projection plane on which the plurality of vertices is projected to the vertex is stored in a luminance component of the geometry image.

**13.** The information processing apparatus according to claim 12,

wherein the decoding unit decodes the encoded data and further generates conversion information for converting a position of the vertex in the geometry image into a position on the projection plane, and
the reconstruction unit
reconstructs the vertex on the projection plane from the geometry image using the occupancy image and the conversion information, and
reconstructs position information of the plurality of vertices in a three-dimensional space using the vertex and the depth value on the projection plane reconstructed.

**14.** The information processing apparatus according to claim 13,
wherein the conversion information includes difference information indicating a difference between the position of the vertex in the geometry image and the position of the vertex in the projection plane.

**15.** The information processing apparatus according to claim 14,
wherein the conversion information includes a difference value between the vertices of the difference information.

**16.** The information processing apparatus according to claim 13,
wherein the conversion information is stored in a color component of the geometry image.

**17.** The information processing apparatus according to claim 13,
wherein the decoding unit decodes the encoded data and generates the conversion information encoded as data different from the geometry image.

**18.** The information processing apparatus according to claim 13, wherein the reconstruction unit reconstructs, from the geometry image, the vertex on the projection plane on which the plurality of vertices corresponding to a small region of the texture arranged on the two-dimensional plane as a continuous region is projected for each patch, using the occupancy image and the conversion information.

**19.** The information processing apparatus according to claim 18,
wherein the reconstruction unit reconstructs the vertex on the projection plane set on a basis of a normal vector of the polygon corresponding to the patch.

**20.** An information processing method comprising:

decoding encoded data and generating a UV map indicating a correspondence relationship between a plurality of vertices of a polygon and a texture of the polygon, connection information indicating a connection relationship between the plurality of vertices, a geometry image in which the plurality of vertices is arranged on a two-dimensional plane so as to correspond to the UV map, an occupancy image corresponding to the geometry image, and a texture image in which the texture is arranged on the two-dimensional plane; and
reconstructing position information of the plurality of vertices in a three-dimensional space on a basis of the UV map, the geometry image, and the occupancy image.

FIG. 1

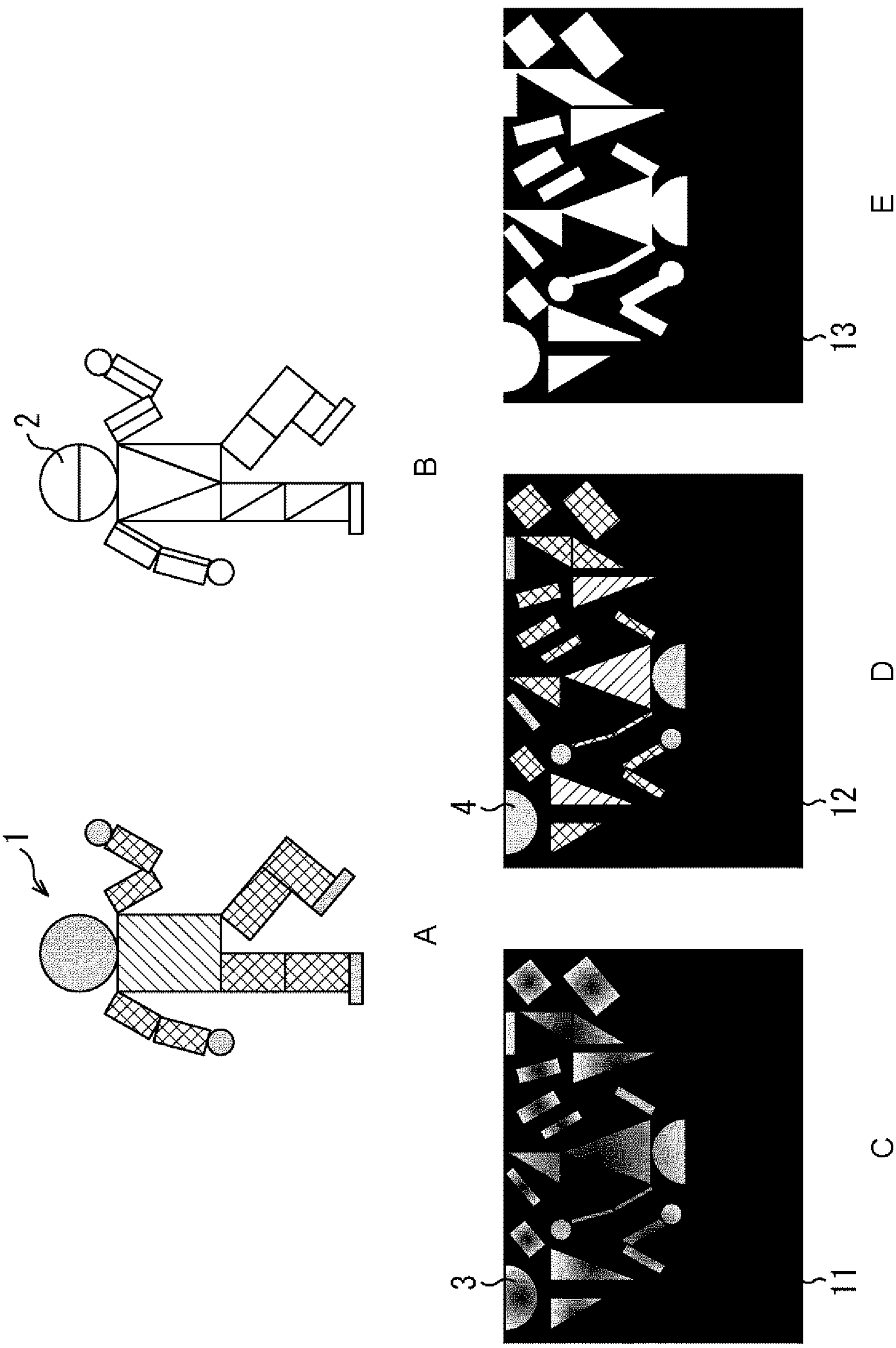

FIG. 2

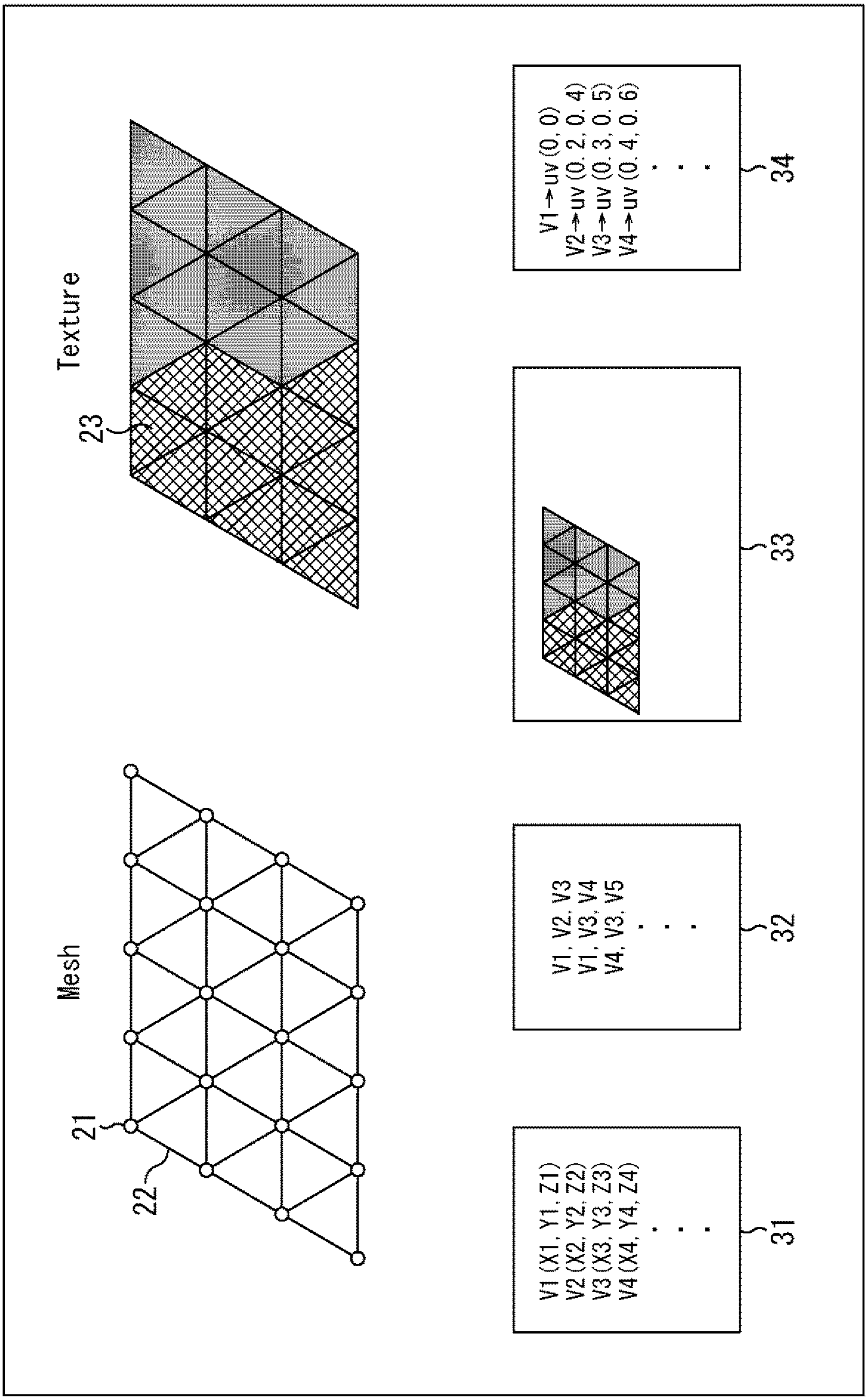
Mesh
21
22
Texture
23
V1 (X1, Y1, Z1)
V2 (X2, Y2, Z2)
V3 (X3, Y3, Z3)
V4 (X4, Y4, Z4)
31
V1, V2, V3
V1, V3, V4
V4, V3, V5
32
33
V1→uv (0, 0)
V2→uv (0. 2, 0. 4)
V3→uv (0. 3, 0. 5)
V4→uv (0. 4, 0. 6)
34

FIG. 3

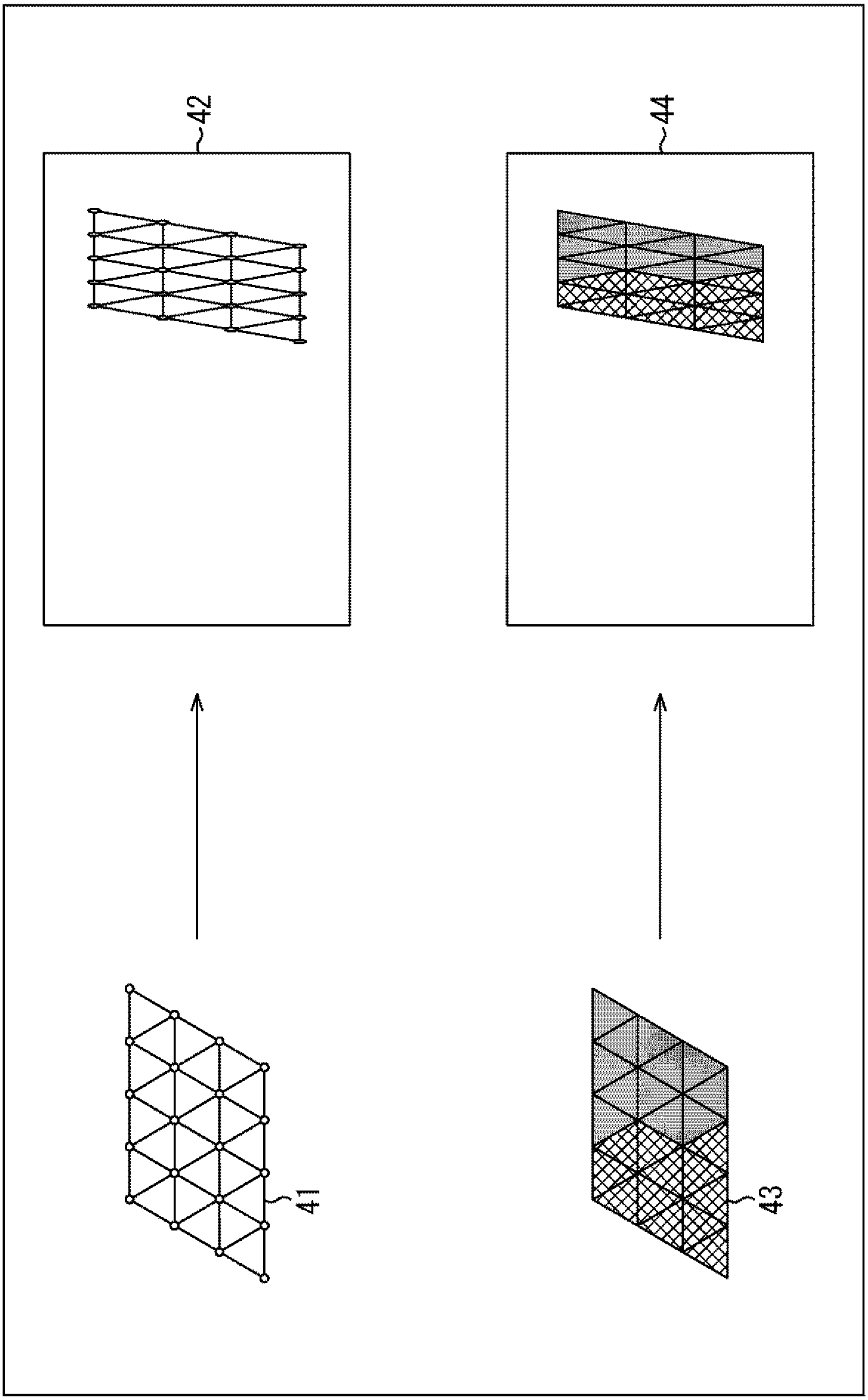

FIG. 4

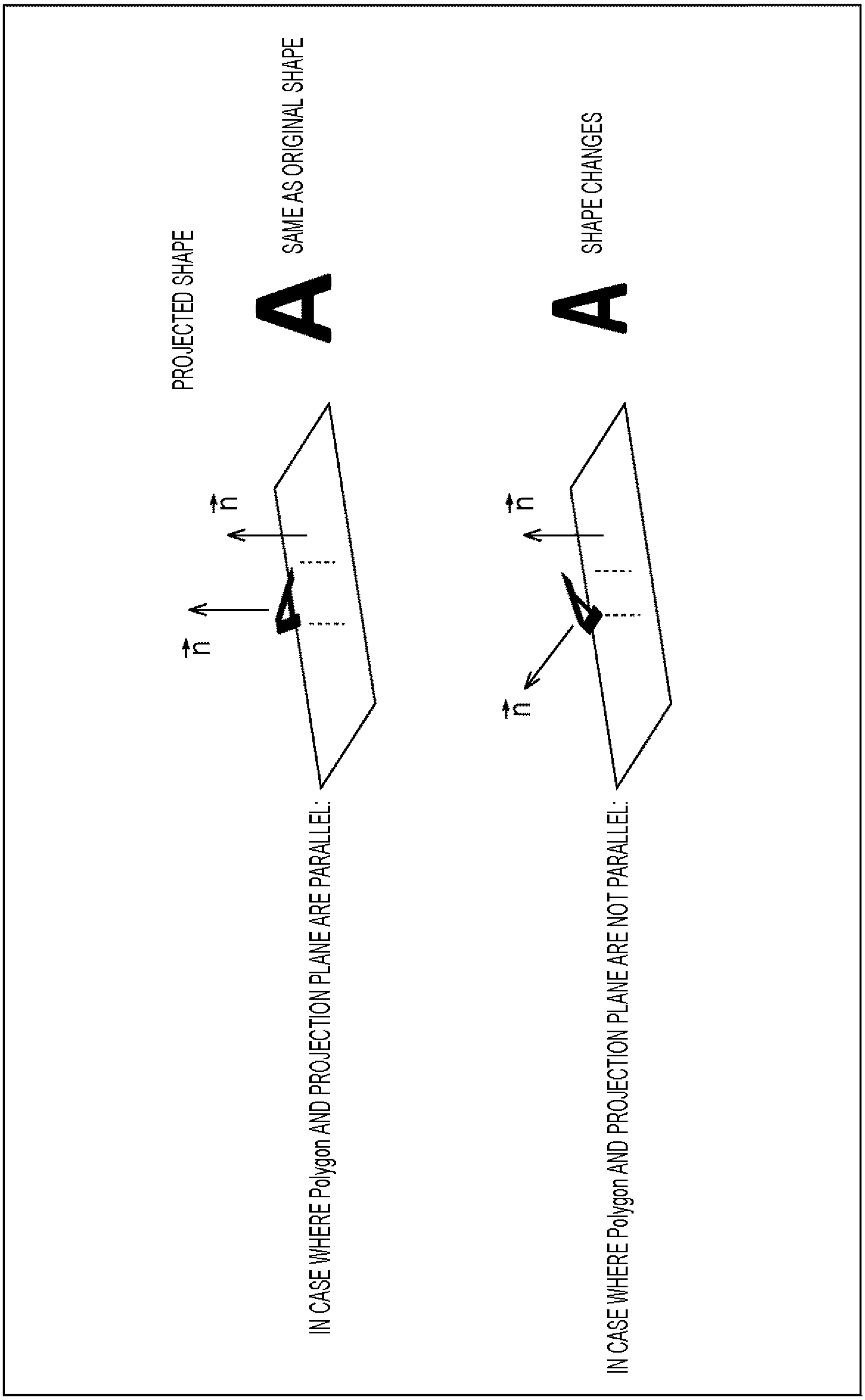
PROJECTED SHAPE
IN CASE WHERE Polygon AND PROJECTION PLANE ARE PARALLEL:
SAME AS ORIGINAL SHAPE
IN CASE WHERE Polygon AND PROJECTION PLANE ARE NOT PARALLEL:
SHAPE CHANGES

# FIG. 5

| | |
|---|---|
| METHOD 1 | PATCH OF GEOMETRY IS GENERATED ON BASIS OF SHAPE OF TEXTURE |
| METHOD 1－1 | PATCH IS GENERATED BY DIVIDING SMALL REGION OF TEXTURE |
| METHOD 1－2 | PROJECTION PLANE IS SET ON BASIS OF VERTICES INCLUDED IN PATCH |
| METHOD 1－2－1 | PROJECTION PLANE IS SET ON BASIS OF NORMAL VECTOR OF POLYGON |
| METHOD 1－2－1－1 | PROJECTION PLANE IS SET ON BASIS OF NORMAL VECTOR OF POLYGON AVERAGE |
| METHOD 1－2－1－2 | PROJECTION PLANE IS SET ON BASIS OF NORMAL VECTOR OF REPRESENTATIVE POLYGON |
| METHOD 1－2－2 | PROJECTION PLANE IS SET ON BASIS OF BOUNDING BOX |
| METHOD 1－2－2－1 | DIRECTION OF SHORTEST SIDE IS USED AS NORMAL VECTOR OF PROJECTION PLANE |
| METHOD 1－2－2－2 | MSE OF DEPTH VALUE TO EACH SURFACE OF BOUNDING BOX IS CALCULATED, AND SURFACE WITH SMALLEST MSE IS USED AS PROJECTION PLANE |
| METHOD 1－3 | DEPTH VALUE IS STORED AT VERTEX POSITION OF GEOMETRY IMAGE OF TEXEL GRID |
| METHOD 1－3－1 | DEPTH VALUE OR THE LIKE COMPLEMENTED FROM ADJACENT VERTEX IS STORED IN ADDITION TO VERTEX POSITION IN PATCH |
| METHOD 1－3－2 | CONVERSION INFORMATION FOR RESTORING DEPTH VALUE TO VOXEL GRID IS STORED |
| METHOD 1－3－2－1 | CONVERSION INFORMATION: (dx, dy) IS STORED |
| METHOD 1－3－2－2 | CONVERSION INFORMATION: DIFFERENCE VALUE FROM (dx, dy) OF ANOTHER VERTEX IS STORED |
| METHOD 1－3－2－3 | CONVERSION INFORMATION: SCALE VALUE (sx, sy) FOR EACH PATCH IS APPLIED |
| METHOD 1－3－2－4 | CONVERSION INFORMATION IS STORED IN CHROMA OF GEOMETRY IMAGE |
| METHOD 1－3－2－5 | CONVERSION INFORMATION IS STORED IN BITSTREAM AS INFORMATION DIFFERENT FROM GEOMETRY IMAGE |
| METHOD 1－4 | ANGLE θ AND (dx, dy) FROM ADJACENT POLYGONS ARE STORED INSTEAD OF DEPTH VALUE AND CONVERSION INFORMATION |
| METHOD 1－5 | SWITCHING TO ANOTHER PATCH MODE IS ENABLED |

FIG. 6

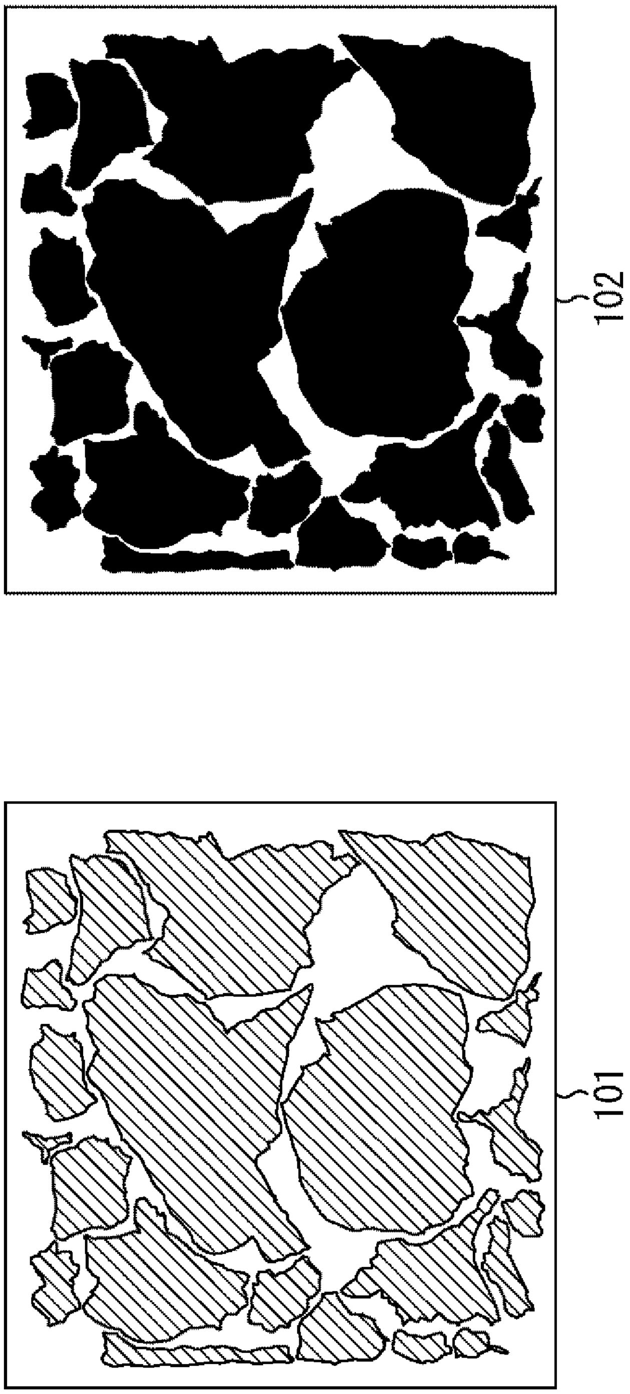

FIG. 7

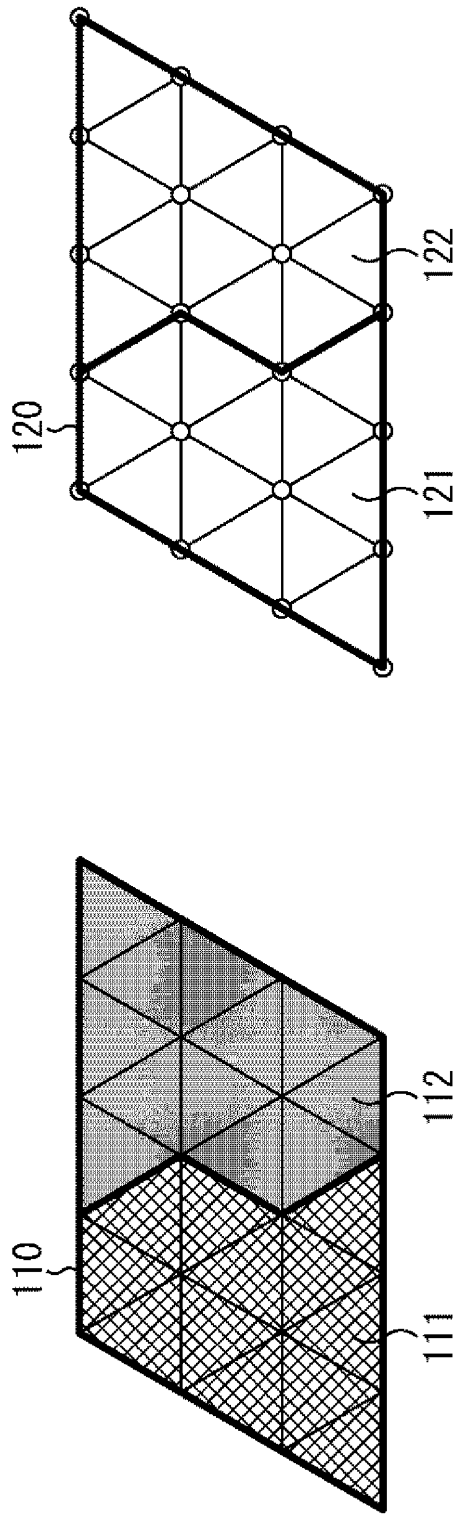

FIG. 8

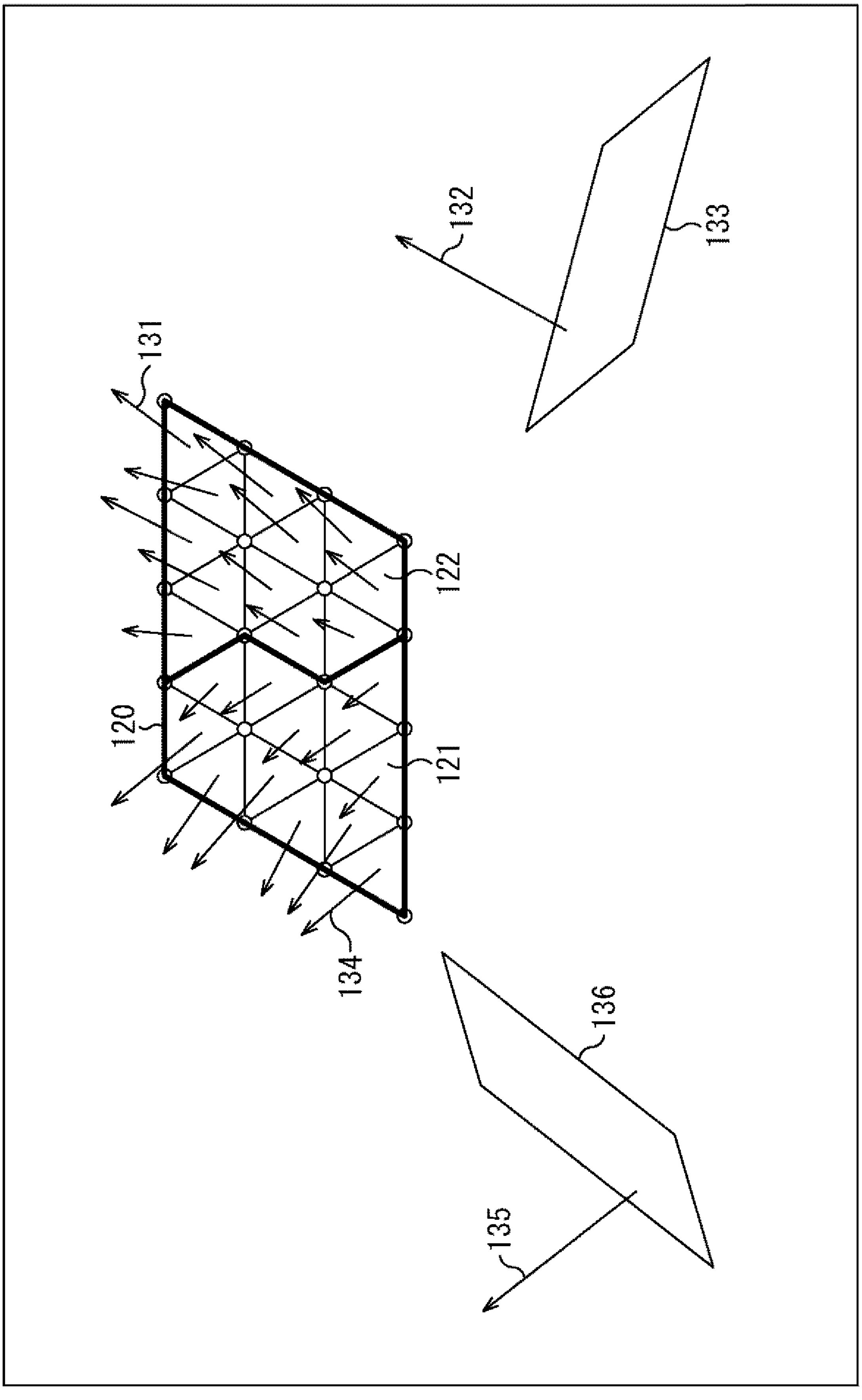

FIG. 9

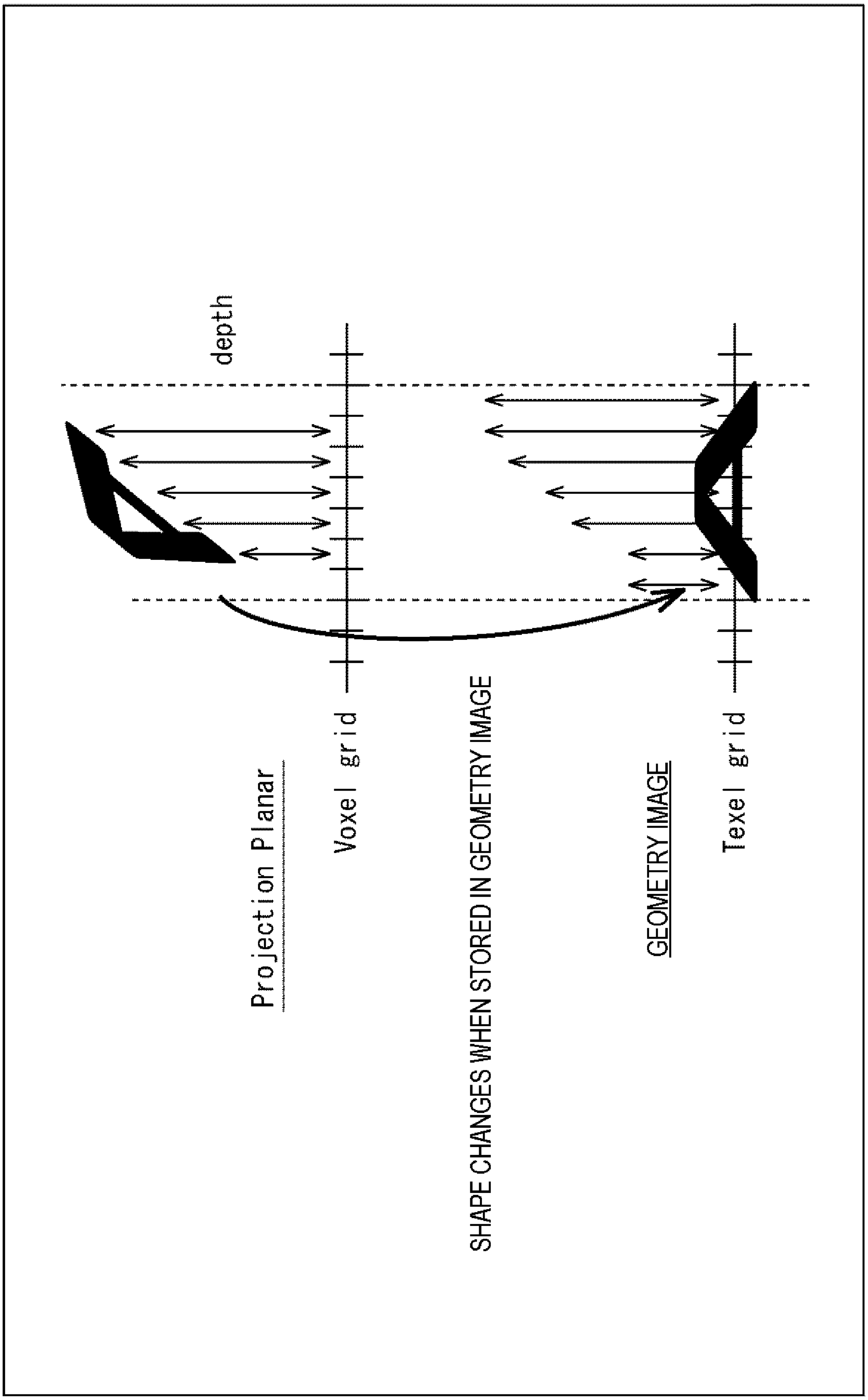
Projection Planar
Voxel grid
depth
SHAPE CHANGES WHEN STORED IN GEOMETRY IMAGE
GEOMETRY IMAGE
Texel grid

FIG. 10

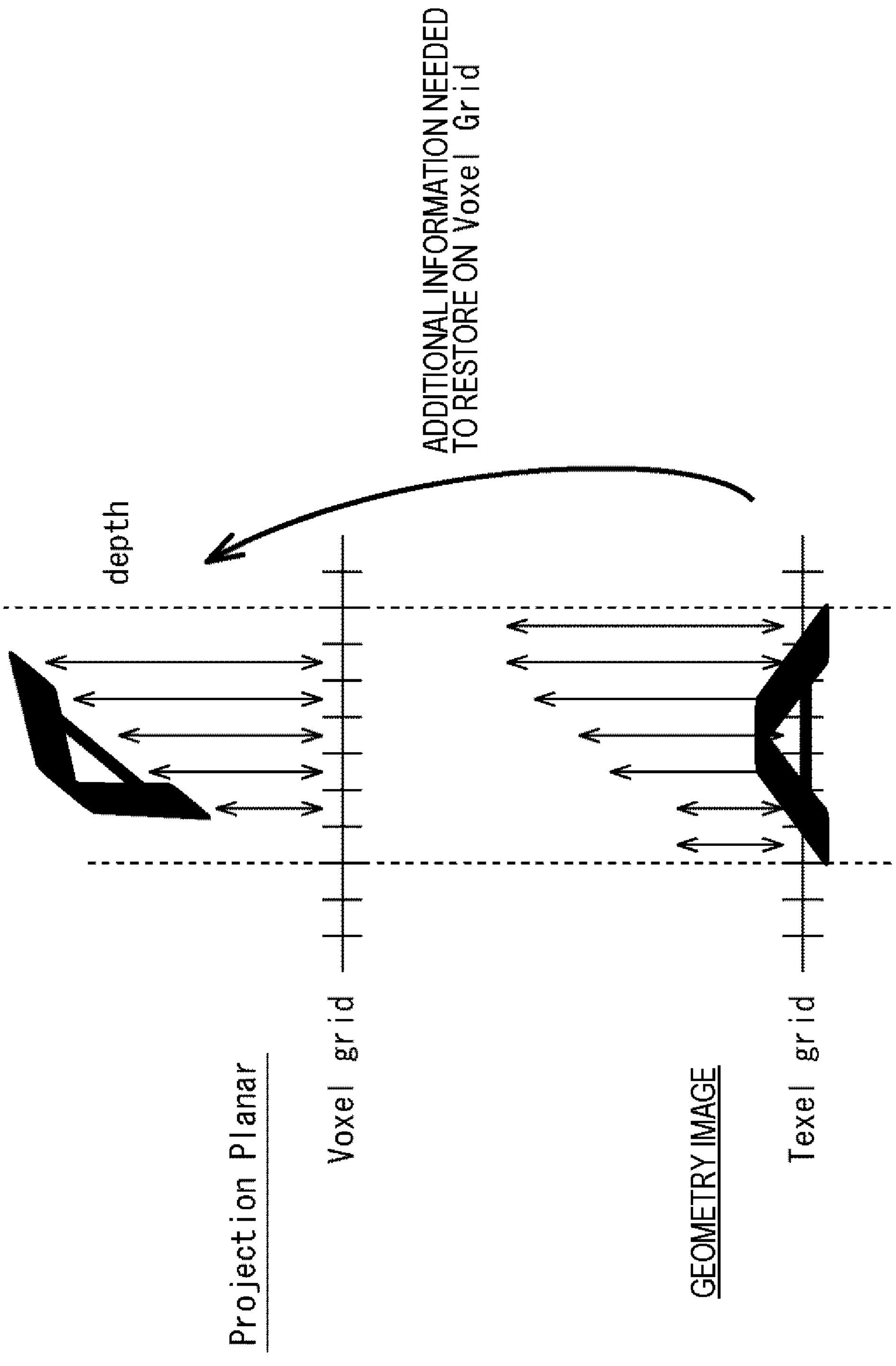
Projection Planar
Voxel grid
depth
GEOMETRY IMAGE
Texel grid
ADDITIONAL INFORMATION NEEDED
TO RESTORE ON Voxel Grid

FIG. 11

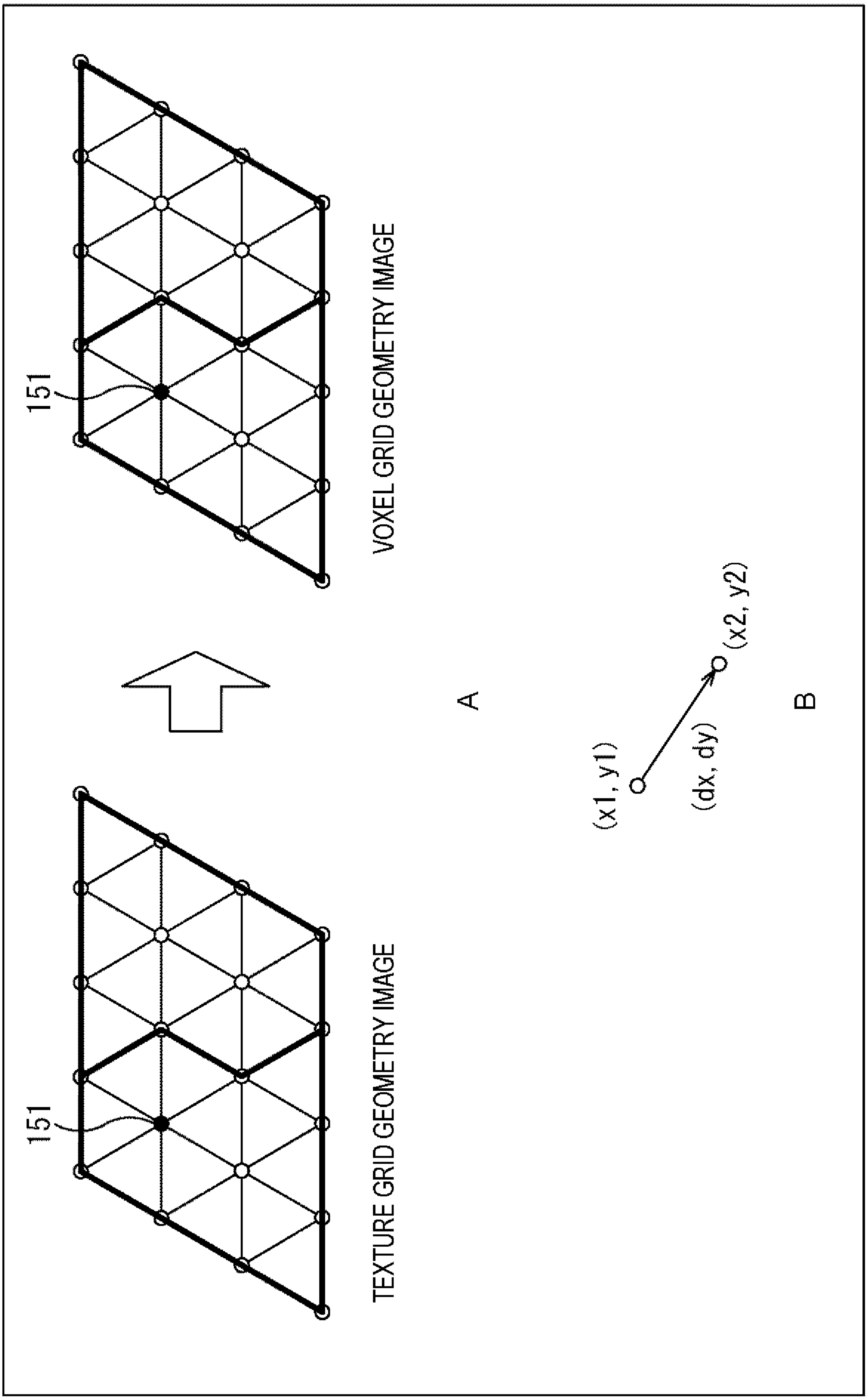
151
TEXTURE GRID GEOMETRY IMAGE
151
VOXEL GRID GEOMETRY IMAGE
A
(x1, y1)
(dx, dy)
(x2, y2)
B

FIG. 12

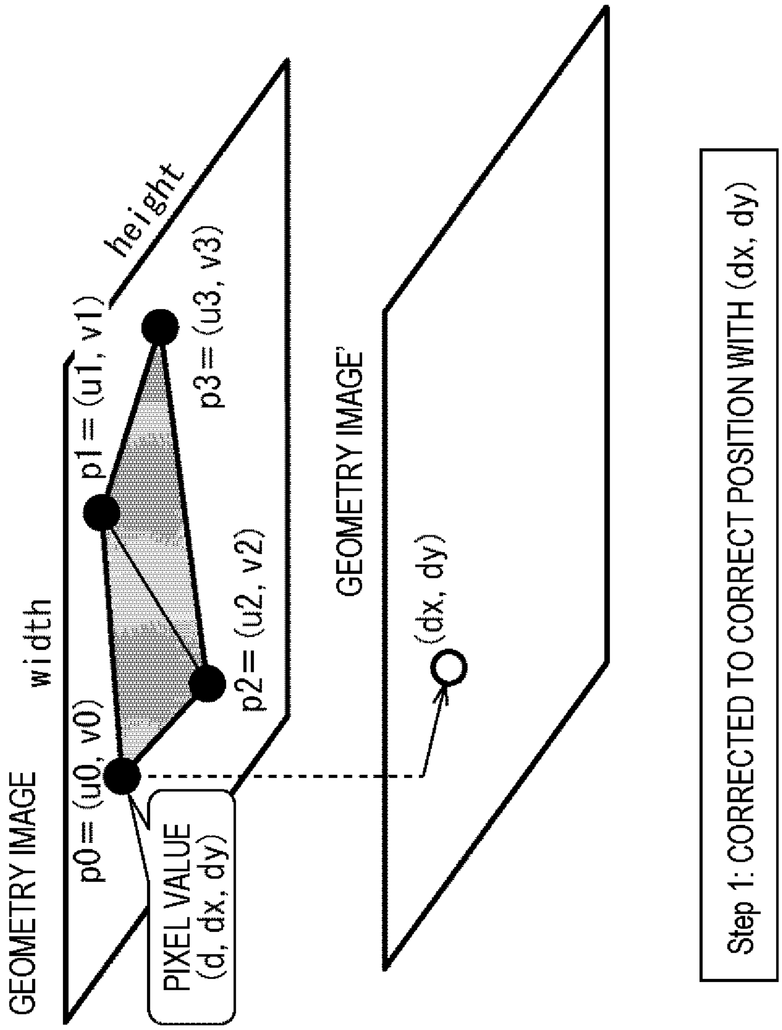
GEOMETRY IMAGE
width
height
p0=(u0, v0)
p1=(u1, v1)
p2=(u2, v2)
p3=(u3, v3)
PIXEL VALUE
(d, dx, dy)
GEOMETRY IMAGE'
(dx, dy)
Step 1: CORRECTED TO CORRECT POSITION WITH (dx, dy)

FIG. 13

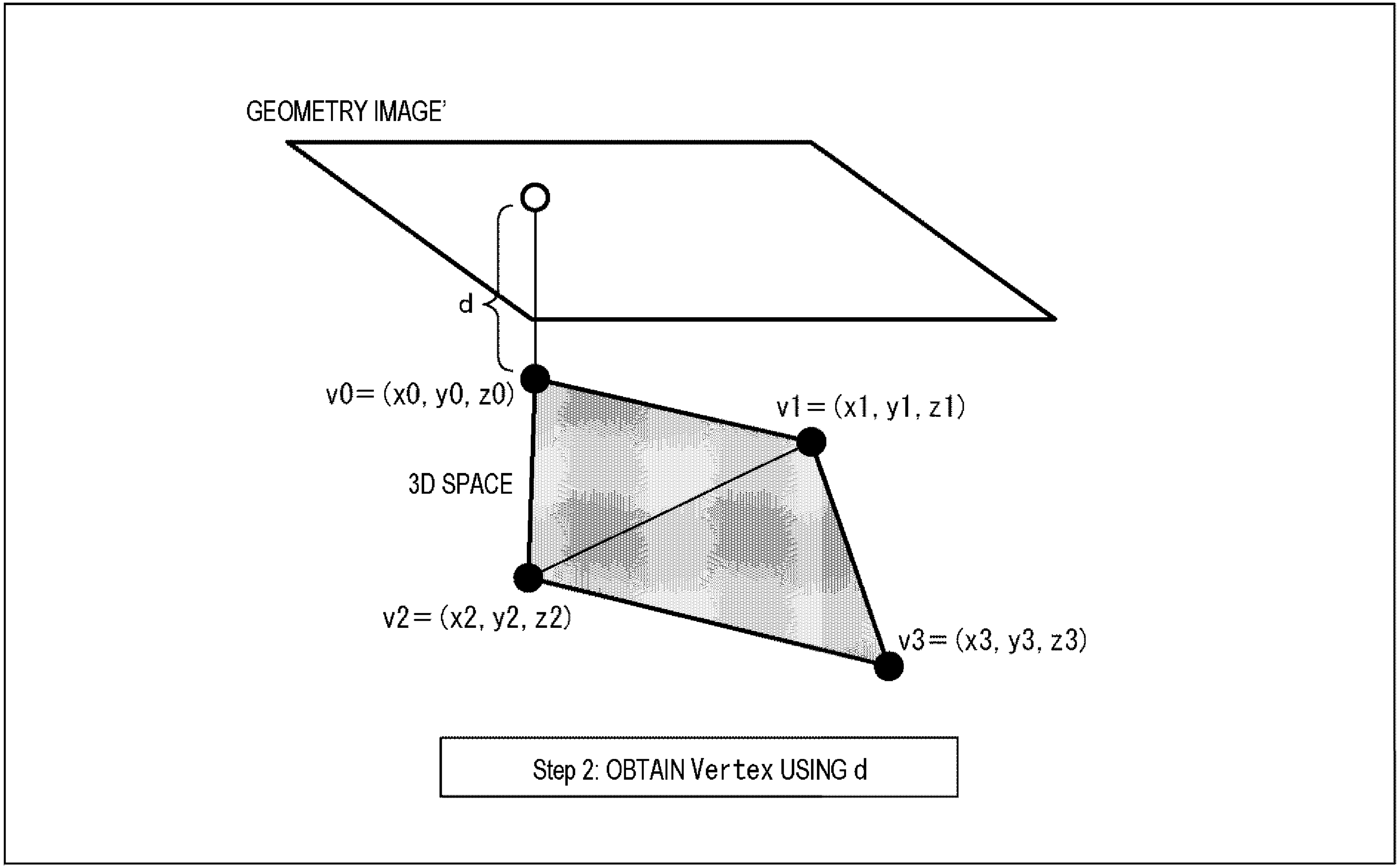
GEOMETRY IMAGE'
d
v0=(x0, y0, z0)
v1=(x1, y1, z1)
3D SPACE
v2=(x2, y2, z2)
v3=(x3, y3, z3)
Step 2: OBTAIN Vertex USING d

# FIG. 14

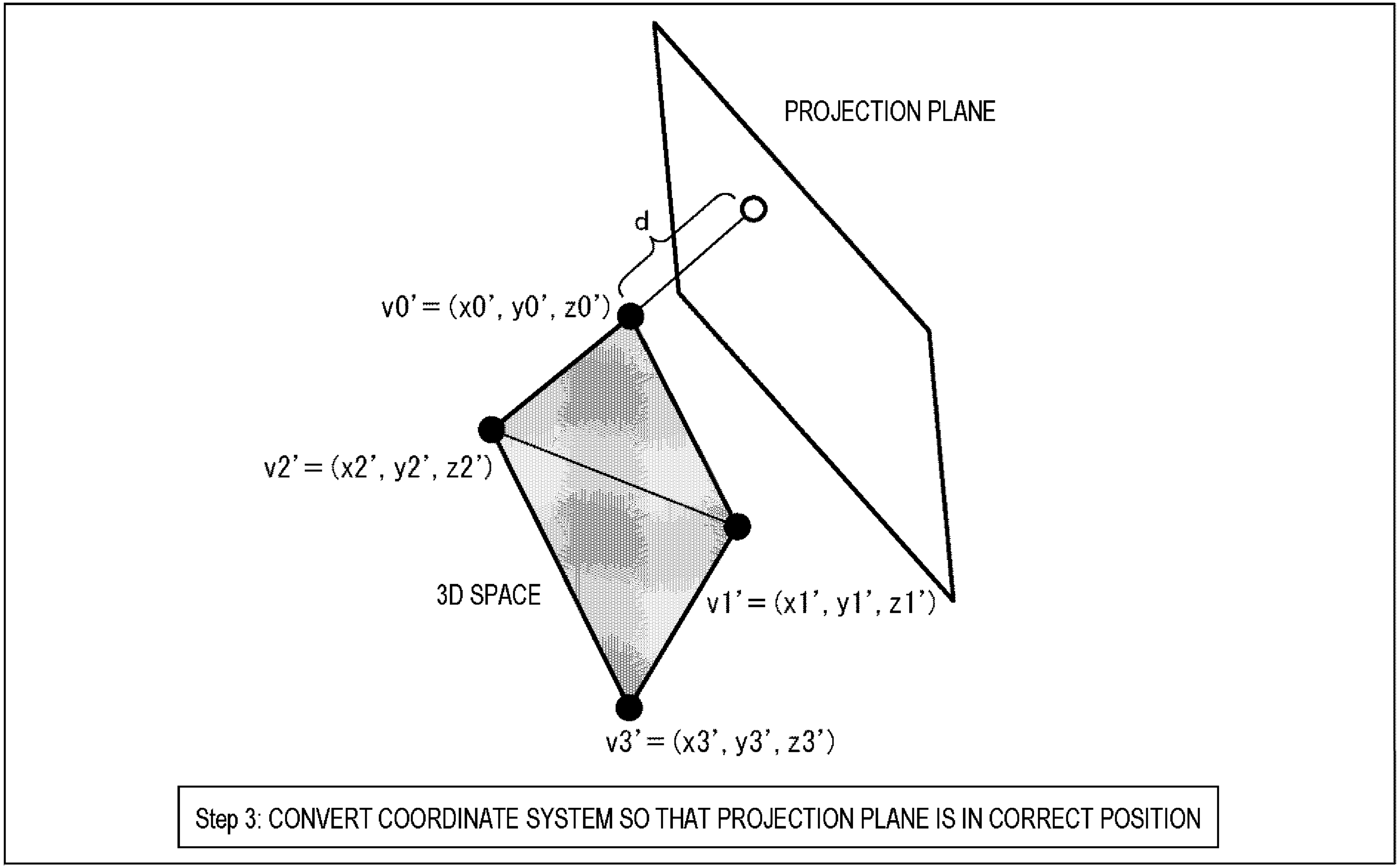
PROJECTION PLANE
d
v0' = (x0', y0', z0')
v2' = (x2', y2', z2')
v1' = (x1', y1', z1')
3D SPACE
v3' = (x3', y3', z3')
Step 3: CONVERT COORDINATE SYSTEM SO THAT PROJECTION PLANE IS IN CORRECT POSITION

FIG. 15

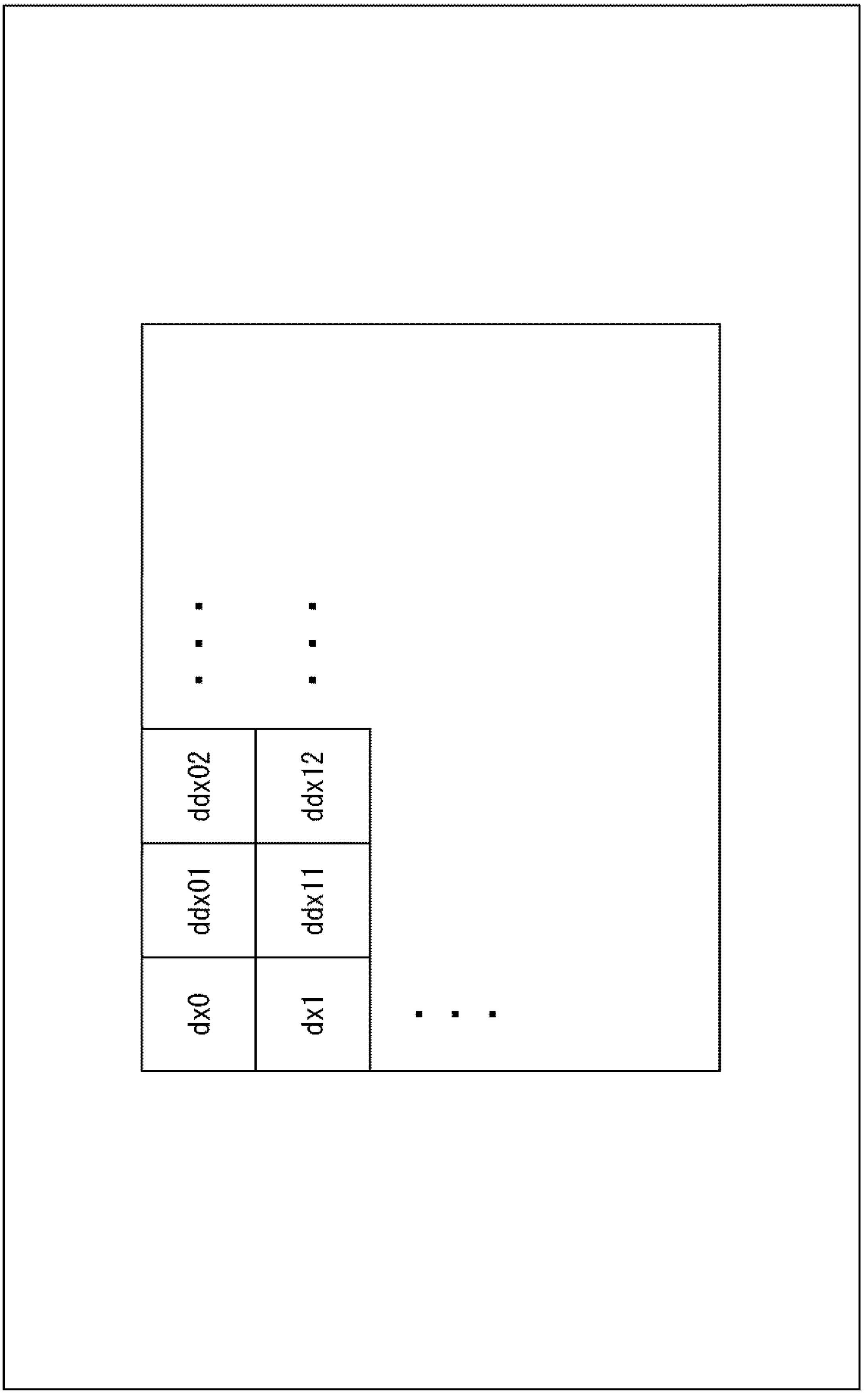

FIG. 16

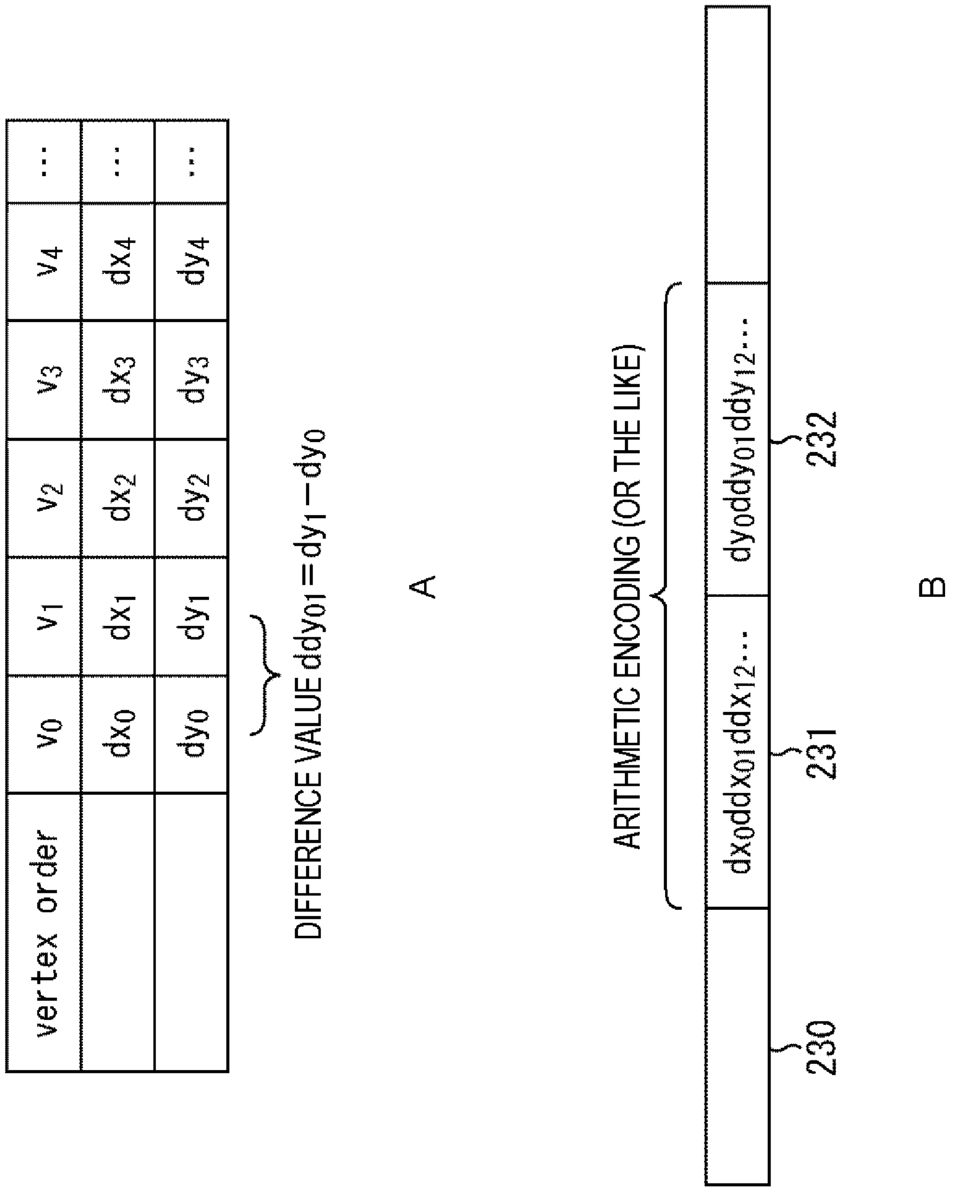
vertex order
v0
v1
v2
v3
v4
...
dx0
dx1
dx2
dx3
dx4
dy0
dy1
dy2
dy3
dy4
DIFFERENCE VALUE ddy01 = dy1 − dy0
A
ARITHMETIC ENCODING (OR THE LIKE)
dx0ddx01ddx12...
dy0ddy01ddy12...
230
231
232
B

FIG. 17

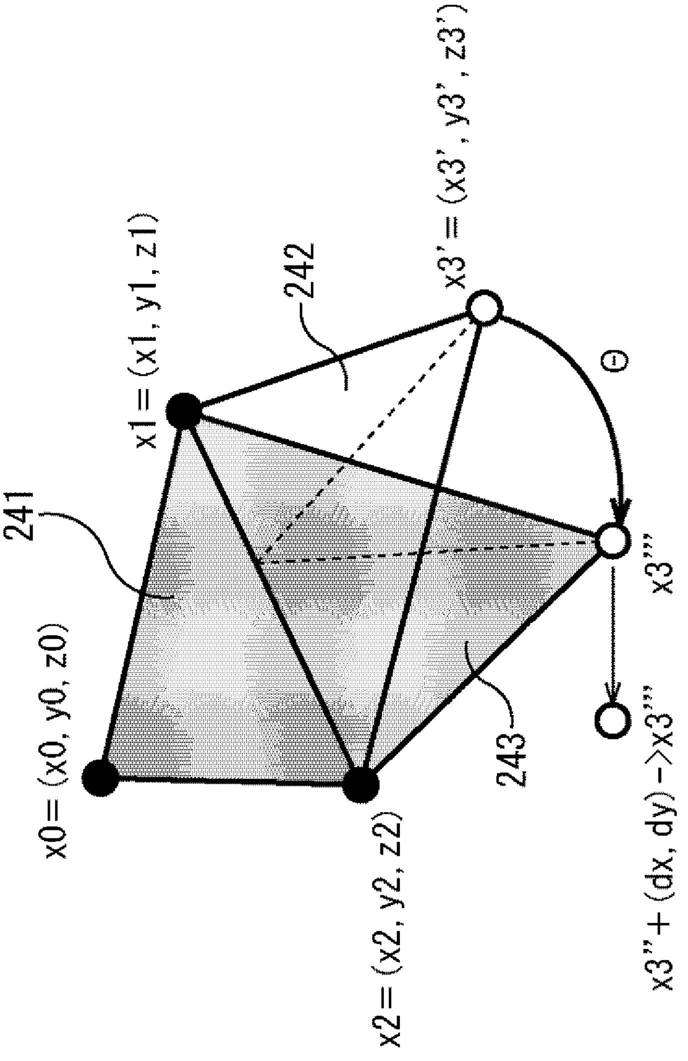
x0=(x0, y0, z0)
x1=(x1, y1, z1)
x2=(x2, y2, z2)
x3'=(x3', y3', z3')
241
242
243
θ
x3''
x3''+(dx, dy)->x3'''

FIG. 18

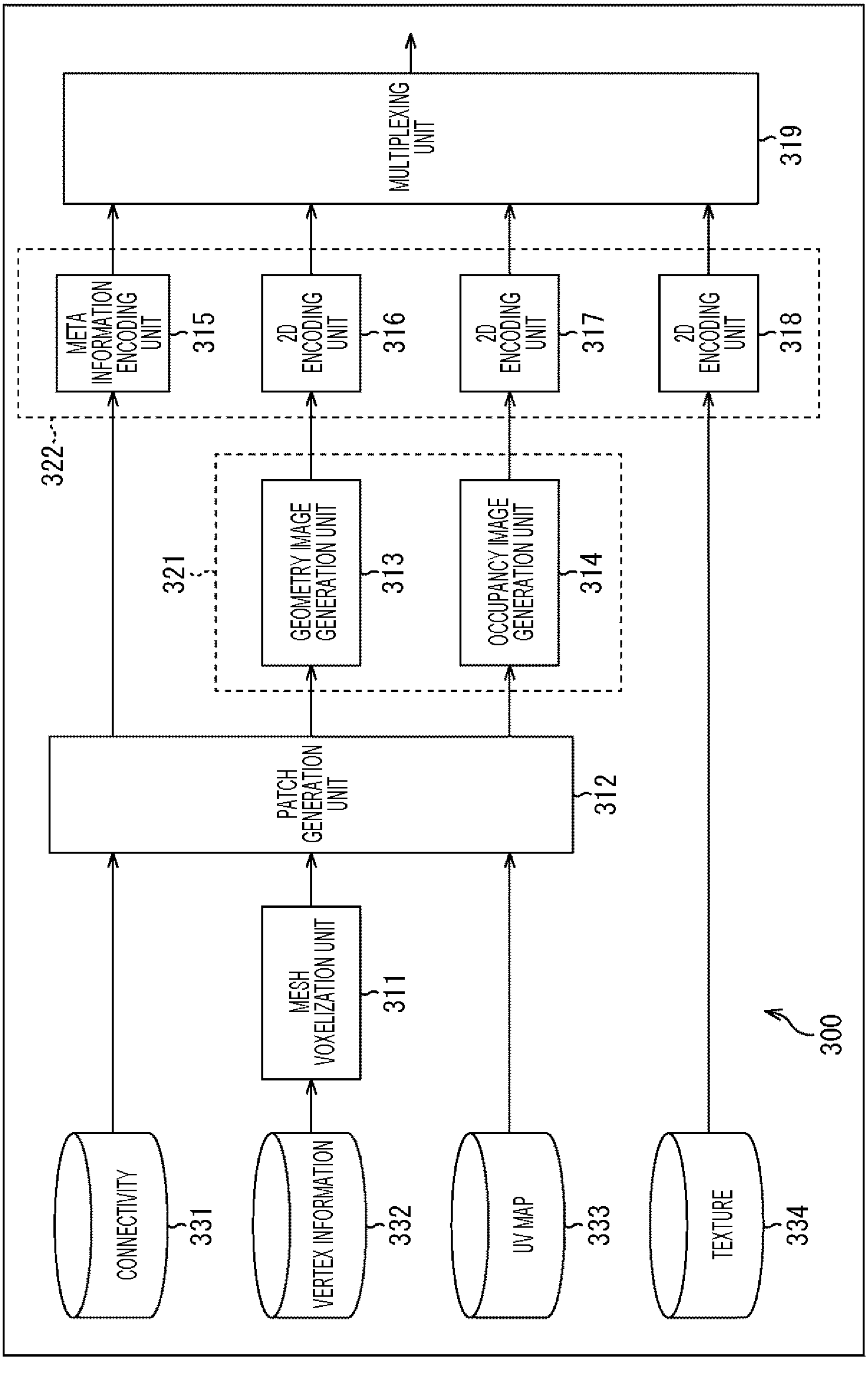
CONNECTIVITY
331
VERTEX INFORMATION
332
UV MAP
333
TEXTURE
334
MESH VOXELIZATION UNIT
311
PATCH GENERATION UNIT
312
GEOMETRY IMAGE GENERATION UNIT
313
OCCUPANCY IMAGE GENERATION UNIT
314
321
META INFORMATION ENCODING UNIT
315
2D ENCODING UNIT
316
2D ENCODING UNIT
317
2D ENCODING UNIT
318
322
MULTIPLEXING UNIT
319
300

FIG. 19

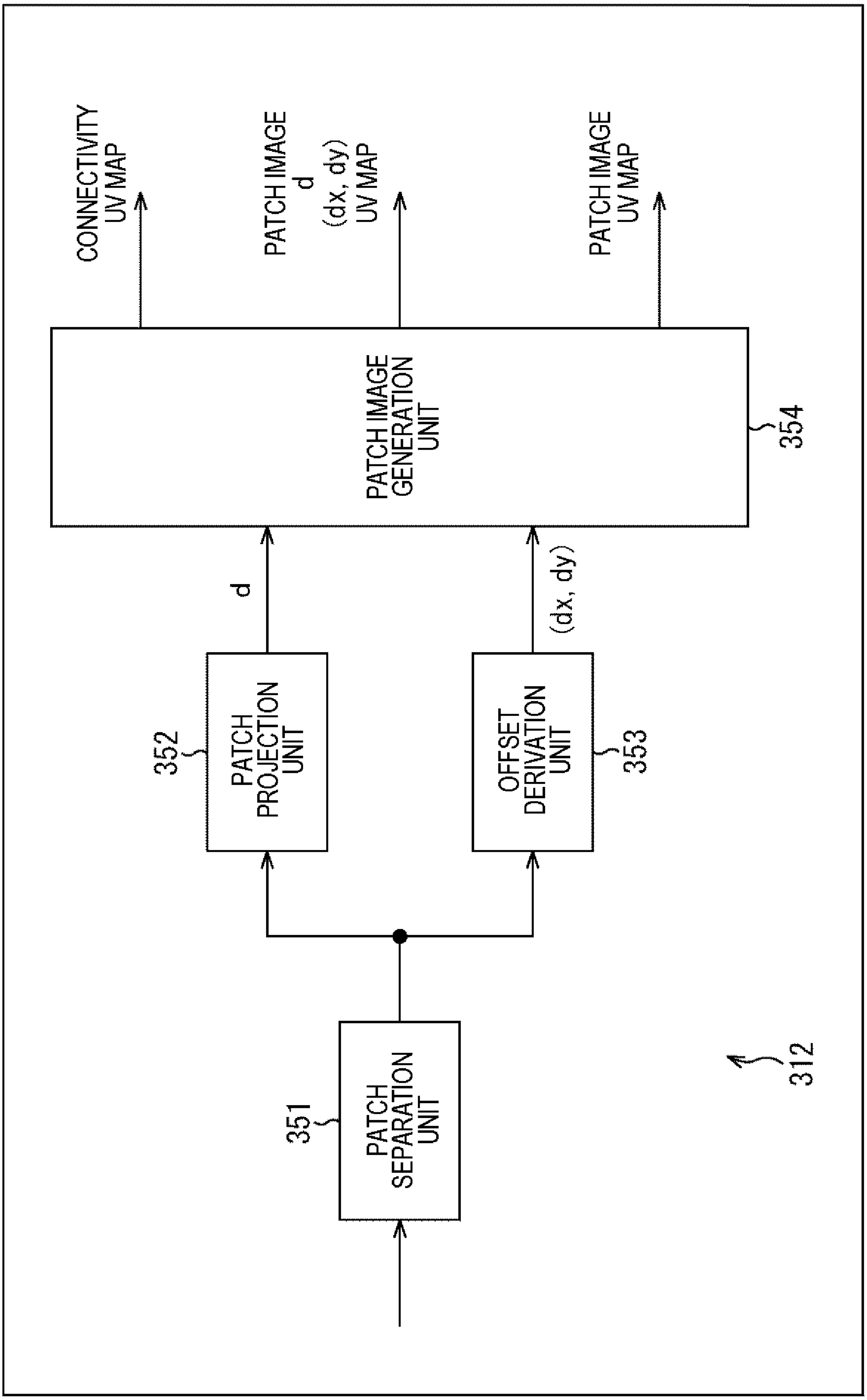
CONNECTIVITY
UV MAP
PATCH IMAGE
d
(dx, dy)
UV MAP
PATCH IMAGE
UV MAP
PATCH IMAGE GENERATION UNIT
354
d
(dx, dy)
PATCH PROJECTION UNIT
352
OFFSET DERIVATION UNIT
353
PATCH SEPARATION UNIT
351
312

FIG. 20

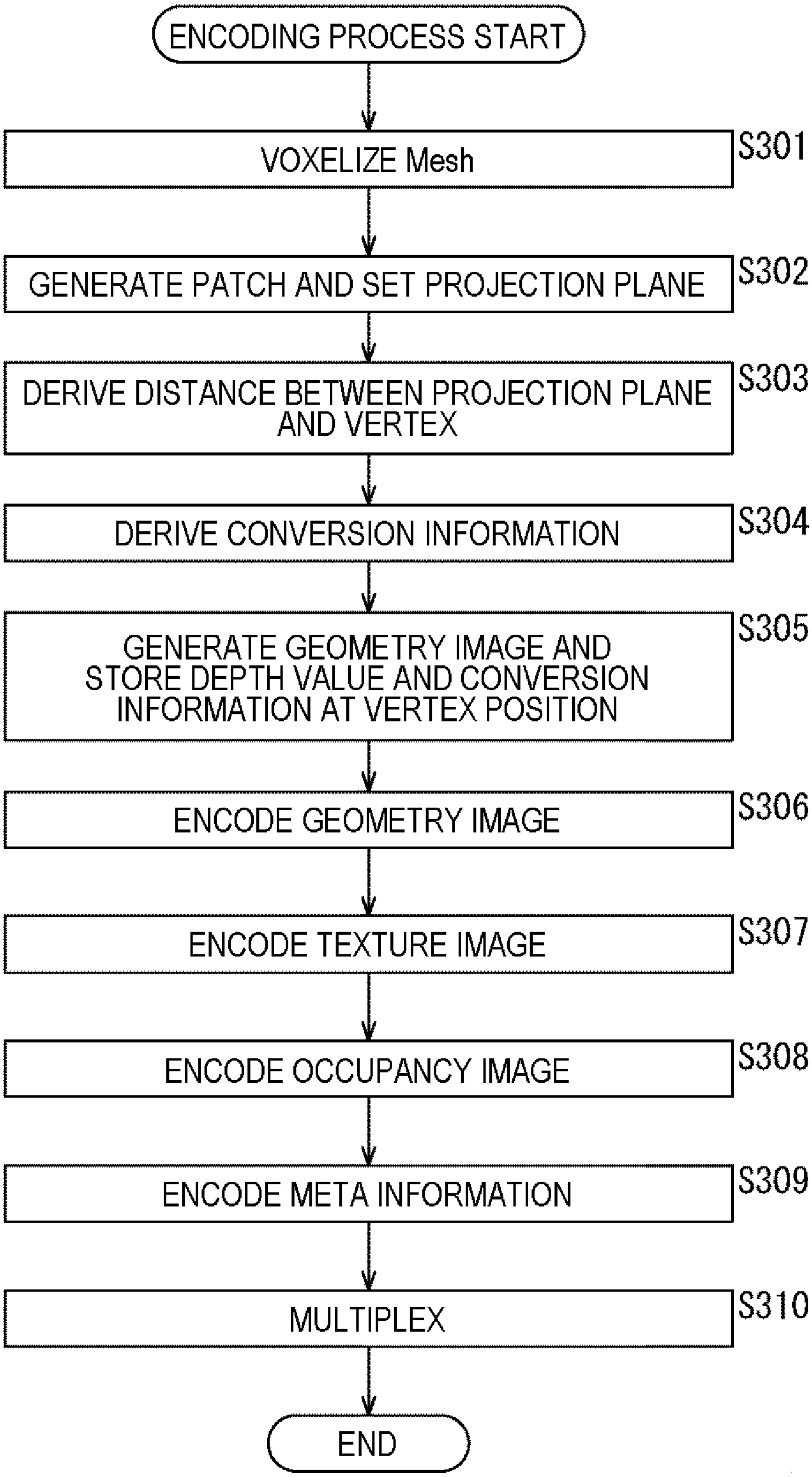
ENCODING PROCESS START
VOXELIZE Mesh
S301
GENERATE PATCH AND SET PROJECTION PLANE
S302
DERIVE DISTANCE BETWEEN PROJECTION PLANE AND VERTEX
S303
DERIVE CONVERSION INFORMATION
S304
GENERATE GEOMETRY IMAGE AND STORE DEPTH VALUE AND CONVERSION INFORMATION AT VERTEX POSITION
S305
ENCODE GEOMETRY IMAGE
S306
ENCODE TEXTURE IMAGE
S307
ENCODE OCCUPANCY IMAGE
S308
ENCODE META INFORMATION
S309
MULTIPLEX
S310
END

FIG. 21

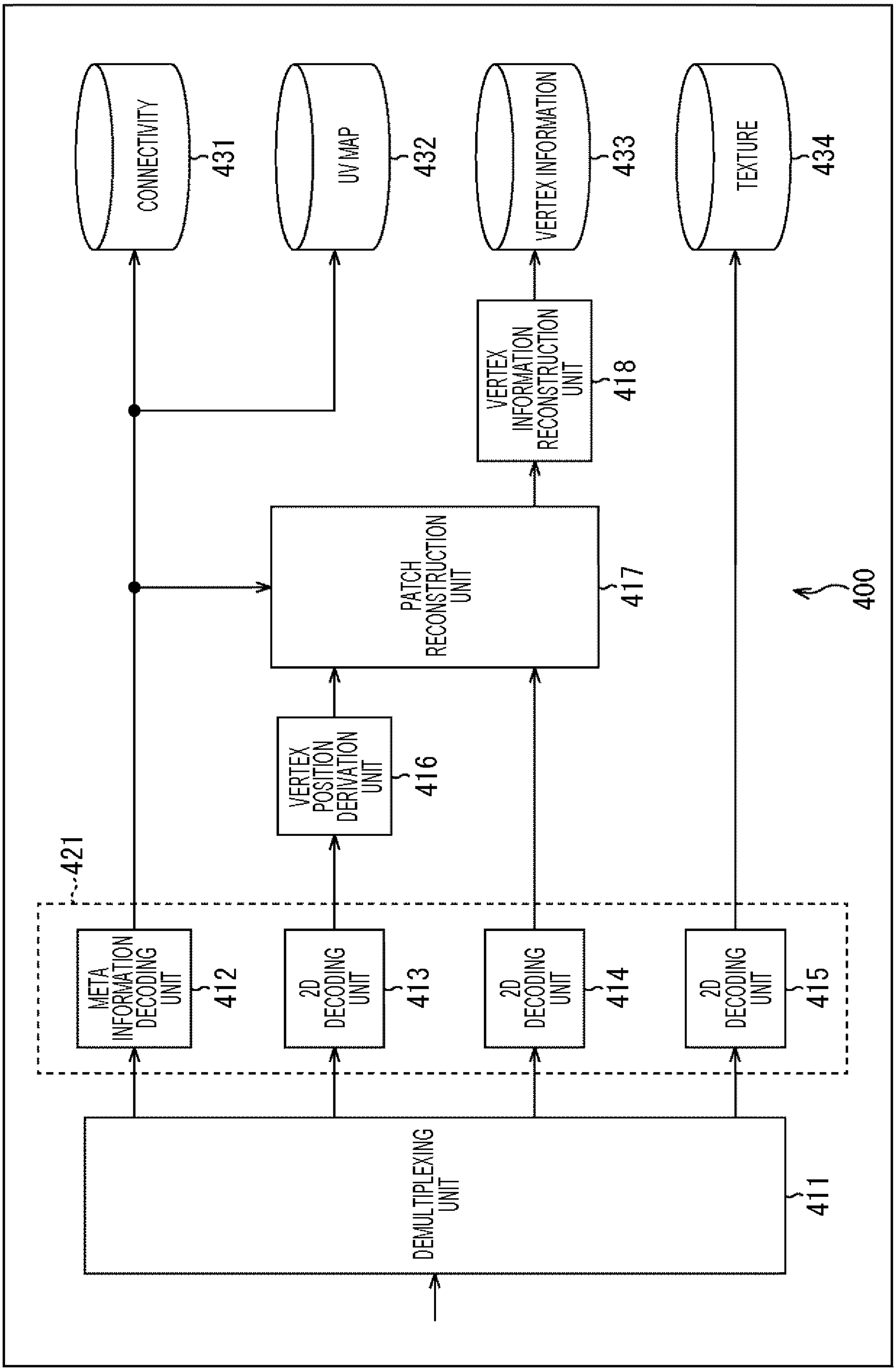
CONNECTIVITY
431
UV MAP
432
VERTEX INFORMATION
433
TEXTURE
434
VERTEX INFORMATION RECONSTRUCTION UNIT
418
PATCH RECONSTRUCTION UNIT
417
400
VERTEX POSITION DERIVATION UNIT
416
421
META INFORMATION DECODING UNIT
412
2D DECODING UNIT
413
2D DECODING UNIT
414
2D DECODING UNIT
415
DEMULTIPLEXING UNIT
411

FIG. 22

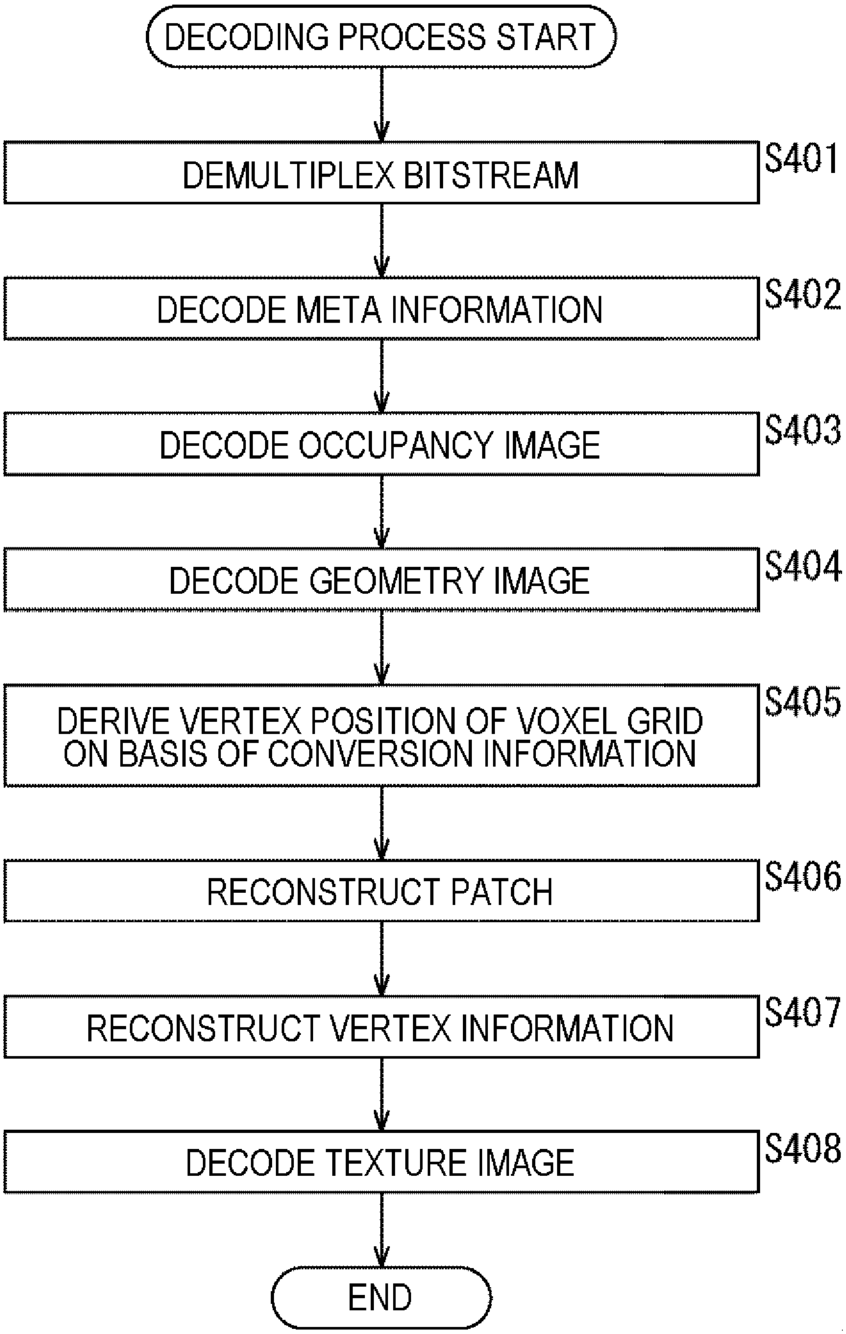
DECODING PROCESS START
DEMULTIPLEX BITSTREAM
S401
DECODE META INFORMATION
S402
DECODE OCCUPANCY IMAGE
S403
DECODE GEOMETRY IMAGE
S404
DERIVE VERTEX POSITION OF VOXEL GRID ON BASIS OF CONVERSION INFORMATION
S405
RECONSTRUCT PATCH
S406
RECONSTRUCT VERTEX INFORMATION
S407
DECODE TEXTURE IMAGE
S408
END

FIG. 23

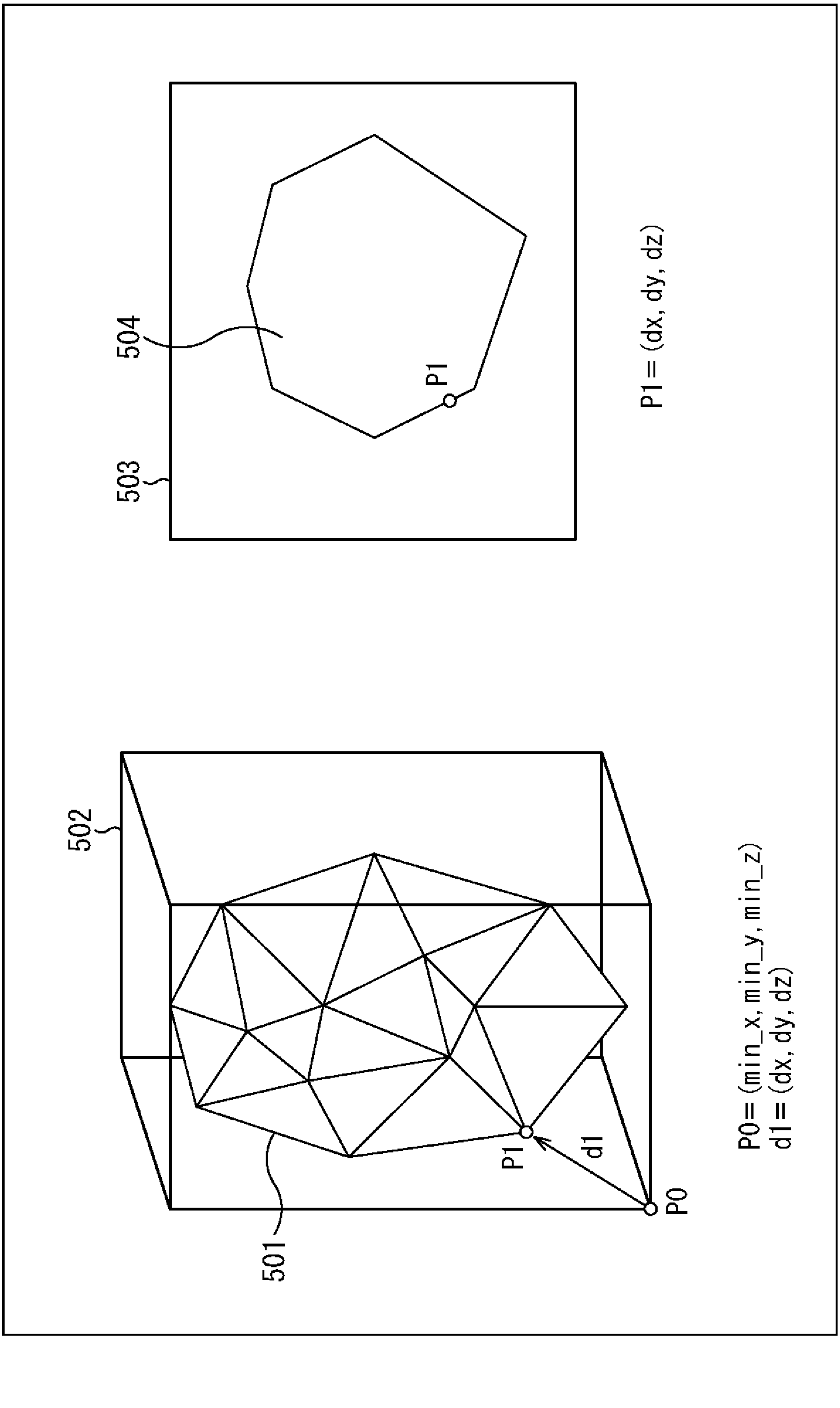
502
501
P0
P1
d1
P0=(min_x, min_y, min_z)
d1=(dx, dy, dz)
503
504
P1
P1=(dx, dy, dz)

FIG. 24

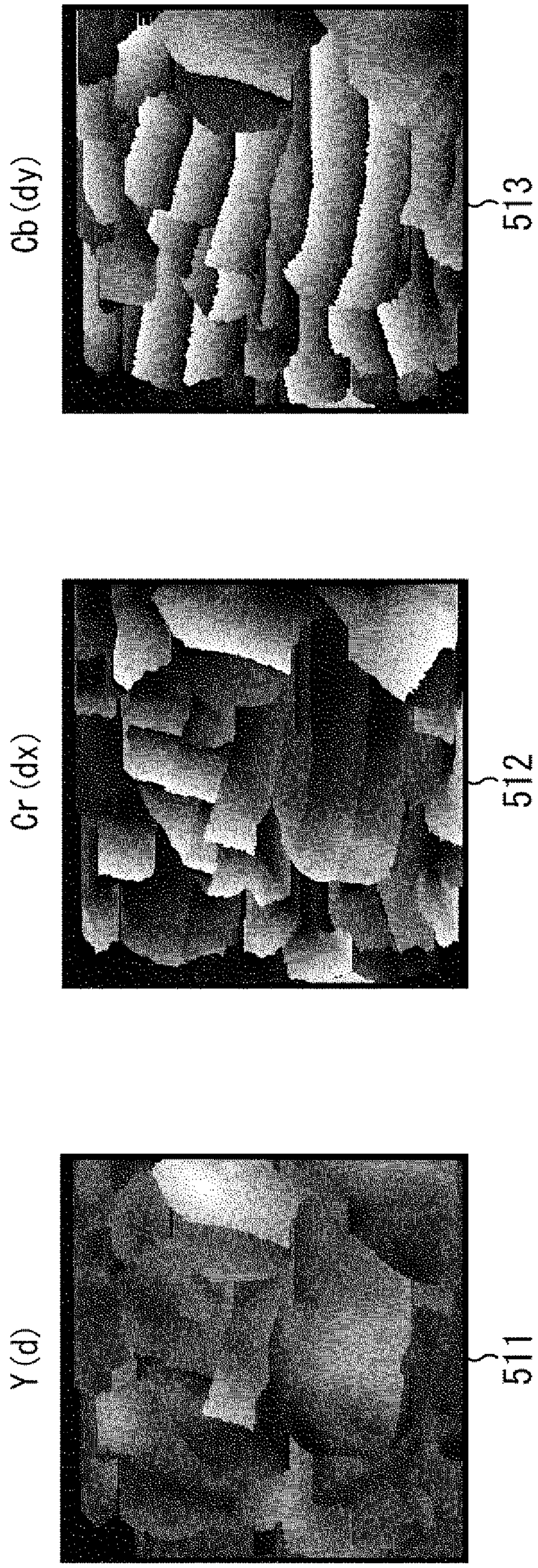

FIG. 25

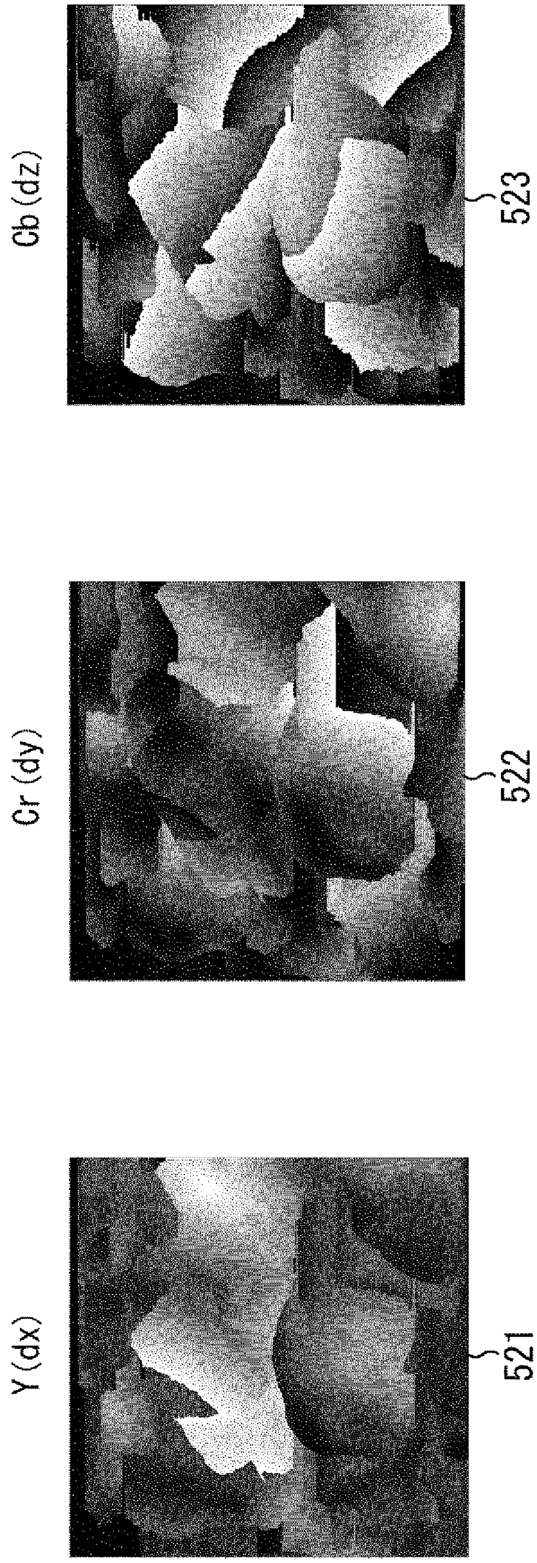

FIG. 26

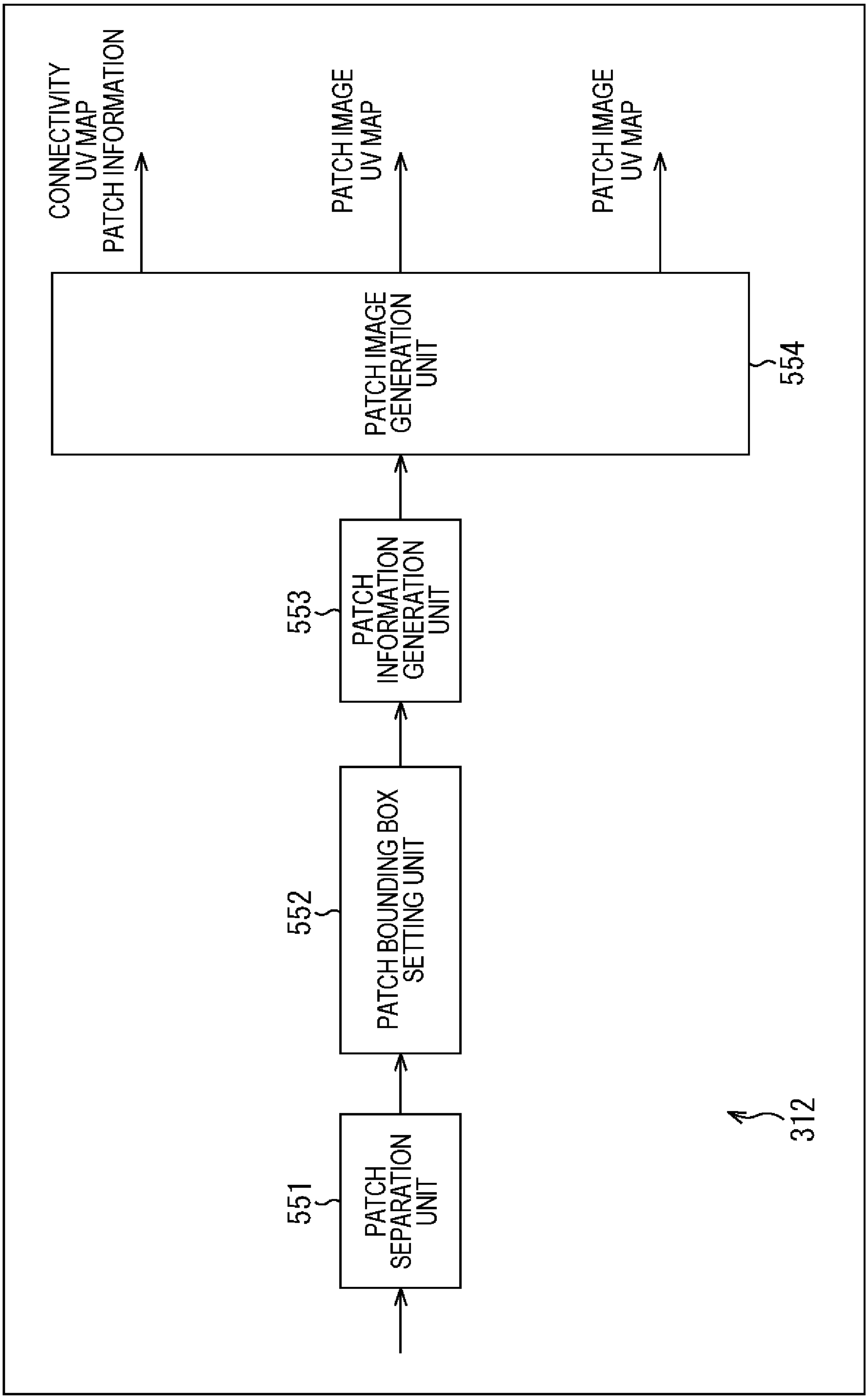
551
PATCH SEPARATION UNIT
552
PATCH BOUNDING BOX SETTING UNIT
553
PATCH INFORMATION GENERATION UNIT
554
PATCH IMAGE GENERATION UNIT
CONNECTIVITY
UV MAP
PATCH INFORMATION
PATCH IMAGE
UV MAP
PATCH IMAGE
UV MAP
312

FIG. 27

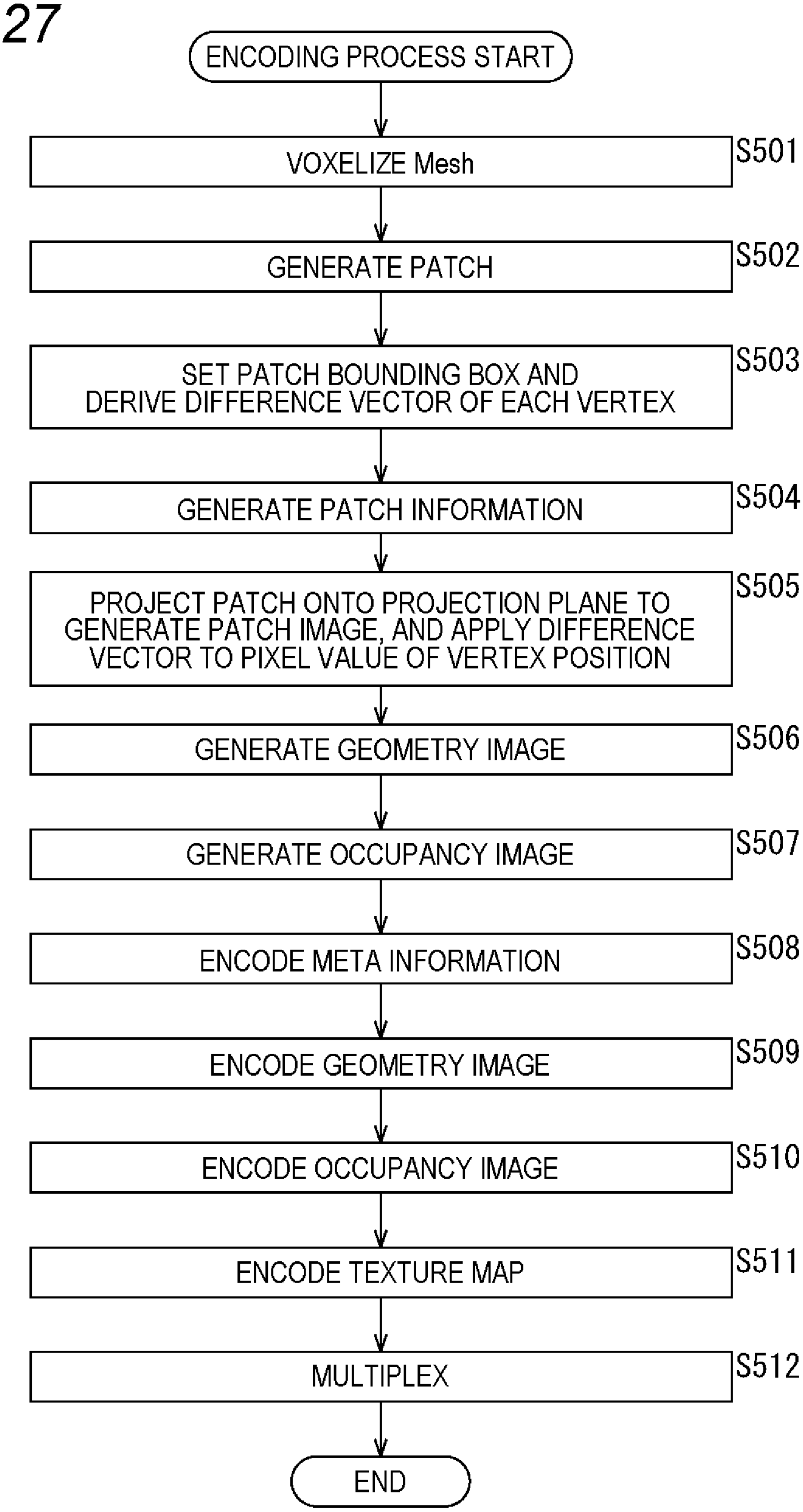
ENCODING PROCESS START
VOXELIZE Mesh
S501
GENERATE PATCH
S502
SET PATCH BOUNDING BOX AND DERIVE DIFFERENCE VECTOR OF EACH VERTEX
S503
GENERATE PATCH INFORMATION
S504
PROJECT PATCH ONTO PROJECTION PLANE TO GENERATE PATCH IMAGE, AND APPLY DIFFERENCE VECTOR TO PIXEL VALUE OF VERTEX POSITION
S505
GENERATE GEOMETRY IMAGE
S506
GENERATE OCCUPANCY IMAGE
S507
ENCODE META INFORMATION
S508
ENCODE GEOMETRY IMAGE
S509
ENCODE OCCUPANCY IMAGE
S510
ENCODE TEXTURE MAP
S511
MULTIPLEX
S512
END

FIG. 28

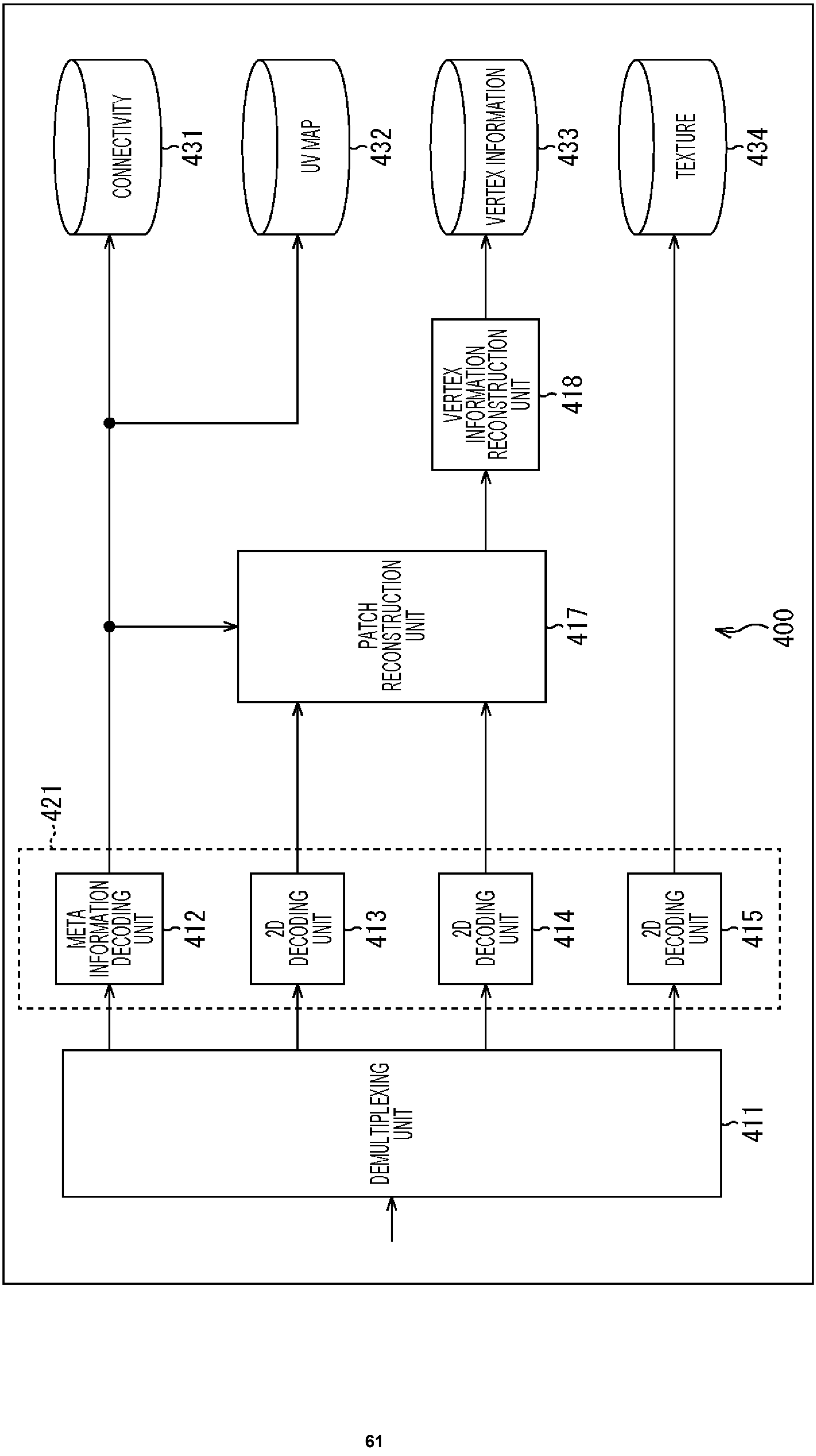
DEMULTIPLEXING UNIT
411
421
META INFORMATION DECODING UNIT
412
2D DECODING UNIT
413
2D DECODING UNIT
414
2D DECODING UNIT
415
PATCH RECONSTRUCTION UNIT
417
VERTEX INFORMATION RECONSTRUCTION UNIT
418
CONNECTIVITY
431
UV MAP
432
VERTEX INFORMATION
433
TEXTURE
434
400

FIG. 29

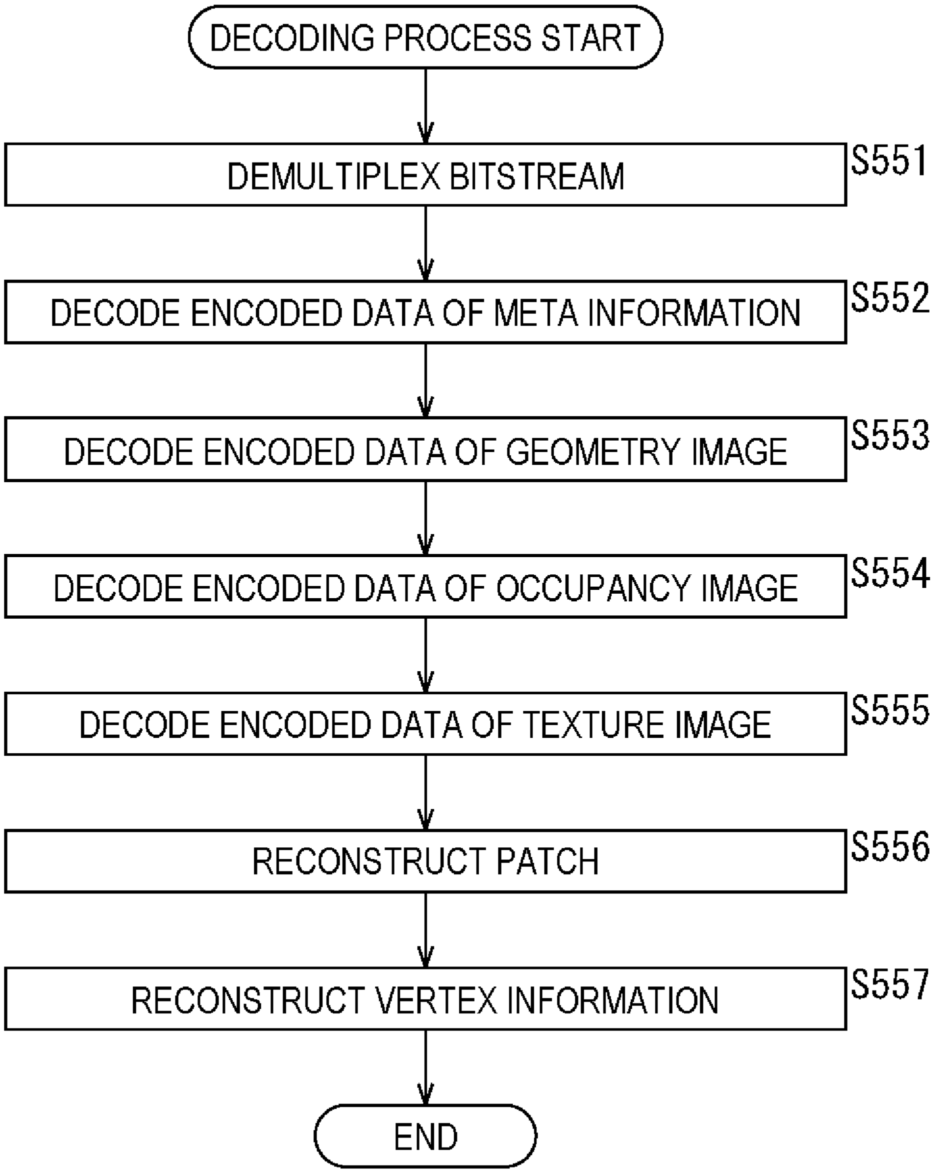
DECODING PROCESS START
DEMULTIPLEX BITSTREAM
S551
DECODE ENCODED DATA OF META INFORMATION
S552
DECODE ENCODED DATA OF GEOMETRY IMAGE
S553
DECODE ENCODED DATA OF OCCUPANCY IMAGE
S554
DECODE ENCODED DATA OF TEXTURE IMAGE
S555
RECONSTRUCT PATCH
S556
RECONSTRUCT VERTEX INFORMATION
S557
END

FIG. 30

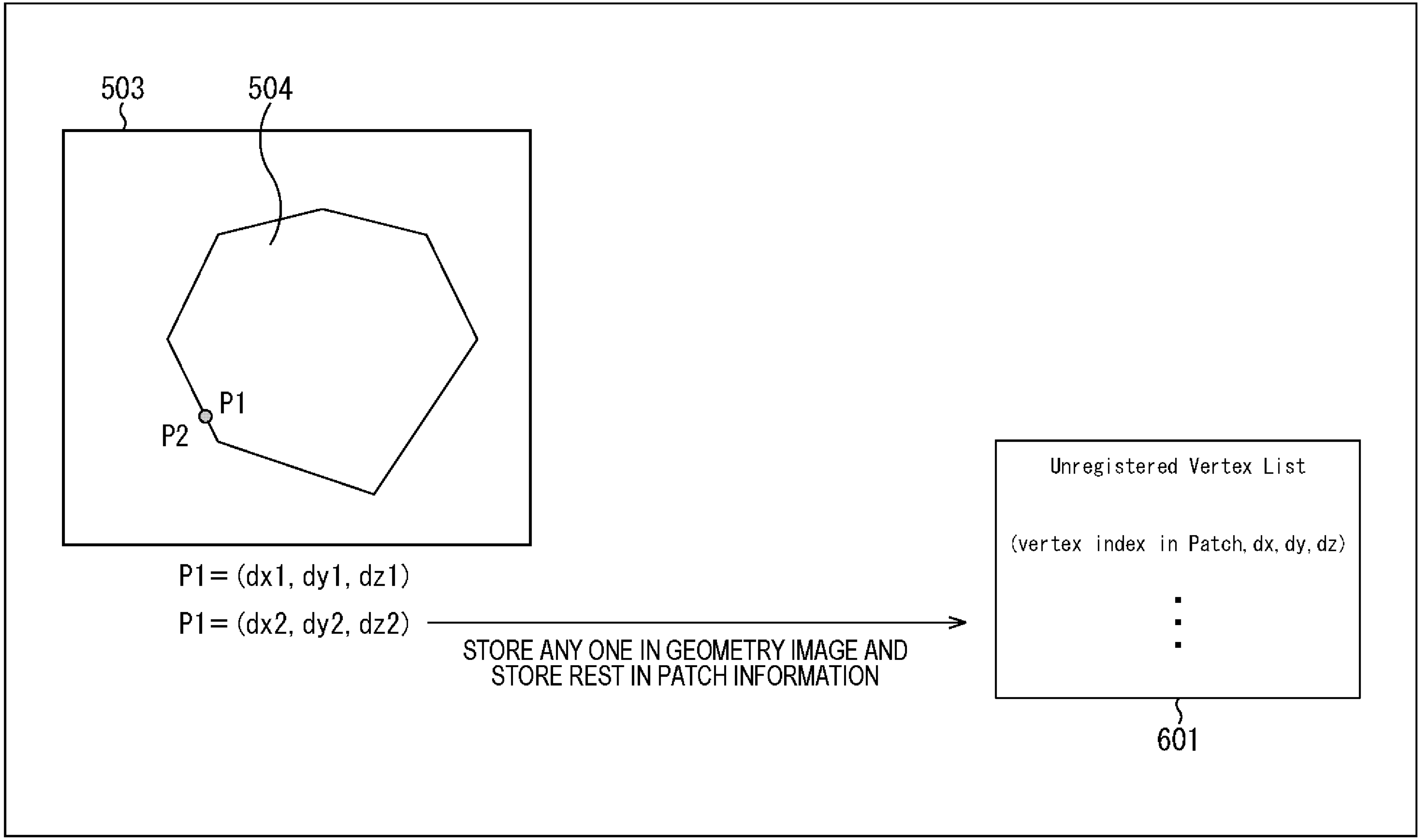
503
504
P1
P2
P1 = (dx1, dy1, dz1)
P1 = (dx2, dy2, dz2)
STORE ANY ONE IN GEOMETRY IMAGE AND
STORE REST IN PATCH INFORMATION
Unregistered Vertex List
(vertex index in Patch, dx, dy, dz)
601

FIG. 31

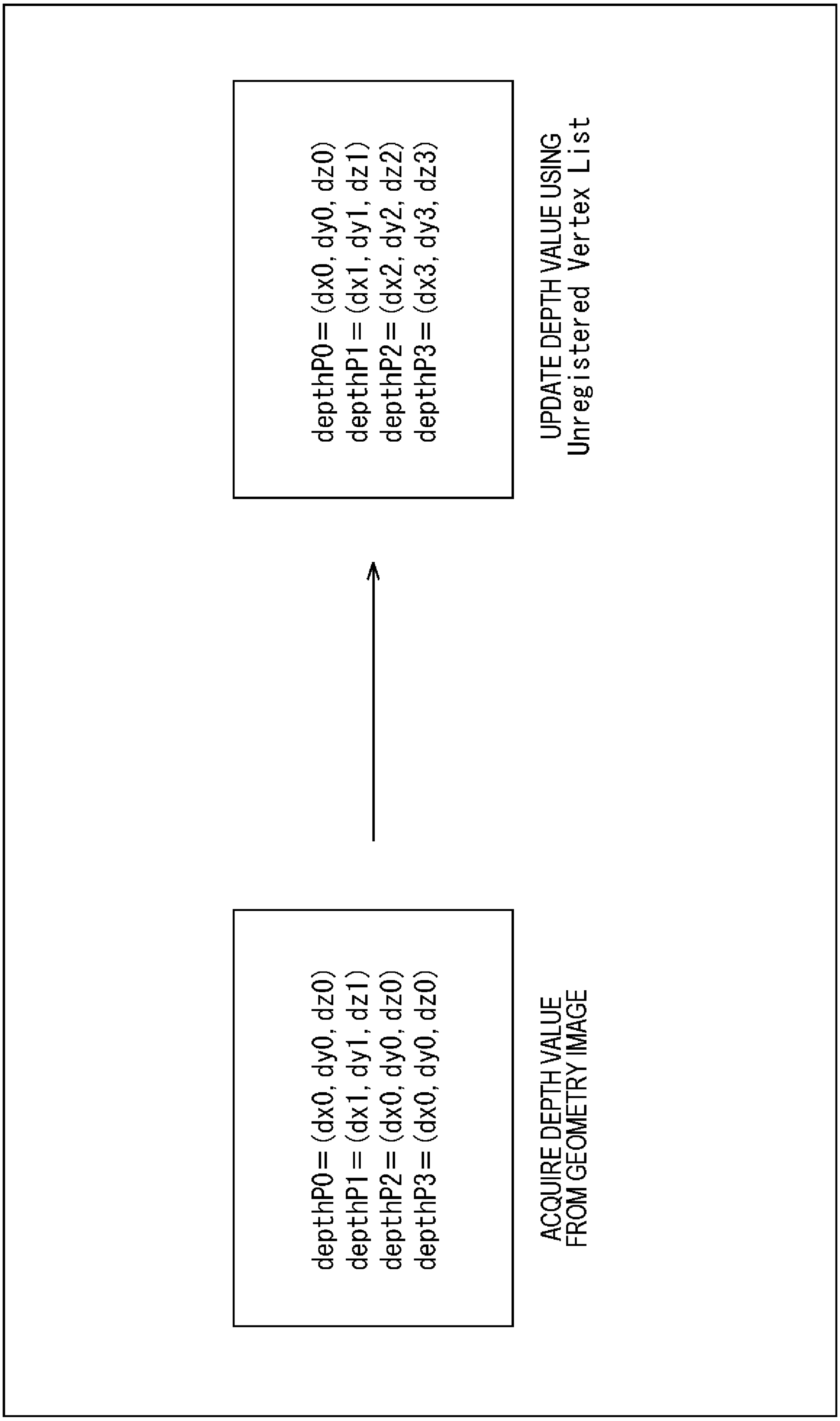
depthP0 = (dx0, dy0, dz0)
depthP1 = (dx1, dy1, dz1)
depthP2 = (dx0, dy0, dz0)
depthP3 = (dx0, dy0, dz0)
ACQUIRE DEPTH VALUE FROM GEOMETRY IMAGE
depthP0 = (dx0, dy0, dz0)
depthP1 = (dx1, dy1, dz1)
depthP2 = (dx2, dy2, dz2)
depthP3 = (dx3, dy3, dz3)
UPDATE DEPTH VALUE USING Unregistered Vertex List

*FIG. 32*

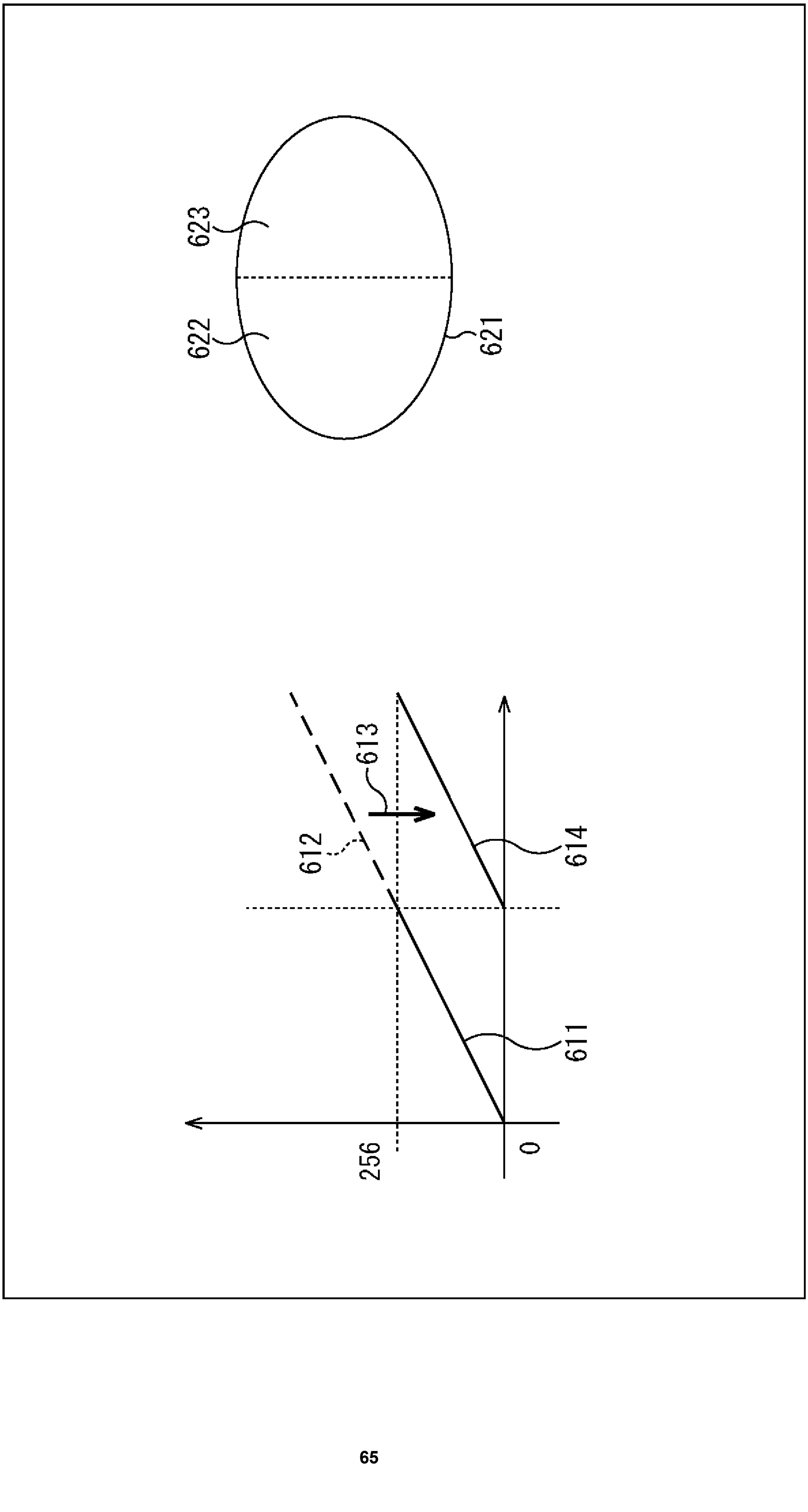

FIG. 33

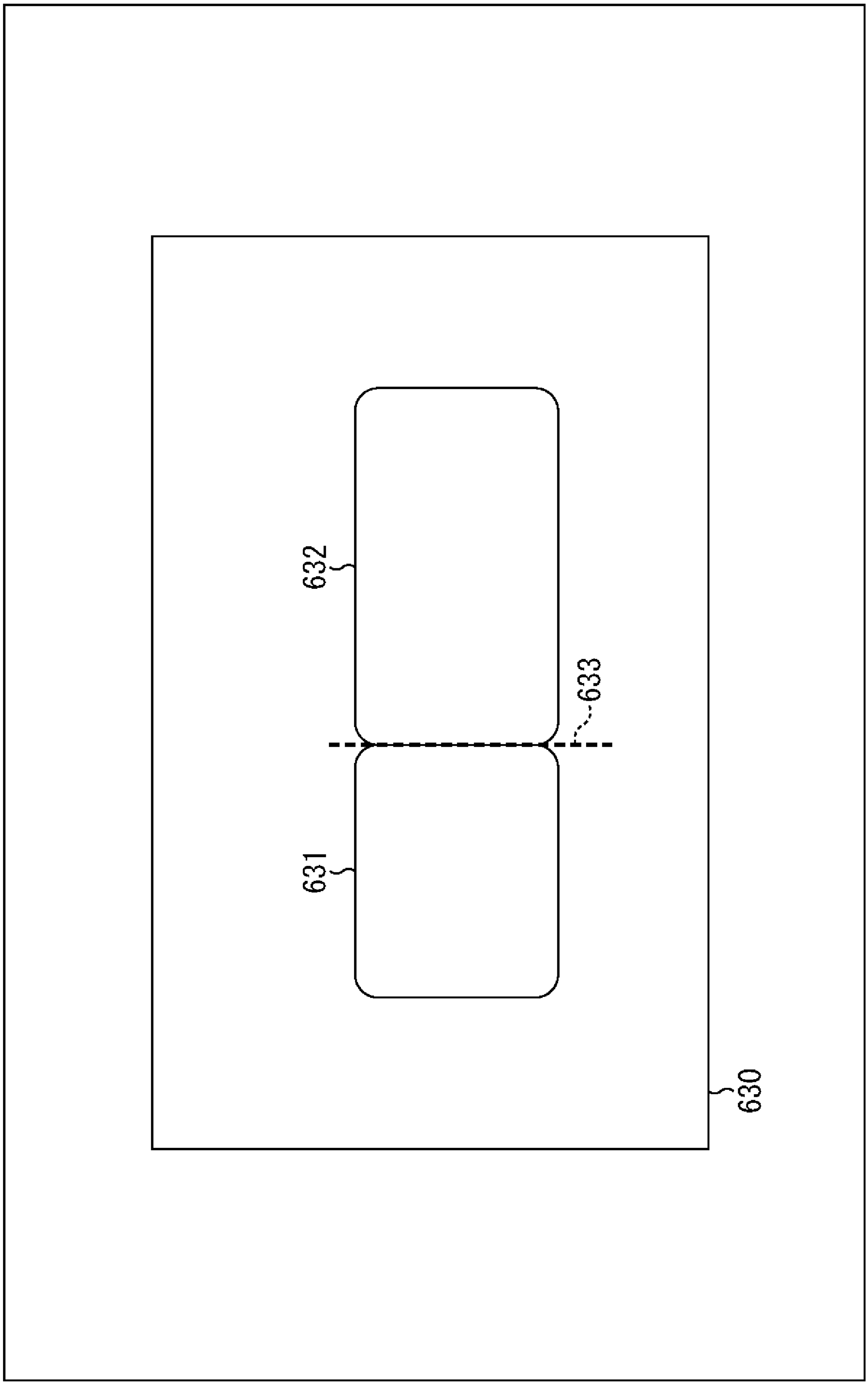

FIG. 34

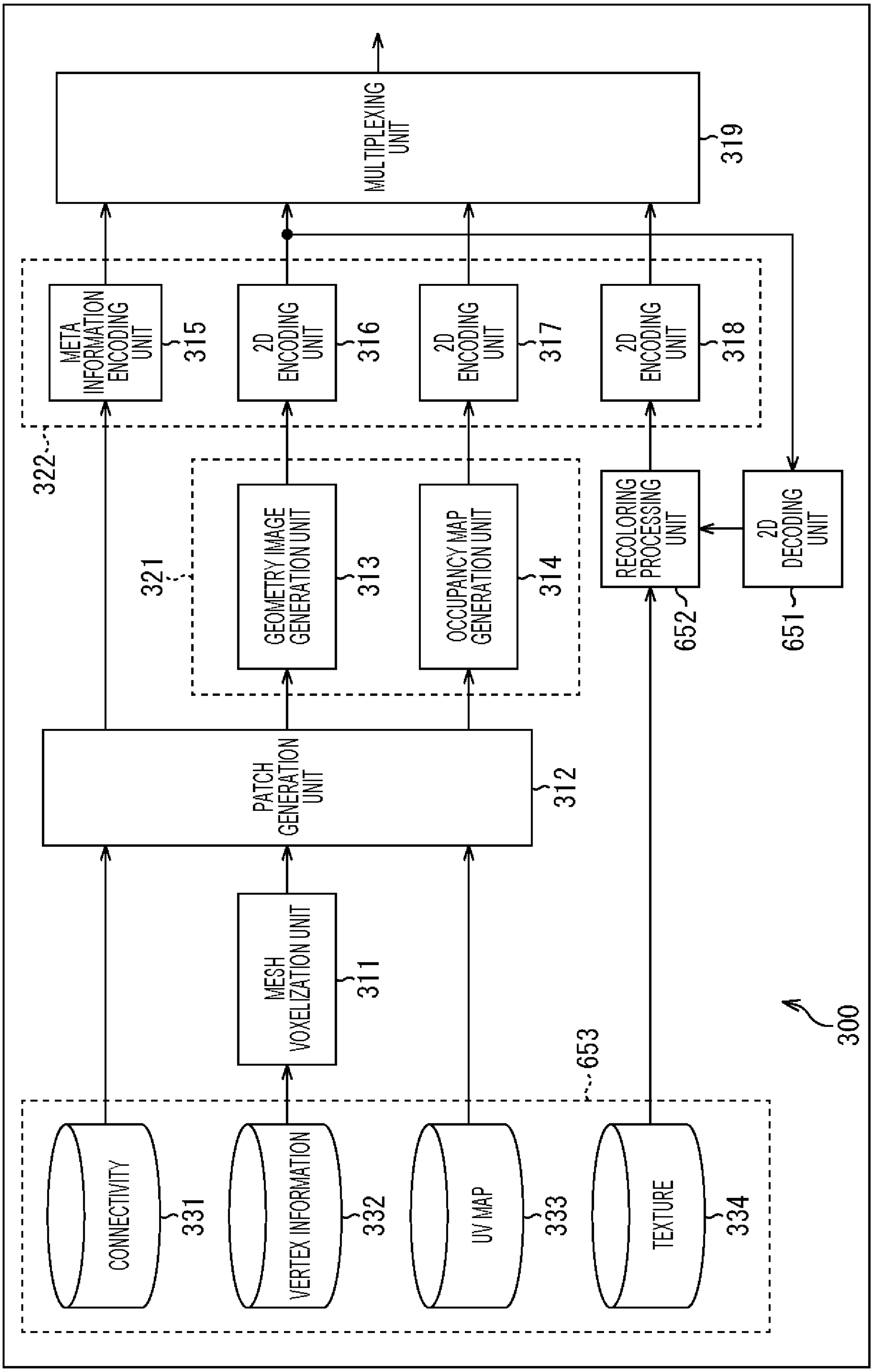
MULTIPLEXING UNIT
319
META INFORMATION ENCODING UNIT
315
2D ENCODING UNIT
316
2D ENCODING UNIT
317
2D ENCODING UNIT
318
322
321
GEOMETRY IMAGE GENERATION UNIT
313
OCCUPANCY MAP GENERATION UNIT
314
RECOLORING PROCESSING UNIT
652
2D DECODING UNIT
651
PATCH GENERATION UNIT
312
MESH VOXELIZATION UNIT
311
653
300
CONNECTIVITY
331
VERTEX INFORMATION
332
UV MAP
333
TEXTURE
334

FIG. 35

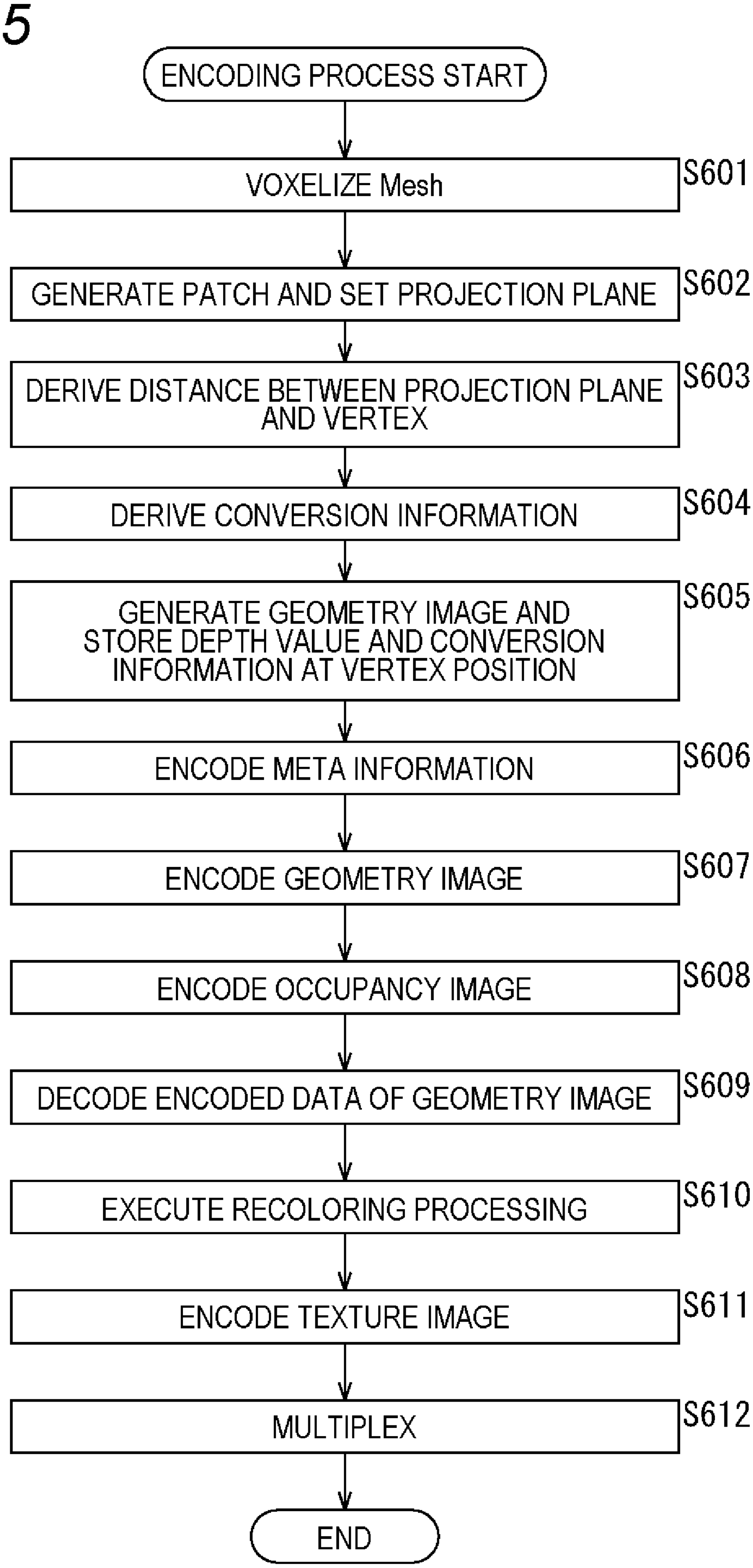
ENCODING PROCESS START
VOXELIZE Mesh
S601
GENERATE PATCH AND SET PROJECTION PLANE
S602
DERIVE DISTANCE BETWEEN PROJECTION PLANE AND VERTEX
S603
DERIVE CONVERSION INFORMATION
S604
GENERATE GEOMETRY IMAGE AND STORE DEPTH VALUE AND CONVERSION INFORMATION AT VERTEX POSITION
S605
ENCODE META INFORMATION
S606
ENCODE GEOMETRY IMAGE
S607
ENCODE OCCUPANCY IMAGE
S608
DECODE ENCODED DATA OF GEOMETRY IMAGE
S609
EXECUTE RECOLORING PROCESSING
S610
ENCODE TEXTURE IMAGE
S611
MULTIPLEX
S612
END

FIG. 36

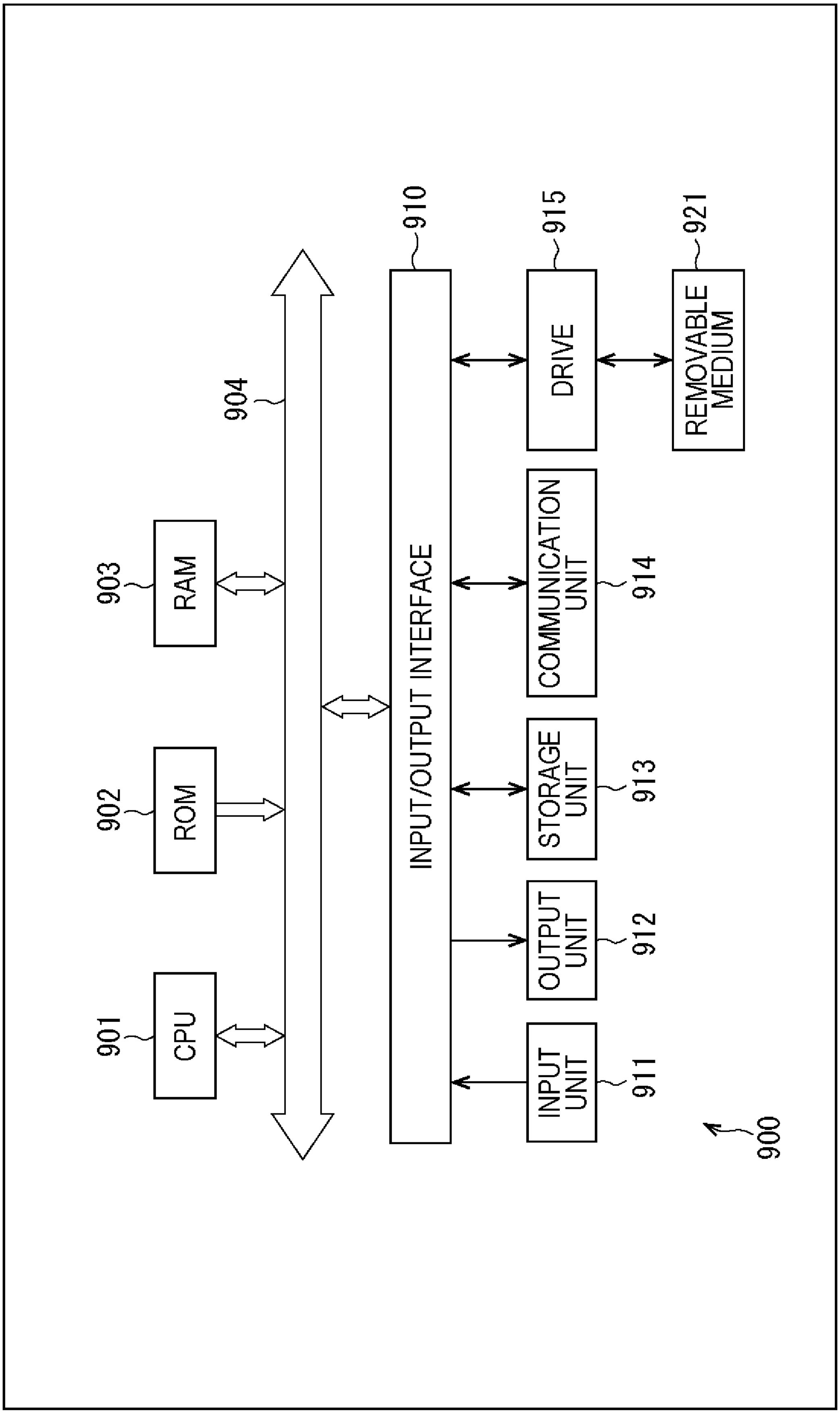

901
CPU
902
ROM
903
RAM
904
910
INPUT/OUTPUT INTERFACE
INPUT UNIT
911
OUTPUT UNIT
912
STORAGE UNIT
913
COMMUNICATION UNIT
914
DRIVE
915
REMOVABLE MEDIUM
921
900

## INTERNATIONAL SEARCH REPORT

International application No.
**PCT/JP2022/019103**

**A. CLASSIFICATION OF SUBJECT MATTER**

***H04N 19/85***(2014.01)i; ***H04N 19/597***(2014.01)i
FI: H04N19/85; H04N19/597

According to International Patent Classification (IPC) or to both national classification and IPC

**B. FIELDS SEARCHED**

Minimum documentation searched (classification system followed by classification symbols)

H04N19/85; H04N19/597

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

IEEE Xplore & KEYWORDS: V-PCC, point cloud, mesh, etc.

**C. DOCUMENTS CONSIDERED TO BE RELEVANT**

| Category* | Citation of document, with indication, where appropriate, of the relevant passages | Relevant to claim No. |
|---|---|---|
| A | SONY. [V-PCC][EE2.6 related] Sparse mesh generation with high resolution texture maps. INTERNATIONAL ORGANISATION FOR STANDARDISATION ORGANISATION INTERNATIONALE DE NORMALISATION ISO/IEC JTC 1/SC 29/WG 7 CODING OF MOVING PICTURES AND AUDIO. [m54262], 20 October 2020, pp. 1-8, <URL:https://mpeg-pcc.org/wp-contect/uploads/2020/07/m54262-v1-EE2.6_MeshGeneration.zip>: m54262.pdf<br>entire text, all drawings | 1-20 |
| A | GRAZIOSI, Danillo et al. [VPCC][EE2.6-related] Mesh Patch Data. INTERNATIONAL ORGANISATION FOR STANDARDISATION ORGANISATION INTERNATIONALE DE NORMALISATION ISO/IEC JTC 1/SC 29/WG 7 CODING OF MOVING PICTURES AND AUDIO. [m55368], 20 October 2020, pp. 1-14, <URL:https://mpeg-pcc.org/wp-content/uploads/2020/10/m55368-v1-m55368_V-PCCEE2.6-related-Mesh-Patch-Data.zip>: m55368_mesh_patch_data.docx<br>entire text, all drawings | 1-20 |
| A | KR 10-2020-0144401 A (SAMSUNG ELECTRONICS CO., LTD.) 29 December 2020 (2020-12-29)<br>entire text, all drawings | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 July 2022** | **19 July 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/019103**

| Patent document cited in search report | Publication date (day/month/year) | Patent family member(s) | Publication date (day/month/year) |
|---|---|---|---|
| KR 10-2020-0144401 A | 29 December 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **DANILLO GRAZIOSI ; ALEXANDRE ZAGHETTO ; ALI TABATABAI.** VPCC] [EE2.6-related] Mesh Patch Data. *ISO/IEC JTC 1/SC 29/WG 7 m 55368,* October 2020
- Information technology - Coded Representation of Immersive Media - Part 5: Video-based Point Cloud Compression. *ISO/IEC 23090-5:2019(E), ISO/IEC JTC 1/SC 29/WG 11 N18888*
- **TIM GOLLA ; REINHARD KLEIN.** Real-time Point Cloud Compression. IEEE, 2015
- **K. MAMMOU.** Video-based and Hierarchical Approaches Point Cloud Compression. *MPEG m41649,* October 2017
- **K. MAMMOU.** PCC Test Model Category 2 v0. *N17248 MPEG output document,* October 2017